# EUROPÄISCHE PATENTANMELDUNG

(11) **EP 2 226 732 A2**
(43) Veröffentlichungstag der Anmeldung: **08.09.2010**
(21) Anmeldenummer: 10004400.7
(22) Anmeldetag: 13.06.2001
(51) Int. Cl.: G06F 15/78, G06F 17/50, G06F 12/08

(54) **Cachehierarchie für einen Multicore-Prozessor**

(30) Priorität: 13.06.2000 DE 10028397; 05.03.2001 DE 10110530
(62) Teilanmeldung aus: 01984500.7
(71) Anmelder: Krass, Maren, 8044 Zürich (CH); Richter, Thomas, 04703 Bockelwitz (DE)
(72) Erfinder: Baumgarte, Volker, 80803 München (DE); May, Frank, 81927 München (DE); Vorbach, Martin, 67360 Lingenfeld (DE); Ehlers, Gerd, 85630 Grasbrunn (DE); Nückel, Armin, 63303 Dreieich (DE)
(74) Vertreter: Pietruk, Claus Peter

(57) **Zusammenfassung**

Die Erfindung betrifft eine Anordnung zur Datenverarbeitung, bevorzugt Mikroprozessoranordnung zur Datenverarbeitung, insbesondere bevorzugt Mikroprozessorchip zur Datenverarbeitung, mit einer Vielzahl von Prozessorkernen, und einem Cachesystem mit mehreren Leveln. Hierbei ist vorgesehen, dass ein dedizierter Cache jedem der Vielzahl von Prozessorkernen und/oder jedem einer Gruppe von Prozessorkernen bei einem ersten Cachelevel zugeordnet ist, wobei der erste Cachelevel zumindest einen Cache umfasst, der zumindest eine Cache des ersten Cachelevels mit zumindest einem Cache auf einem höheren Cachelevel verbunden ist; und der zumindest eine Cache auf dem höheren Cachelevel mit einem Speicher, bevorzugt einem Cache noch höheren Levels, verbunden ist.

## Beschreibung

Die vorliegende Erfindung befasst sich mit Verfahren, die eine effiziente Konfiguration und Rekonfiguration einer oder mehrerer rekonfigurierbarer Baugruppen durch jeweils eine oder mehrere Konfigurationseinheiten (CT) bei hohen Frequenzen ermöglicht. Dabei wird beschrieben, wie zur Steuerung mehrerer CTs eine effiziente und synchronisierte Vernetzung aufgebaut werden kann.

Der Begriff Baugruppe bzw. Zelle umfasst klassische FPGA-Zellen, Bussysteme, Speicher, Peripherie ebenso wie ALUs und Rechenwerke von Prozessoren. Hingewiesen wird in diesem Zusammenhang auf die Definitionen des gleichen Anmelders/Zessionärs. Insbesondere wird jede Art von konfigurierbaren und rekonfigurierbaren Elementen grundsätzlich als Baugruppe verstanden. Für Parallelrechnersystem kann eine Baugruppe als kompletter Knoten jedweder Funktion (insbesondere jedoch Rechen-, Speicher- und Datenübertragungsfunktionen) verstanden werden.

Das beschriebene Verfahren ist insbesondere für integrierte Bausteine mit einer Mehrzahl von ein- oder mehrdimensional angeordneten Baugruppen, die direkt oder durch ein Bussystem miteinander verbunden sind, anwendbar.

Zur Gattung der Bausteine zählen systolische Arrays, neuronale Netze, Mehrprozessor Systeme, Prozessoren mit mehreren Rechenwerken und logischen Zellen, ebenso wie bekannte Bausteine der Gattung FPGA, DPGA, XPUTER, etc.

In der nachfolgenden Beschreibung werden Bausteine einer Architektur verwendet, deren Rechenwerke und Bussysteme frei konfigurierbar sind. Die Architektur ist in DE4416881, sowie PACT02, PACT08, PACT10, PACT13 bereits veröffentlicht und wird im folgenden VPU genannt. Diese Architektur besteht aus beliebigen arithmetischen, logischen (auch Speicher) oder kommunikativen (IO) Zellen (PAEs), die zu einer ein- oder mehrdimensionalen Matrix (PA) angeordnet sein können, wobei die Matrix unterschiedliche beliebig ausgestaltete Zellen aufweisen kann, auch die Bussysteme werden dabei als Zellen verstanden. Der Matrix als ganzes oder Teilen davon zugeordnet ist eine Konfigurationseinheit (CT), die die Vernetzung und Funktion des PA beeinflusst.

Eine besondere Eigenschaft von VPUs ist die automatische und deadlockfreie Umkonfiguration zur Laufzeit. Dazu notwendige Protokolle und Verfahren sind aus PACT04,05,08,10,13 bekannt, die durch Bezugnahme vollumfänglich eingegliedert sind. Die Veröffentlichungsnummer zu diesen internen Aktenzeichen finden sich im Anhang.

### 1. Grundzustände von PAEs und Busprotokoll der Konfiguration

Jeder PAE sind Zustände zugeordnet, die die Konfigurierbarkeit beeinflussen. Ob diese Zustände lokal kodiert sind oder durch eine oder mehrere Schaltwerke verwaltet werden, insbesondere die CT selbst, ist dabei unerheblich. Eine PAE kennt mindestens zwei Zustände:
"not configured" In diesem Zustand ist die PAE inaktiv und verarbeitet keine Daten und/oder Trigger. Insbesondere nimmt sie keinerlei Daten und/oder Trigger entgegen und generiert auch keine Daten und/oder Trigger. Es können lediglich konfigurationsbezogene Daten und/oder Trigger aufgenommen und/oder verarbeitet werden. Die PAE ist vollkommen neutral und darf konfiguriert werden. Die Möglichkeit zur Initialisierung der Register für zu verarbeitende Daten und/oder Trigger insbesondere durch die CT in diesem Zustand sei aber hiermit erwähnt.
"configured" Die Funktion und Vernetzung der PAE ist konfiguriert. Die PAE verarbeitet und generiert zu verarbeitende Daten und/oder Trigger. Solche Zustände können auch mehrfach weitgehend unabhängig voneinander in eigenständigen Teilen einer PAE enthalten sein.

Sofern sich die hier relevante Trennung zwischen Daten und/oder Trigger für die Verarbeitung einerseits und Daten und/oder Trigger für die Konfiguration einer oder mehrere Zellen andererseits nachfolgend aus dem Zusammenhang ergibt wird sie nicht durchgehend explizit angeführt.

Die CT sendet bei der Konfiguration zusammen mit einem gültigen Konfigurationswort (KW) ein Signal, das die Gültigkeit anzeigt (RDY). Dies kann entfallen, wenn die Gültigkeit auf andere Weise sichergestellt ist, zum Beispiel bei kontinuierlichem Senden oder durch eine Kodierung im KW. Weiterhin ist im allgemeinen in einem KW die Adresse der zu konfigurierenden PAE kodiert.

Eine PAE entscheidet nach nachfolgend und in den unter Bezug genommenen Anmeldungen beschriebenen Kriterien, ob sie in der Lage ist, die KW anzunehmen und ihre Konfiguration zu verändern oder ob die Datenverarbeitung nicht durch eine neue Konfiguration unterbrochen oder verfälscht werden darf. In jedem Fall wird die Information, ob Konfigurationen angenommen werden oder nicht, an die CT weitergeleitet, falls die Entscheidung nicht schon dort stattfindet. Folgendes Protokoll wäre möglich: Sofern eine PAE die Konfiguration akzeptiert, sendet sie die Quittung ACK (acknowledge) an die CT. Sofern die Konfiguration abgelehnt wird, zeigt eine PAE dies durch Senden von REJ (reject) der CT an.

Innerhalb der datenverarbeitenden Elemente (PAEs) wird von diesem bzw. diesen entschieden, ob sie umkonfiguriert werden können, da die Datenverarbeitung beendet ist, oder ob sie noch Daten verarbeiten. Zudem werden durch unkonfigurierte PAEs keinerlei Daten verfälscht.

### 2. Deadlock-Freiheit und Korrektheit der Daten

### 2.1 FILMO-Prinzip

Wichtig ist nun die effiziente Verwaltung einer Vielzahl von Konfigurationen, die jeweils aus einem oder mehreren KW und eventuell weiteren Steuerbefehlen bestehen und überlappend auf das PA konfiguriert werden können. Dies liegt daran daß oftmals eine große Entfernung zwischen der CT und der bzw. den zu konfigurierenden Zellen besteht, was bei der Übertragung von Konfigurationen nachteilig ist. Gleichzeitig wird von der Technologie sichergestellt, dass durch eine Rekonfiguration keine Daten oder Zustände verfälscht werden. Dazu werden folgende Regeln definiert, die das FILMO-Prinzip genannt werden:
a) PAEs, die aktuell Daten verarbeiten, werden nicht umkonfiguriert. Eine Umkonfiguration soll erst stattfinden, wenn die Datenverarbeitung vollständig abgeschlossen ist oder sichergestellt ist, dass keine weitere Datenverarbeitung mehr erforderlich ist. (Erklärung: Das Umkonfigurieren von PAEs, die aktuell Daten verarbeiten oder auf noch ausstehende Daten warten, führt zur fehlerhaften Berechnung oder dem Verlust von Daten.)
b) Der Zustand einer PAE soll sich nicht während eines FILMO Durchlaufes von "konfiguriert" auf "unkonfiguriert" ändern. Nachfolgend wird zusätzlich zum Verfahren nach PACT10 ein besonderes zusätzliches Verfahren beschrieben, das Ausnahmen zulässt (Explizit/Implizit LOCK). Dies hat folgende Bewandtnis auf sich: Wenn eine SubConf verstanden wird als eine Menge von Konfigurationsworten, die zu gegebener Zeit bzw. zu gegebenem Zweck gemeinsam in das Zellarray hineinkonfiguriert werden sollen, kann eine Situation auftreten, wo zwei verschiedene SubConf (A, D)dieselben Ressourcen teilen sollen, insbesondere eine PAE X. SubConf A liegt z.B. zeitlich vor SubConf D. Somit muss SubConf A die Ressourcen vor SubConf D belegen. Wenn nun PAE X zum Konfigurationszeitpunkt von SubConf A noch "konfiguriert" ist, aber vor der Konfiguration von SubConf D den Zustand auf "unkonfiguriert" wechselt, kann ohne besondere Maßnahmen eine Deadlock Situation entstehen, wenn nämlich SubConf A die PAE X nicht mehr konfigurieren kann und SubConf D zB nur PAE x belegt, aber die restlichen Ressourcen, die bereits von SubConf A belegt sind nicht mehr konfigurieren kann. Weder SubConf A noch SubConf D können ausgeführt werden. Es entstünde ein Deadlock.

c) Eine SubConfsoll alle zu ihr gehörenden PAEs entweder erfolgreich konfiguriert oder alloziiert haben oder eine Zurückweisung (REJ) erhalten haben, bevor die nachfolgende SubConf konfiguriert wird. Dies gilt jedoch nur, wenn die beiden Konfigurationen ganz oder teilweise dieselben Ressourcen teilen. Gibt es keinen Ressourcenkonflikt, können beide SubConf unabhängig voneinander konfiguriert werden. Auch wenn bei einer SubConf PAEs die Konfiguration verweigerten (REJ), wird die Konfiguration der nachfolgenden SubConf durchgeführt. Da sich der Status von PAEs während eines FILMO Durchlaufes nicht ändert (LOCK, gemäß Abschnitt b)) ist sichergestellt, dass in der nachfolgenden Konfiguration keine PAEs konfiguriert werden, die die vorhergehende Konfiguration benötigt hätte. Erklärung: Würde eine spätere zu konfigurierende SubConf die PAEs einer zuvor zu konfigurierenden SubConf alloziiern, tritt ein Deadlock ein, da keine SubConf mehr vollständig konfiguriert werden kann.
d) Innerhalb einer SubConf kann es erforderlich sein, dass bestimmte PAEs in einer bestimmten Reihenfolge konfiguriert bzw. gestartet werden. Erklärung: Eine PAE darf beispielsweise erst auf einen Bus aufgeschaltet werden, nachdem der Bus auch für die SubConf konfiguriert ist. Eine Aufschaltung auf einen fremden Bus würde zur Verarbeitung falscher Daten führen.
e) Bei bestimmten Algorithmen muss die Reihenfolge der Konfiguration von SubConf gegebenenfalls exakt der Reihenfolge der bei der CT eingehenden Trigger entsprechen. Geht beispielsweise der Trigger, der die Konfiguration von SubConf 1 auslöst, vor dem Trigger, der die Konfiguration von SubConf 3 auslöst, ein, muss SubConf 1 vollständig konfiguriert sein, bevor SubConf 3 konfiguriert werden darf. Wird die Reihenfolge der Trigger vertauscht, kann dies, je nach Algorithmus zu einer fehlerhaften Abfolge der Teilgraphen (SubConf, vgl. PACT13) führen. Verfahren die weitgehend vielen oder allen der oben genannten Anforderungen genügen, sind aus PACT05 und PACT10 bekannt.

Die Verwaltung der Konfigurationen, ihr zeitliches Timing und die Anordnung und Ausbildung der zugehörigen Bauelemente, insbesondere der Konfigurationsregister usw. hat sich jedoch als für die beschriebene Technik fundamental herausgestellt und es sollen daher noch mögliche Verbesserungen des bekannten Standes der Technik erörtert werden.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Um bedarfsweise die Anforderungen e) sicherzustellen, wird vorgeschlagen, eingehende Trigger, die auf den Status einer SubConf bzw. einer Zelle und/oder einer Rekonfigurierbarkeit bezogen sind, mittels eines einfachen - insbesondere der CT zugeordneten - FIFOs in der korrekten Reihenfolge zu speichern. Jeder FIFO-Eintrag enthält die in einem Takt eingegangenen Trigger, wobei insbesondere alle in einem Takt eingegangenen Trigger gespeichert werden können. Treten keine Trigger auf, wird auch kein FIFO-Eintrag generiert. Die CT arbeitet den FIFO in der Reihenfolge der eingehenden Trigger ab. Enthält ein Eintrag mehrere Trigger, arbeitet die CT wahlweise entweder (i) priorisiert oder (ii) unpriorisiert zunächst jeden Trigger einzeln ab, bevor der nächste FIFO-Eintrag bearbeitet wird. Da ein Trigger gewöhnlicherweise nur einmal pro Konfigurationen an die CT gesendet wird, ist es für gewöhnlich ausreichend, die Maximaltiefe des FIFOs auf die Menge aller an die CT verdrahteten Triggerleitungen festzusetzen. Als alternatives Verfahren kann auch ein Time-Stamp-Protokoll entsprechend PACT18 angewendet werden.

Aus PACT10 sind zwei grundlegende FILMO-Arten bekannt:
**Separater FILMO:** Der FILMO ist als separater Speicher ausgeführt und vom normalen CT-Speicher, der die SubConf cached getrennt. Nur KWs die nicht in das PA konfiguriert werden konnten, werden in den FILMO kopiert.
**Integrierter FILMO:** Der FILMO ist im CT-Speicher integriert. KWs die nicht konfiguriert werden konnten werden mittels Flags und Pointern verwaltet.

Die nachfolgend beschriebenen erfindungsgemäßen Verfahren sind entweder auf beide FILMO-Arten oder eine bestimmte Art anwendbar.

### 2.2 Differentielle Rekonfiguration

Bei vielen Algorithmen ist es sinnvoll während des Betriebes aufgrund bestimmter Ereignisse, die durch Trigger oder zeitliche Abstimmung repräsentiert werden, die Konfiguration nur minimal zu ändern, ohne dass die Konfiguration der PAEs komplett gelöscht wird. In den meisten Fällen betrifft dies die Verschaltung der Bussysteme oder bestimmte Konstanten. Soll beispielsweise nur eine Konstante geändert werden, ist es sinnvoll, ein KW in die betreffende PAE schreiben zu können, ohne dass die PAE im Zustand "unkonfiguriert" ist. Dies vermindert die Menge an zu übertragenden Konfigurationsdaten und ist daher vorteilhaft. Erreicht werden kann dies mit einem Konfigurationsmodus "differentielle Rekonfiguration". Dabei enthält das KW beim Schreiben des KW kodiert oder explizit die Information DIFFERENTIAL. DIFFERENTIAL zeigt an, dass das KW an eine bereits konfigurierte PAE gesendet werden soll. Die Akzeptanz der differentiellen Konfiguration und die Quittierung ist genau umgekehrt zur normalen Konfiguration: Eine konfigurierte PAE nimmt das KW entgegen und sendet ein ACK. Eine unkonfigurierte PAE verweigert die Annahme des KW und sendet REJ, da Voraussetzung für DIFFERENTIAL eine konfigurierte PAE ist.

Es gibt nun verschiedene Möglichkeiten, die differentielle Rekonfiguration durchzuführen. Entweder es wird die differentielle Rekonfiguration ohne Rücksicht auf den tatsächlich z.B. in einer Zelle ablaufenden Datenverarbeitungs-Prozess erzwungen; dann ist es wünschenswert, eine exakte Synchronisation mit den Datenverarbeitungen zu gewährleisten, was durch entsprechende Gestaltung und Auslegung des Programms geschehen kann. Um den Programmierer von dieser Aufgabe zu entlasten, kann aber die differentielle Rekonfigurierbarkeit auch abhängig gemacht werden von anderen Ereignissen, beispielsweise dem Vorliegen eines bestimmten Zustandes in einer anderen oder der partiell umzukonfigurierenden Zelle. Eine besonders bevorzugte Variante ist daher, die Konfigurationsdaten, insbesondere differentiellen Konfigurationsdaten in oder bei der Zelle zu speichern, etwa in einem dedizierten Register und dann abhängig von einem bestimmten Zustand den Registerinhalt abzurufen bzw. in die Zelle einzulesen. Dies kann z.B. durch Umschalten eines Multiplexers geschehen.

Auch können die nachfolgend beschriebenen Methoden der Wave Rekonfiguration verwendet werden. Ebenfalls ist es gegebenenfalls sinnvoll, eine differentielle Konfiguration von dem Erfolg (ACK/REJ) einer zuvor normal durchgeführten Konfiguration abhängig zu machen. Mit anderen Worten wird die differentielle Konfiguration nur nach Eintreffen des ACKs für die vorhergehende nicht Differentiellen durchgeführt.

Eine besonders bevorzugte Variante der Synchronisation der differentiellen Konfiguration ist allgemein anwendbar und zwar unabhängig davon, wie viele unterschiedliche differentielle Konfigurationen tatsächlich benötigt werden. Dies wird ermöglicht, indem die differentielle Konfiguration nicht lokal vorgespeichert wird, sondern mit einer ersten Zelle auf das Erkennen eines bestimmten Zustandes, beispielsweise eines Dateneingabe-Endes oder dergl., ein Signal generiert wird, das die differentiell umzukonfigurierende Zelle anhält. Ein solches Signal kann ein STOP-Signal sein. Nach oder gleichzeitig mit dem Anhalten der Datenverarbeitung in der differentiell umzukonfigurierenden Zelle wird ein Signal an die CT gesendet, das zum differentiellen Umkonfigurieren der angehalten Zelle auffordert. Dieses Aufforderungssignal zum differentiellen Umkofigurieren kann insbesondere von jener Zelle erzeugt und gesendet werden, welche auch das STOP_Signal generiert. Die CT wird dann die zur differentiellen Rekonfigurierung erforderlichen Daten an die angehaltene Zelle senden und so die differentielle Rekonfigurierung bewirken. Nach der differentiellen Rekonfigurierung wird der STOP_Modus aufgehoben; dies kann insbesondere durch die CT veranlasst werden. Es sei darauf hingewiesen, dass bei dem Verfahren der differentiellen Rekonfigurierung auch Cache-Techniken einsetzbar sind.

### 3. Aufgabe der Trigger

In VPU Bausteinen werden zur Übertragung einfacher Informationen wie nachfolgend beispielhaft aufgelistet bevorzugt sogenannte Trigger verwendet. Trigger werden mittels eines beliebigen insbesondere konfigurierbaren Bussystems (Netzwerk) übertragen. Quelle und Ziel eines Triggers sind programmierbar.

Eine Vielzahl von Triggern kann innerhalb eines Bausteins gleichzeitig übertragen werden. In besonderen Ausgestaltungen ist außer der direkten Übertragung von einer Quelle zu einem Ziel auch die Übertragung einer Quelle an mehrere Ziele oder mehrerer Quellen an ein Ziel möglich.

Trigger übertragen vor allem, jedoch nicht ausschließlich
* Statusinformationen von Rechenwerken (ALUs) wie
- Carry
- Division by Zero
- Zero
- Negativ
- Under-/Overflow
   * Ergebnisse von Vergleichen
   * n-bit Informationen (für kleine n)
   * Interruptanforderungen, die intern oder extern generiert werden
   * Blockier- und Freigabeaufträge
   * Anforderungen von Konfigurationen

Trigger werden von beliebigen Zellen generiert und werden durch beliebige Ereignisse in den einzelnen Zellen ausgelöst. Beispielsweise kann das Status- und/oder Flagregister von ALUs oder Prozessoren nach dem Stand der Technik zur Generierung von Triggern verwendet werden. Auch können Trigger von einer CT und/oder einer externen Einheit, die außerhalb des Zellarrays oder des Bausteines angeordnet ist, generiert werden. Trigger werden von beliebigen Zellen empfangen und auf beliebige Art ausgewertet. Insbesondere können Trigger von einer CT oder einer externen Einheit, die außerhalb des Zellarrays oder des Bausteines angeordnet ist, ausgewertet werden.

Ein wesentlicher Einsatzbereich von Triggern ist das Synchronisieren und Ansteuern von bedingten Ausführungen und/oder Ablaufsteuerungen im Array, die z.B. durch Sequenzer realisierbar sind, sowie deren Informationsaustausch.

### 3.1 Semantik von Triggern

Trigger werden beispielsweise für folgende Aktionen innerhalb von PAEs verwendet:
**STEP:** Ausführen einer Operation innerhalb einer PAE bei Eintreffen des Triggers.
**GO:** Ausführen von Operationen innerhalb einer PAE bei Eintreffen des Triggers. Die Ausführung wird durch STOP angehalten. **STOP:** Stoppen der mit GO gestarteten Ausführung; vgl. hierzu auch die vorstehenden Ausführungen zum STOP-Signal
**LOCAL RESET:** Stoppen der Ausführung und Übergang vom Status "allocated" oder "configured" in den Status "not configured". **WAVE:** Anhalten der Ausführung von Operationen und Laden einer von der CT zu ladenden sog. Wave-Rekonfiguration.

Bei einer WAVE-Rekonfiguaration soll eine oder mehrere PAEs nachfolgend zum Durchlaufen des Endes eines Datenpaketes rekonfiguriert werden. Es soll dann bevorzugt direkt und unmittelbar nach der Rekonfiguration, die auch als differentielle Rekonfiguration erfolgen kann, die Verarbeitung eines weiteren Datenpaketes erfolgen. Beispielsweise soll ein erstes Audiodatenpaket mit ersten Filterkoeffizienten verarbeitet werden; nach Durchlaufen des ersten Audiodatenpaketes soll eine partielle Rekonfigurierung erfolgen und es soll dann mit einem zweiten Filterkoeffizientensatz ein unterschiedliches Audiodatenpaket verarbeite werden. Dazu können die neuen Rekonfigurationsdaten, z.B. die zweiten Filterkoeffizienten, in oder bei der Zelle abgelegt werden und auf das Erkennen des Endes des ersten Datenpaketes die Umkonfigurierung automatisch veranlasst werden, ohne dass hierfür z.B. noch das weitere Eingreifen einer CT oder anderen externen Steuereinheit erforderlich sein muss. Das Erkennen des Endes des ersten Datenpaketes bzw. des Zeitpunktes. an dem die Rekonfiguration durchgeführt werden soll, kann durch das Generieren eines Wave-Rekonfigurations-Triggers geschehen. Dieser kann z.B. in einer jeweils ein Datenende erkennenden Zelle erzeugt werden; eine Umkonfigurierung läuft dann mit dem Trigger von Zelle zu Zelle, sobald diese die Verarbeitung des ersten Datenpaketes jeweils abgeschlossen haben, vergleichbar dem Durchlaufen einer LA OLA durch ein Fußballstadium. Dazu kann eine einzelne Zelle den Trigger generieren und z.B. an eine erste Zelle senden, um ihr anzuzeigen, dass das Ende eines ersten Paketes durchläuft. Diese von der Wave-Triggergenerierzelle angesprochene erste umzukonfigurierende Zelle reicht insbesondere zeitgleich mit den aus den letzten Daten des ersten Paketes hergeleiteten Ergebnissen, die an eine oder mehrere nachfolgend verarbeitende Zellen gesendet werden, an diese nachfolgend verarbeitenden Zellen auch das Wave-Triggersignal weiter. Das Wavetriggersignal kann dabei zudem insbesondere auch an solche Zellen gesendet bzw. weitergeleitet werden, die derzeit nicht mit der Verarbeitung des ersten Datenpaketes befasst sind und/oder keine aus den letzten Daten hergeleiteten Ergebnisse erhalten. Dann wird die erste von der Wave-Triggersignalgenerierenden Zelle angesprochene umzukonfigurierende Zelle umkonfiguriert und nimmt die Verarbeitung der Daten des zweiten Datenpaketes auf; während dieser Zeit sind nachfolgende Zellen noch beschäftigt mit der Bearbeitung des ersten Datenpaketes. Es sei erwähnt, dass die Wave-rRiggersignalgenerierende Zelle nicht nur eine einzelne Zelle ansprechen kann, sondern mehrere umzukonfiguriernde Zellen. So kann sich eine lawinenartige Fortpflanzung der Wave-Konfiguration ergeben.

Sobald die Wave-Rekonfiguration vollständig konfiguriert ist, wird die Datenverarbeitung fortgesetzt. Bei WAVE kann selektiert werden, ob sofort nach vollständiger Konfiguration die Datenverarbeitung fortgesetzt wird, oder auf das Eintreffen eines STEP oder GO gewartet wird.

**SELECT:** Selektiert einen Eingangs-Bus zur Weiterleitung an den Ausgang. Beispiel: Entweder der Bus A oder B soll auf einen Ausgang geschaltet werden. Durch SELECT wird die Stellung des Multiplexers und damit die Auswahl des Busses gewählt.

Trigger werden beispielsweise für folgende Aktionen innerhalb von CTs verwendet:
**CONFIG:** Eine Konfiguration soll durch die CT in das PA konfiguriert werden.
**PRELOAD:** Eine Konfiguration soll von der CT in deren lokalen Speicher vorgeladen werden. Dadurch muss die Konfiguration nicht erst bei Eintreffen von CONFIG geladen werden. Es entsteht ein der Effekt eines vorhersagbaren cachings.
**CLEAR:** Eine Konfiguration soll von der CT aus deren Speicher gelöscht werden.

Eingehende Trigger referenzieren dabei eine bestimmte Konfiguration. Das entsprechende Verfahren wird nachfolgend beschrieben.

Die Semantik ist nicht einem Trigger-Signal im Netzwerk zugeordnet. Vielmehr repräsentiert ein Trigger lediglich einen Zustand. Wie dieser Zustand von der jeweiligen empfangenden PAE genutzt wird, ist in der empfangenden PAE konfiguriert. Mit anderen Worten, die sendende PAE sendet lediglich ihren Zustand, die empfangende PAE generiert die für sie gültige Semantik. Empfangen mehrere PAEs einen Trigger, kann in jeder PAE eine andere Semantik verwendet werden, d.h. eine andere Reaktion erfolgen. So kann etwa eine erste PAE gestoppt und eine zweite PAE umkonfiguriert werden. Senden mehrere PAEs einen Trigger, kann das den Trigger generierende Ereignis in jeder PAE ein anderes sein.

Es sei erwähnt, auch bei Bussystemen usw. eine Wave-Rekonfiguration und/oder eine partielle Rekonfiguration erfolgen kann. Eine partielle Rekonfiguration eines Busses kann beispielsweise bei der nur abschnittsweisen Rekonfiguration erfolgen.

### 3.2 Systemstatus und Programmzeiger

Ein System ist je nach Implementierung ein Baustein oder eine miteinander gekoppelte Gruppe von Bausteinen. Zur Verwaltung eines Arrays aus PAEs - das bei einem System bausteinübergreifend ausgestaltet ist - ist es nicht sinnvoll den Zustand oder Programmzeiger jeder PAE zu kennen. Zum näheren Verständnis wird zwischen mehreren Fällen unterschieden:
- PAEs als Bauelemente ohne Prozessoreigenschaft. Derartige PAEs benötigen keinen eigenen Programmzeiger. Der Zustand einer einzelnen PAE ist meist bedeutungslos, da nur bestimmte PAEs einen nutzbaren Zustand besitzen (vgl. PACT01 : Dort ist der Zustand, der durch eine PAE repräsentiert ist, kein Programmcounter, sondern ein Datencounter). Der Zustand einer Gruppe von PAEs wird durch die Verknüpfung der Zustände der einzelnen relevanten PAEs bestimmt. Mit anderen Worten repräsentiert die Information innerhalb des Netzwerkes der Trigger den Zustand.
- PAEs als Prozessoren. Diese PAEs besitzen einen eigenen internen Programmzeiger und Status. Bevorzugt wird lediglich die Information einer PAE, die für die anderen PAEs oder eine andere PAE relevant ist, durch Trigger ausgetauscht.

Die Interaktion der PAEs untereinander ergibt einen gemeinsamen Status, der ausgewertet werden kann, etwa in der CT, um zu bestimmen, wie eine Neukonfiguration erfolgen soll. Dabei kann gegebenenfalls berücksichtigt werden, wie jeweils das evtl. konfigurierbare Netzwerk der zur Triggerübertragung verwendeten Leitungen bzw. Busse momentan konfiguriert ist.

Das Array aus PAEs (PA) besitzt somit einen globalen Zustand. Die wesentliche Information wird durch bestimmte Trigger an die CT geführt, die anhand derer die Programmausführung durch Rekonfiguration steuert. Besonders bemerkenswert ist, dass damit kein Programmzähler mehr existiert.

### 4. (Re)Konfiguration

VPU Bausteine werden aufgrund von Ereignissen konfiguriert oder umkonfiguriert. Diese Ereignisse können durch Trigger (CONFIG)repräsentiert werden, die an eine CT übertragen werden. Ein eingehender Trigger referenziert eine bestimmte Konfiguration (SubConf) für bestimmte PAEs. Die referenzierte SubConf wird an eine oder mehrere PAEs gesendet.

Die Referenzierung geschieht mittels eines Lookup-Systems nach dem Stand der Technik oder einer beliebigen anderen Adressumsetzung bzw. -generierung. Beispielsweise könnte folgendermaßen anhand der Nummer eines eingehenden Triggers die Adresse der auszuführenden Konfiguration (SubConf) berechnet werden, wenn die SubConf eine feste Länge besitzen: Offset + (Triggernummer * SubConfLänge).

VPU Bausteine kennen drei Konfigurationsmodi:
a) Globale Konfiguration, die gesamte VPU wird umkonfiguriert. Die gesamte VPU muss sich in einem konfigurierbaren Zustand befinden, d.h. muss unkonfiguriert sein.
b) Locale Konfiguration, ein Teil der VPU wird umkonfiguriert. Der lokale Teil der VPU, der umkonfiguriert werden soll, muss sich in einem konfigurierbaren Zustand befinden, d.h. muss unkonfiguriert sein.
c) Differentielle Konfiguration, eine bestehende Konfiguration wird modifiziert. Die PAEs, die umkonfiguriert werden sollen, müssen sich in einem konfigurierten Zustand befinden, d.h. muss konfiguriert sein.

Eine Konfiguration besteht aus einer Menge von Konfigurationswörtern (KWs). Jede Konfiguration kann per se referenziert werden, beispielsweise durch eine Referenznummer (ID), die bedarfsweise eindeutig sein kann.

Im folgenden soll eine durch eine ID gekennzeichnete Menge von KWs als SubConfiguration (SubConf) bezeichnet werden. In einer VPU können mehrere sowohl unterschiedliche, als auch gleichartige SubConf konfiguriert sein, die gleichzeitig auf unterschiedlichen PAEs ablaufen.

Eine PAE kann ein oder mehrere Konfigurationsregister besitzen, wobei je ein Konfigurationswort (KW) ein Konfigurationsregister beschreibt. Einem KW ist grundsätzlich die Adresse der zu konfigurierenden PAE zugeordnet. Ebenso sind einem KW gewöhnlicherweise Informationen, die die Art der Konfiguration angeben zugeordnet. Diese Informationen können technisch durch Flags oder eine Kodierung realisiert werden. Flags werden nachfolgend detailliert beschrieben.

### 4.1 ModulID

Für die meisten Operationen ist es ausreichend, dass die CT die Zuordnung eines Konfigurationswortes und der betreffenden PAE zu einer SubConf kennt. Für komplexere Operationen im Processing Array ist es jedoch sinnvoll, in jeder PAE die ID der ihr zugeordneten SubConf zu speichern.

Eine innerhalb des PA gespeicherte ID wird zur Unterscheidung der ID innerhalb der CTs im Folgenden ModulID genannt.

Es gibt mehrere Gründe für die Einführung der ModulID, einige sollen beschrieben werden:
- Eine PAE darf nur auf einen Bus aufgeschaltet werden, der auch zu der entsprechenden SubConf gehört. Wird eine PAE auf einen falschen (fremden) Bus aufgeschaltet, kann dies zur Verarbeitung falscher Daten führen. Grundsätzlich kann dieses Problem dadurch gelöst werden, dass Busse zeitlich vor PAEs konfiguriert werden, was zu einer starren Reihenfolge der KW innerhalb einer SubConf führt. Durch die Einführung von ModulID kann dies umgangen werden, indem eine PAE ihre gespeicherte ModulID mit der der ihr zugeordneten Busse vergleicht und sich erst dann auf einen Bus aufschaltet, wenn dessen ModulID mit der der PAE übereinstimmt. Solange die beiden ModulIDs unterschiedlich sind, wird die Busverbindung nicht aufgebaut. Alternativ ist eine Bussharingverwaltung realisierbar, vgl. PAct 07.
- PAEs können durch ein Signal LocalReset in den Zustand "unkonfiguriert" versetzt werden. Local Reset geht von einer PAE im Array aus und nicht von einer CT; daher "lokal".

Dazu muss das Signal zwischen allen PAEs einer SubConf verbunden werden. Problematisch wird dieses Vorgehen, wenn eine SubConf gelöscht werden soll, die noch nicht vollständig konfiguriert wurde und daher nicht alle PAEs an LocalReset angeschlossen sind. Mittels der ModulID kann die CT einen Befehl an alle PAEs broadcasten. Die PAEs mit der entsprechenden ModulID wechseln ihren Zustand auf "unkonfiguriert".
- In manchen Applikationen darf eine SubConf erst zu einem bestimmten Zeitpunkt gestartet werden, kann aber bereits vorher konfiguriert werden. Mittels der ModulID kann die CT einen Befehl an alle PAEs broadcasten. Die PAEs mit der entsprechenden ModulID starten daraufhin die Datenverarbeitung.

Grundsätzlich kann die ModulID auch mit der in der CT gespeicherten ID übereinstimmen.

Die ModulID wird in ein Konfigurationsregister in der jeweiligen PAE geschrieben. Da IDs für gewöhnliche eine erhebliche Breite von zumeist mehr als 10 Bits aufweisen, ist das Bereitstellen eines derart großen Registers in jeder PAE ineffizient.

Es wird daher vorgeschlagen die ModulID der jeweiligen SubConf von der ID abzuleiten, dass sie eine geringe Breite besitzt und eindeutig ist. Da die Menge aller Module innerhalb eines PA typisch vergleichsweise gering ist, ist eine ModulID Breite von wenigen Bits (z.B. 4-5 Bits) ausreichend. ModulID und ID sind bijektiv aufeinander abbildbar. Mit anderen Worten identifiziert die ModulID ein konfiguriertes Modul eindeutig innerhalb eines Arrays zu einem bestimmten Zeitpunkt. Die ModulID wird vor der Konfiguration einer SubConf so vergeben, dass die SubConf zur Ausführungszeit eindeutig im PA identifizierbar ist. Eine SubConf kann mehrfach gleichzeitig in das PA konfiguriert sein (vgl. Makros, nachfolgend beschrieben). Zur eindeutigen Zuordnung wird für jede konfigurierte SubConf eine eindeutige ModulID vergeben.

Die Übersetzung einer ID auf eine ModulID kann über Lookup-Tabellen oder Listen ablaufen. Da hierzu zahlreiche Abbildungsverfahren bekannt sind, soll nur eine Möglichkeit genauer erläutert werden:
Eine Liste deren Länge 2^{ModulID} beträgt enthält die Menge aller aktuell im Array konfigurierten IDs, wobei je einem Listeneintrag eine ID zugeordnet ist. Der Eintrag "0" kennzeichnet eine unbenutzt ModulID. Wird eine neue ID konfiguriert, muss diese einem freien Listeneintrag zugeordnet werden, dessen Adresse die entsprechende ModulID ergibt. Die ID wird in an der Adresse ModulID in die Liste eingetragen. Beim Löschen einer ID wird der entsprechende Listeneintrag wieder auf "0" gesetzt.

### 4.2 PAE Zustände

Jedes KW ist mit zusätzlichen Flags versehen, die den Zustand einer PAE prüfen und steuern:
***CHECK***: Eine unkonfigurierte PAE wird alloziert und konfiguriert. Sofern der Zustand der PAE "unkonfiguriert" ist, wird die PAE mit dem KW konfiguriert. Der Vorgang wird mit ACK quittiert.

Befindet sich die PAE im Zustand "konfiguriert" oder "allocated", wird das KW nicht akzeptiert. Die Zurückweisung wird mit REJ quittiert.

Nach Eintreffen von CHECK geht eine PAE in den Zustand "allocated" über. Jeder weitere CHECK wird zurückgewiesen, die Datenverarbeitung wird jedoch nicht gestartet.
***DIFFERENTIAL**:* Die Konfigurationsregister einer bereits konfigurierten PAE werden modifiziert. Sofern der Zustand der PAE "konfiguriert" oder "allocated" ist, wird die PAE mit dem KW modifiziert. Der Vorgang wird mit ACK quittiert.

Befindet sich die PAE im Zustand "unkonfiguriert", wird das KW nicht akzeptiert, es wird durch REJ (Reject) quittiert.
**GO:** Die Datenverarbeitung wird gestartet. GO kann einzeln oder zusammen mit CHECK oder DIFFERENTIAL gesendet werden.
**WAVE:** Eine Konfiguration wird mit der Datenverarbeitung verknüpft. Sobald der Trigger WAVE eintrifft wird die mit dem Flag WAVE gekennzeichnete Konfiguration in die PAE geladen. Wird vor Eintreffen der Triggers WAVE konfiguriert, bleiben die mit dem WAVE-Flag gekennzeichneten KW bis zum Eintreffen des Triggers gespeichert und werden erst mit dem Trigger aktiv. Sofern der Trigger WAVE vor den KW mit dem Flag WAVE eintrifft, wird die Datenverarbeitung bis zum Eintreffen der KW angehalten.

Mindestens CHECK oder DIFFERENTIAL muss je übertragenem KW gesetzt sein. CHECK und DIFFERENTIAL sind jedoch nicht gleichzeitig erlaubt. CHECK und GO, bzw. DIFFERENTIAL und GO sind zulässig und starten die Datenverarbeitung.

Zusätzlich ist ein Flag implementiert, das keinem KW zugeordnet ist und von der CT explizit gesetzt wird:
***LOCK***: Eine PAE kann nicht beliebig in den Zustand "not configured" wechseln. Wäre dies der Fall, könnte beispielsweise die Zelle noch konfiguriert und mit der Verarbeitung von Daten befasst sein, während versucht wird, eine erste Konfiguration aus dem FILMO-Speicher in die Zelle zu schreiben; dann beendet die Zelle während des weiteren FILMO-Durchlaufes ihre Tätigkeit. Prinzipiell, d.h. ohne weitere Maßnahmen, könnte daher eine im FILMO nachfolgende gespeicherte zweite Konfiguration, die eigentlich erst nach der ersten ausgeführt werden darf, diese Zelle belegen. Dies kann dann zu DEADLOCK-Situationen führen. Indem der Wechsel der Konfigurierbarkeit dieser Zelle durch den Befehl LOCK zeitweilig beschränkt wird, kann ein solcher Deadlock vermieden werden, indem die Zelle daran gehindert wird, zu einem ungewollten Zeitpunkt konfigurierbar zu werden. Dieses Locken der Zelle gegen Umkonfiguration kann insbesondere entweder erfolgen, wenn der FILMO durchlaufen wird, und zwar unabhängig davon, ob es sich um eine Zelle handelt, auf die zum Zwecke der Umkonfiguration tatsächlich zugegriffen wird. Alternativ kann das Locken der Zelle gegen Umkonfigurierung erfolgen, indem etwa beim ersten, erfolglosen Zugriff auf die Zelle durch eine im Filmo liegende erste Konfiguration der Zelle verboten wird, sich eine bestimmte Phase lang umzukonfigurieren, was das Einkonfigurieren der zweiten Konfiguration nur bei jenen Zellen verhindert, auf die mit einer früheren Konfiguration zugegriffen werden soll.

Nach dem FILMO-Prinzip ist ein Wechsel also nur während bestimmter Zustände im FILMO zulässig. Durch LOCK wie diskutiert steuert die FILMO Zustandsmaschine den Übergang in den Zustand "not configured".

Je nach Implementierung übermittelt die PAE ihren aktuellen Zustand an eine übergeordnete Steuereinheit (z.B. die zugeordnete CT), oder speichert diesen lokal.

### Übergangstabellen

Die einfachste Realisierung einer Zustandsmaschine zur Einhaltung des FILMO Protokolls ist ohne die Verwendung von WAVE und CHECK/DIFFERENTIAL möglich. Dabei ist lediglich das GO-Flag implementiert, eine Konfiguration besteht aus KW, die zusammen mit GO übertragen werden. Folgende Zustände können implementiert sein:
**not configured:** Die PAE verhält sich vollkommen neutral, d.h. nimmt keine Daten oder Trigger an und sendet auch keine Daten oder Trigger. Eine Konfiguration wird erwartet. Differentielle Konfigurationen, falls implementiert, werden zurückgewiesen.
**configured:** Die PAE ist konfiguriert und verarbeitet Daten und Trigger. Weitere Konfigurationen werden zurückgewiesen, differentielle Konfigurationen, falls implementiert, werden akzeptiert.
**wait for lock:** Die PAE erhielt eine Aufforderung zur Rekonfiguration (z.B. durch Local Reset oder setzen eines Bits in einem Konfigurationsregister). Die Datenverarbeitung ist eingestellt, die PAE erwartet die Aufhebung des LOCK, um den Zustand nach "not configured" wechseln zu können.

| | | |
|---|---|---|
| aktueller PAE Zustand | Ereignis | nächster Zustand |
| not configured | GO-Flag | Configured |

| | | |
|---|---|---|
| configured | Local Re-set-Trigger | wait for lock |
| wait for lock | LOCK-Flag | not configured |

Eine vervollständigte Zustandsmaschine gemäß dem beschriebenen Verfahren ermöglicht die Konfiguration einer PAE, die mehrere KWs benötigt. Dies ist z.B. dann der Fall, wenn eine Konfiguration übertragen werden soll, die auf mehrere Konstante Bezug nimmt und diese Konstanten nach bzw. mit der eigentlichen Einkonfigurierung auch in die PAE geschrieben werden sollen. Dazu ist ein weiterer Zustand erforderlich.
**allocated:** Die PAE wurde durch CHECK geprüft und war zur Konfiguration bereit. Im Zustand allocated verarbeitet die PAE noch keine Daten. Weitere mit DIFFERENTIAL gekennzeichnete KW werden akzeptiert. Mit CHECK gekennzeichnete KW werden zurückgewiesen. Nachfolgend ist die entsprechende Übergangstabelle abgebildet, WAVE ist noch nicht implementiert:

| | | |
|---|---|---|
| aktueller PAE Zustand | Ereignis | nächster Zustand |
| not configured | CHECK-Flag | allocated |
| not configured | GO-Flag | configured |
| allocated | GO-Flag | configured |
| configured | Local Re-set-Trigger | wait for lock |
| wait for lock | LOCK-Flag | not configured |

### 4.2.1 Implementierung von GO

### GO wird

entweder sofort bei der Konfiguration einer PAE zusammen mit dem KW gesetzt, um die Datenverarbeitung sofort zu starten, oder nach Abschluss der gesamten SubConf an die jeweiligen PAEs gesendet.

Das Flag GO kann unterschiedlich implementiert sein:

### a) Register

Jede PAE besitzt ein Register, das zum Start der Verarbeitung gesetzt wird. Die technische Realisierung ist vergleichsweise einfach, jedoch ist für jede PAE ein Konfigurationszyklus erforderlich. GO wird als Flag gemäß der vorherigen Beschreibung zusammen mit dem KW übertragen.

Für den Fall, dass die Reihenfolge, in der PAEs verschiedener PACs, die zu einer EnhSubConf gehören, konfiguriert werden, nicht unerheblich ist, wird zur Sicherstellung der Einhaltung dieser zeitlichen Abhängigkeit ein weiteres Verfahren vorgeschlagen. Da bei mehreren PACs definitionsgemäß auch mehrere CTs existieren, verständigen sich diese untereinander, um die Information auszutauschen, ob bisher alle PAEs, die vor den in jeder PAC nächsten konfiguriert sein müssen, bereits ihr GO aus derselben Konfiguration akzeptiert haben.

Eine Möglichkeit, die zeitlichen Abhängigkeiten aufzulösen und das Senden von nicht erlaubten GOs zu verhindern, ist, die KW so umzuordnen, dass eine korrekte Reihenfolge durch die Abfolge ihrer Konfiguration durch den FILMO sichergestellt wird. Der FILMO merkt sich dann, evtl. durch ein Flag, für jede Konfiguration, ob bisher alle GOs der aktuellen Konfiguration akzeptiert wurden. Ist dies nicht der Fall, werden weitere GOs dieser Konfiguration nicht mehr geschickt. Der Initialzustand bei jeder neuen Konfiguration ist dabei so, als wenn bisher alle GOs akzeptiert wurden.

Um die Wahrscheinlichkeit, dass einige PAEs bei der Konfiguration bereits nicht mehr konfiguriert sind, zu erhöhen, kann man die KW einer zumindest teilweise sequentiellen Konfiguration so umsortieren, dass KW der betreffenden PAEs zeitlich später konfiguriert werden. Ebenso kann man, wenn dies erforderlich ist, bestimmte PAEs früher aktivieren, indem man KW der betreffenden Konfiguration so umordnet, dass die betreffenden PAEs zeitlich früher konfiguriert werden. Diese Verfahren sind insbesondere anwendbar, wenn die Reihenfolge der KW nicht durch zeitliche Abhängigkeiten, welche auch nach der Umsortierung eingehalten werden müssen, bereits vollständig festgelegt ist.

### b) Verdrahtung mittels Leitung

Ebenso wie zur Verwendung des LocalReset Signal werden PAEs zu Gruppen zusammengefasst, die gemeinsam gestartet werden sollen. Innerhalb dieser Gruppe werden alle PAEs mit einer Leitung zur Verteilung von GO verbunden. Sofern eine Gruppe gestartet werden soll, wird einer ersten PAE GO signalisiert, was durch Senden eines Signals oder Setzen eines Registers (siehe a)) dieser ersten PAE realisiert wird. Von dieser PAE aus wird GO an alle anderen PAEs weitergeleitet. Zum Starten ist ein Konfigurationszyklus erforderlich. Für die Weiterleitung wird zur Überbrückung größerer Distanzen eine Latenzzeit benötigt.

### c) Broadcast

Eine Abwandlung von a) und b) bietet eine hohe Performance (nur ein Konfigurationszyklus) bei vergleichsweise geringem Aufwand.

Dazu erhalten alle Module eine ModulID, die gewöhnlicherweise ungleich der SubConfID ist.

Dabei ist die Größe der ModulID möglichst klein zu halten, nach Möglichkeit sollte eine Breite von einigen wenigen Bits (3-5) ausreichen. Die Verwendung von ModulID wird nachfolgende ausführlich beschrieben.

In jede PAE wird während der Konfiguration die entsprechende ModulID geschrieben.

GO wird danach mittels eines Broadcasts gestartet, indem die ModulID zusammen mit dem GO-Befehl in das Array gesendet wird. Der Befehl wird von allen PAEs empfangen, jedoch nur von den PAEs mit der passenden ModulID ausgeführt.

### 4.2.2 Sichern des PAE-Zustandes

Der Zustand einer PAE darf sich nicht innerhalb einer Konfiguration oder eines FILMO Durchlaufes von "konfiguriert" auf "unkonfiguriert" ändern. Beispiel: Zwei verschiedene SubConf (A, D) teilen dieselben Ressourcen, insbesondere eine PAE X. Im FILMO liegt SubConf A zeitlich vor SubConf D. Somit muss SubConf A die Resourcen vor SubConf D belegen. PAE X ist zum Konfigurationszeitpunkt von SubConf A "konfiguriert", wechselt vor der Konfiguration von SubConf D aber den Zustand auf "unkonfiguriert". Daraus entsteht eine Deadlock Situation, da nunmehr SubConf A PAE X nicht mehr konfigurieren kann, SubConf D aber die restlichen Ressourcen, die bereits von SubConf A belegt sind nicht mehr konfigurieren kann. Weder SubConf A noch SubConf D können ausgeführt werden.

Durch LOCK wird wie erwähnt sichergestellt, daß sich der Zustand einer PAE während eines FILMO Durchlaufes nicht unerlaubt ändert. Dabei ist es für das FILMO-Prinzip unbedeutend, wie die Zustandssicherung durchgeführt wird, dennoch sollen mehrere Möglichkeiten diskutiert werden:

### LOCK Grundprinzip

Vor Beginn der ersten Konfiguration und bei jedem neuen Durchlauf des FILMOs wird der Status der PAEs gesichert bzw. eingerastet. Nach Beendigung jedes Durchlaufes wird der Status wieder freigegeben. Bestimmte Statusänderungen werden also nur einmal pro Durchlauf erlaubt.

### Expliziter LOCK

Das Lock-Signal wird erst nach dem ersten REJ aus dem PA seit Beginn eines FILMO-Durchlaufs gesetzt. Dies ist möglich, da zuvor alle PAEs konfiguriert werden konnten und damit bereits im Zustand "unkonfiguriert" waren. Nur eine PAE, die ein REJ generiert, könnte während des weiteren FILMO-Durchlaufs ihren Zustand von "configured" auf "not configured" ändern. Erst ab diesem Zeitpunkt könnte ein Deadlock auftreten, nämlich wenn ein erstes KW einen REJ erhielt und ein zeitlich späteres konfiguriert wird. Durch das sofortige Setzen von LOCK nach einem REJ wird der Übergang von "configured" nach "not configured" aber sofort verhindert. Der wesentliche Vorteil dieses Verfahrens ist, dass während der ersten Durchlaufphase PAEs ihre Zustände noch verändern können, das heißt insbesondere, in den Zustand "unkonfiguriert" wechseln dürfen. Wechselt eine PAE also während eines Durchlaufs vor einem fehlgeschlagenen Konfigurationsversuch von "configured" nach "not configured" kann diese in derselben Konfigurationsphase konfiguriert werden.

### Impliziter LOCK

Eine noch effizientere Erweiterung des expliziten LOCKs ist die implizite Handhabung von LOCK innerhalb einer PAE. Generell sind nur PAEs von der Bedingung der Statussicherung betroffen, die eine Konfiguration zurückgewiesen haben (REJ). Daher ist es hinreichend während eines FILMO-Durchlaufes den Status nur innerhalb der PAEs zu sichern, die ein REJ generierten. Alle anderen PAEs bleiben davon unberührt. LOCK wird dabei nicht mehr von einer übergeordneten Instanz (CT) generiert. Vielmehr wird nach einem FILMO-Durchlauf durch ein Signal FREE die Statussicherung in den betreffenden PAEs wieder aufgehoben. FREE kann direkt nach einem FILMO-Durchlauf an alle PAEs gebroadcastet werden und kann auch gepipelinet durch das Array geleitet werden.

### Erweiterte Übergangstabellen für implizites LOCK:

Eine von einer PAE generierte Zurückweisung (REJ) wird lokal in jeder PAE gespeichert (REJD = rejected). Erst bei Rückkehr nach "not configured" wird die Information gelöscht.

| | | |
|---|---|---|
| aktueller PAE Zustand | Ereignis | nächster Zustand |
| not configured | CHECK-Flag | Allocated |
| not configured | GO-Flag | Configured |
| allocated | GO-Flag | Configured |
| configured | Local Reset-Trigger & Zurückweisung (REJD) | wait for free |
| configured | Local Reset-Trigger & keine Zurück-weisung (not REJD) | not configured |
| wait for free | FREE-Flag | not configured |

Die Übergangstabellen sind beispielhaft. Eine reale Implementierung ist von der jeweiligen Ausgestaltung abhängig.

### 4.2.3 Konfiguration einer PAE

In diesem Abschnitt soll der Konfigurationsablauf aus Sicht der CT nochmals dargestellt werden. Als PAE gelten dabei auch Teile einer PAE, wenn diese unabhängig voneinander die zuvor beschriebenen Zustände verwalten.

Sofern eine PAE neu konfiguriert wird, muss das erste KW das Flag CHECK setzen, um den Status der PAE zu prüfen. Eine Konfiguration für eine PAE ist derart aufgebaut, entweder nur ein KW konfiguriert wird

| | | | |
|---|---|---|---|
| CHECK | DIFFERENTIAL | GO | KW |
| X | - | * | KW0 |

oder mehrere KW konfiguriert werden, wobei beim Ersten CHECK gesetzt ist und bei allen Weiteren DIFFERENTIAL.

| | | | |
|---|---|---|---|
| CHECK | DIFFERENTIAL | GO | KW |
| X | - | - | KW0 |
| - | X | - | KW1 |
| - | X | - | KW2 |
| - | X | * | KWn |

| | | | |
|---|---|---|---|
| (X) gesetzt, (-) nicht gesetzt, GO ist jeweils optional (*). | | | |

Sofern CHECK zurückgewiesen wird (REJ) wird kein nachfolgendes KW mit DIFFERENTIAL Flag an die PAE gesendet. Nach akzeptiertem CHECK (ACK), werden alle weiteren CHECKs bis zur Rückkehr auf den Status "not configured" zurückgewiesen, die PAE ist für die akzeptierte SubConf alloziiert. Innerhalb dieser SubConf werden die nächsten KW ausschließlich mit DIFFERENTIAL konfiguriert. Dies ist zulässig, da durch CHECK bekannt ist, dass diese SubConf Zugriffsrechte auf die PAE besitzt.

### 4.2.4 Rücksetzen in den Status "not configured"

Durch einen besonders ausgestalteten Trigger (LocalReset) wird ein Signal propagiert, das das lokale Zurücksetzen des Zustandes "configured" nach "not configured" in den empfangenden PAEs auslöst, spätestens nach einem empfangenen LOCK oder FREE. Das Zurücksetzen kann zusätzlich noch durch andere Quellen ausgelöst werden, beispielsweise durch ein Konfigurationsregister.

LocalReset kann von der Quelle, die das Signal generiert über alle bestehenden konfigurierbaren Busverbindungen, d.h. sämtliche Triggerbusse und sämtliche Datenbusse, an jede über die Busse angeschlossenen PAEs weitergeleitet werden. Grundsätzlich leitet dabei z.B. jede LocalReset empfangende PAE das Signal wiederum über alle angeschlossenen Busse weiter.

Um jedoch eine Weiterleitung von LocalReset über die Grenze einer lokalen Gruppe hinaus zu verhindern, ist unabhängig für jede Zelle konfigurierbar, ob und über welche angeschlossenen Busse das LocalReset weitergeleitet werden soll.

### 4.2.4.1 Löschen nicht vollständig konfigurierter SubConf

In einigen Fällen kann es vorkommen, dass mit der Konfiguration einer SubConf begonnen wird und während der Konfiguration festgestellt wird, dass die SubConf entweder nicht (mehr) oder nicht vollständig benötigt wird. LocalReset ändert unter Umständen nicht den Zustand aller PAEs auf "unkonfiguriert", da der Bus noch nicht komplett aufgebaut wurde.

Zwei Möglichkeiten werden erfindungsgemäß zur Lösung vorgeschlagen. Bei beiden Verfahren sendet die PAE, die das LocalReset generiert hätte, einen Trigger an die CT. Die CT informiert daraufhin die PAEs wie folgt:

### 4.2.4.2 Bei Verwendung von ModulID

Sofern eine Möglichkeit zur Speicherung der ModulID innerhalb jeder PAE vorgesehen ist, kann mittels eines einfachen Broadcasts, bei dem die Identifikation mitgesendet wird, jede PAE mit dieser bestimmten Identifikation aufgefordert werden, in den Zustand "not configured" zu gehen.

### 4.2.4.3 Bei Verwendung des GO-Signales

Sofern eine GO-Leitung in exakt der Reihenfolge verdrahtet wird, wie PAEs konfiguriert werden, ist es möglich der GO-Leitung eine Reset-Leitung zuzuordnen, die sämtliche PAEs in den Zustand "not configured" setzt.

### 4.2.4.4 Explizites Reset durch Konfigurationsregister

In jeder PAE wird ein Bit oder ein Code innerhalb der Konfigurationsregister definiert, wobei durch Setzen dieses Bits oder Codes durch die CT die PAE in den Zustand "not configured" zurückgesetzt wird.

### 4.3 Halten der Daten in den PAEs

Besonders vorteilhaft ist bei Bausteinen der erfindungsgemäßen Gattung, wenn Daten und Zustände einer PAE über eine Rekonfiguration hinweg gehalten werden können. Mit anderen Worten, ist es möglich innerhalb einer PAE gespeicherte Daten trotz Rekonfiguration zu erhalten. Durch entsprechende Angaben in den KW wird dazu für jedes relevante Register definiert ob es durch die Rekonfiguration zurückgesetzt wird.

Beispiel:
Ist ein Bit innerhalb eines KW zum Beispiel logisch 0 wird der aktuelle Registerwert des zugeordneten Daten- oder Zustandsregisters beibehalten, eine logische 1 setzt den Wert des Registers zurück. Ein entsprechendes KW könnte folgendermaßen strukturiert sein:

| | | | | | | |
|---|---|---|---|---|---|---|
| Eingangsregister | | | Ausgangsregister | | Zustandsflags | |
| A | B | C | H | L | equal/ zero | overflow |

Dadurch ist bei jeder Rekonfiguration der Datenerhalt wählbar.

### 4.4 Setzen von Daten in den PAEs

Weiterhin ist es möglich Daten bei Rekonfiguration von der CT in die Register der PAEs zu schreiben. Dabei sind die relevanten Register durch KWs adressierbar. Ein besonderes Bit zeigt an, ob die Daten als Konstante oder als Datenwort behandelt werden.
- Eine Konstante bleibt bestehen, bis sie neu gesetzt wird.
- Ein Datenwort ist für genau eine bestimmte Anzahl von Verrechnungen, z.B. genau eine Verrechnung gültig. Nach Verarbeitung des Datenwortes existiert das von der CT in das Register geschriebene Datenwort nicht mehr.

### 5. Erweiterungen

Das Busprotokoll kann derart erweitert werden, dass die KWs und ACK/REJ Signale auch über Register gepipelinet werden können.

Dies ist besonders vorteilhaft und wird für sich oder in Verbindung mit anderem als patentfähig angesehen.

In jedem Takt soll ein KW oder mehrere KWs gesendet werden können. Das FILMO-Prinzip soll eingehalten werden. Das Grundprinzip sieht vor, eine Zuordnung zu einem in das PA geschriebene KW derart aufzubauen, dass die zeitlich verzögerte Quittierung nachträglich dem KW zugeordnet wird. Von der Quittierung abhängige KW werden derart umsortiert, dass sie erst nach Eintreffen der Quittierung verarbeitet werden.

Die nachfolgend beschriebenen alternativen Verfahren erfüllen die Anforderungen, wobei die Verfahren unterschiedliche Vorteile aufweisen:

### 5.1 Lookup-Tabellen (STATELUT)

Jede PAE sendet ihren Status an eine Lookup-Tabelle (STATELUT) die lokal in der CT implementiert ist. Die CT prüft beim Versenden eines KW den Zustand der adressierten PAE durch einen Lookup in der STATELUT. Die Quittierung (ACK/REJ) wird von der STATELUT generiert.

Im Detail funktioniert das Verfahren wie folgt:
In einer CT wird der Zustand jeder einzelnen PAE in einem Speicher oder Registersatz verwaltet. Für jede PAE existiert ein Eintrag, der anzeigt in welchem Modus ("konfiguriert", "unkonfiguriert") sich die PAE befindet. Anhand des Eintrages prüft die CT, ob die PAE umkonfiguriert werden kann. Der Zustand wird von der CT intern, also ohne Nachfrage bei den PAEs geprüft. Jede PAE sendet ihren Status je nach Implementierung selbständig oder nach Aufforderung an die CT-interne STATELUT.
Bei gesetztem LOCK bzw. fehlendem FREE werden keine Statusänderungen von den PAEs an die STATELUT gesendet, bzw. von der STATELUT übernommen.

Durch einen einfachen Mechanismus wird der Zustand der PAEs überwacht, wobei die bereits beschriebenen Mechanismen der Zustandssteuerung und die bekannten Zustände realisiert werden:

### Setzen des Zustands "konfiguriert"

Beim Schreiben einer mit dem Flag CHECK versehenen KW erfolgt eine Prüfung der adressierten PAE in der STATELUT.
- Sofern die PAE in einem umkonfigurierbaren Status ist, wird die PAE als "allocated" in der STATELUT vermerkt.
- Sobald die PAE gestartet wird (GO) wird die PAE als "configured" eingetragen.

### Rücksetzen des Zustandes "konfiguriert" auf "unkonfiguriert"

Mehrere Methoden können je nach Applikation und Implementierung verwendet werden:
a) Jede PAE sendet ein Statussignal an die Tabelle, wenn sich ihr Zustand von "konfiguriert" auf "unkonfiguriert" ändert.
   Dieses Statussignal kann gepipelined gesendet werden.
b) Ein Statussignal (LocalReset) wird für eine Gruppe von PAEs gesendet, das anzeigt, dass sich der Zustand für die gesamte Gruppe von "konfiguriert" auf "unkonfiguriert" geändert hat. Über eine Liste werden sämtliche PAEs die zur Gruppe gehören ausgewählt und der Zustand für jede einzelne PAE in der Tabelle geändert. Wesentlich ist, dass das Statussignal von der letzten per LocalReset entferntem PAE einer Gruppe an die CT gesendet wird. Ansonsten kann es zu Inkonsistenzen zwischen der STATELUT und dem tatsächlichen Zustand der PAEs kommen, indem die STATELUT eine PAE als "unkonfiguriert" ausweist, die sich tatsächlich jedoch noch im Zustand "konfiguriert" befindet.
c) Nach Eintreffen eines LOCK-Signals, das vorzugsweise gepipelinet wird, sendet jede PAE, deren Status sich seit dem letzten Eintreffen von LOCK geändert hat, ihren Status an die STATELUT. LOCK erhält dabei eher die Semantik "TRANSFER STATUS". Da PAEs ihren Status jedoch nur nach dieser Aufforderung übertragen und die Statusänderung ansonsten geLOCKed ist, bleibt das Verfahren bis auf die umgekehrte Semantik dasselbe.

Zur Überprüfung des Zustandes einer PAE bei der Konfiguration wird beim Absenden der Adresse der Ziel-PAE eines KW die STATELUT abgefragt und dementsprechend ein ACK oder REJ generiert. Ein KW wird nur dann an eine PAE gesendet, wenn kein REJ generiert wurde oder wenn das DIFFERENTIAL Flag gesetzt ist.

Durch dieses Verfahren ist die zeitliche Reihenfolge der KW sichergestellt. Nur gültige KW werden zu den PAEs gesendet. Nachteilig ist der Aufwand der Implementierung der STATELUT sowie die Rücksendung der PAE-Zustände an die STATELUT und die dazu erforderliche Busbandbreite und Laufzeit.

### 5.2 Umsortieren der KW

Wesentlich für die Anwendung des nachfolgenden Verfahrens ist die Verwendung des CHECK-Flags für jedes erste an eine PAE gesendete KW (KW1).

Die SubConf wird wie folgt umsortiert:
1. Zuerst wird KW1 einer ersten PAE beschrieben. In der Zeit (DELAY) bis zum Eintreffen der Quittung (ACK/REJ) folgen exakt so viele Leerzyklen (NOPs), wie Takte vergehen.
2. Danach wird das KW1 einer zweiten PAE beschrieben. Während DELAY können die restlichen KW der ersten PAE beschrieben werden. Eventuell restliche verbleibenden Takte werden mit Leerzyklen aufgefüllt. Der Konfigurationsblock von KW1 bis zum Ablauf von DELAY wird Atom genannt.
3. Bei jeder weiteren PAE wird ebenso verfahren.
4. Werden bei einer PAE mehr KW beschrieben als Takte während DELAY anstehen, wird der verbleibende Teil auf die nachfolgenden Atome verteilt. Alternativ kann das DELAY auch aktiv verlängert werden, wodurch eine größere Anzahl von KW im selben Atom geschrieben werden können.

Bei Eintreffen von ACK für ein KW1 werden alle weiteren KW für die entsprechende PAE konfiguriert. Sofern die PAE mit REJ quittiert, wird kein weiteres, die PAE betreffendes, KW konfiguriert.

Das Verfahren gewährleistet die Einhaltung der Reihenfolge der Konfiguration.

Nachteilig ist, dass nicht die optimale Konfigurationsgeschwindigkeit erreicht werden kann. Da zur Einhaltung der Reihenfolge die Wartezeit eines Atoms gegebenenfalls mit Leerzyklen (NOPs) gefüllt werden muss, sinkt die nutzbare Bandbreite und die Größe einer SubConf nimmt durch die NOPs zu. Weiterhin bereitet ein Paradoxon eine nicht lösbare Einschränkung der Konfigurationsgeschwindigkeit:
Um die Menge der Konfigurationsdaten und -zyklen möglichst gering zu halten, sollte die Zahl der Konfigurationsregister möglichst klein gehalten werden. Da bei höheren Frequenzen DELAY zwangsweise größer wird, kollidiert dies mit der Forderung, DELAY sinnvoll durch das Auffüllen mit KW zu nutzen.

Das Verfahren scheint daher nur bei serieller Übertragung der Konfigurationsdaten sinnvoll einsetzbar zu sein. Durch die Serialisierung der KW ist der Datenstrom ausreichend lang, um die Wartezeit zu füllen.

### 5.3 Auswerten der ACK/REJ Quittierung mit Latency (CHECKACKREJ)

Das CHECK-Signal wird mit den KW über eine oder mehrere Pipeline-Stufen an die adressierte PAE gesendet. Die adressierte PAE quittiert (ACK/REJ) ebenfalls gepipelinet an die CT.

In jedem Takt wird ein KW abgesendet, dessen Quittung (ACK/REJ) erst n-Takte später bei der CT ankommt und ausgewertet wird. Während dieser Zeit werden jedoch n weitere KWs gesendet. Daraus ergeben sich zwei Problemebereiche:
- Steuerung des FILMOs
- Einhaltung der Reihenfolge der KWs

### 5.3.1 Steuerung des FILMOs

Innerhalb des FILMO muss vermerkt werden, welche KW von einer PAE akzeptiert wurde (ACK) und welche zurückgewiesen wurden (REJ). Die zurückgewiesenen KW werden in einem späteren FILMO Durchlauf erneut gesendet. Bei diesem späteren Durchlauf ist es aus Gründen der Konfigurationseffizienz sinnvoll, nur die KWs zu durchlaufen, die zurückgewiesen wurden.

Die beschriebenen Anforderungen sind wie folgt realisierbar: Dem FILMO wird ein weiterer Speicher (RELJMP) zugeordnet, der dieselbe Tiefe wie der FILMO aufweist. Ein erster Zähler (ADR_CNT) zeigt auf die Adresse des KW im FILMO, das aktuell in das PAE-Array geschrieben wird. Ein zweiter Zähler (ACK/REJ_CNT) zeigt auf die Position des KW im FILMO, dessen Quittung (ACK/REJ) aktuell aus dem Array zurückkommt. Ein Register (LASTREJ) speichert den Wert von ACK/REJ_CNT, der auf die Adresse des letzten KW zeigt, dessen Konfiguration mit REJ quittiert wurde. Ein Subtrahierer errechnet die Differenz zwischen ACK/REJ_CNT und LASTREJ. Beim Auftreten eines REJ wird diese Differenz in die Speicherstelle mit der Adresse LASTREJ im Speicher RELJMP geschrieben.

RELJMP enthält somit die relative Sprungweite zwischen einem zurückgewiesenen KW und dessen Nachfolger.
1. Jedem akzeptierten KW ist ein RELJMP-Eintrag "0" (null) zugewiesen.
2. Jedem zurückgewiesenen KW ist ein RELJMP-Eintrag ">0" (größer null) zugewiesen. Durch Addition der aktuellen Adresse mit dem RELJMP-Eintrag wird die Adresse des nächsten zurückgewiesenen KWs im FILMO berechnet.
3. Dem letzten zurückgewiesenen KW ist ein RELJMP-Eintrag "0" (null) zugewiesen, wodurch das Ende angezeigt wird.

Die Speicherstelle der ersten Adresse einer SubConf ist mit einem NOP im FILMO belegt. Der zugeordnete RELJMP enthält den relativen Sprung zum ersten abzuarbeitenden KW.
1. Beim ersten Durchlauf des FILMO ist der Wert "1" (eins).
2. Bei einem folgenden Durchlauf zeigt der Wert auf das erste abzuarbeitenden KW, ist also ">0" (größer null).
3. Sofern alle KWs der SubConf konfiguriert wurden, ist der Wert "0" (null). Woran die Zustandsmaschine die vollständige Abarbeitung der Konfiguration feststellt.

### 5.3.2 Einhaltung der Reihenfolge (BARRIER)

Bei dem unter 5.3 beschriebenen Verfahren ist es nicht möglich eine bestimmte Konfigurationsreihenfolge zu garantieren. Das Verfahren stellt lediglich die FILMO Anforderungen nach 2.1 a)-c) sicher.

In bestimmten Applikationen ist die Einhaltung der Konfigurationsreihenfolge innerhalb einer SubConf (2.1 e)), sowie die Einhaltung der Konfigurationsreihenfolge der einzelnen SubConf selbst, relevant (2.1 d)).

Die Einhaltung von Reihenfolgen wird derart erreicht, dass SubConf in mehrere Blöcke partitioniert werden. Zwischen den einzelnen Blöcken wird ein Token (BARRIER) eingefügt, das nur übersprungen wird, wenn keines der vorhergehenden KW zurückgewiesen (REJ) wurde.

Trifft die Konfiguration auf eine BARRIER und es traten zuvor REJ auf, darf die BARRIER nicht übersprungen werden.

Es wird zwischen wenigstens zwei Arten von BARRIERs unterschieden:
a) NonBlocking: Die Konfiguration wird mit der nachfolgenden SubConf fortgeführt.
b) Blocking: Die Konfiguration wird mit weiteren Durchläufen der aktuellen SubConf fortgeführt. Die BARRIER wird erst übersprungen, wenn die aktuelle SubConf vollständig konfiguriert wurde.

Überlegungen zur Optimierung der Konfigurationsgeschwindigkeit:
Gewöhnlicherweise ist die Einhaltung der Reihenfolge der Konfiguration der einzelnen KW nicht notwendig. Allerdings muss die Reihenfolge der Aktivierung der einzelnen PAEs (GO) exakt eingehalten werden. Die Geschwindigkeit der Konfiguration ist steigerbar, indem die KWs derart umsortiert werden, dass sämtliche KWs, bei denen das GO-Flag nicht gesetzt ist, vor die BARRIER gezogen werden. Ebenfalls müssen sämtliche KW mit gesetztem CHECK-Flag vor die BARRIER gezogen werden. Wird eine PAE mit nur einem KW konfiguriert, muss das KW in zwei Worte aufgespalten werden, wobei das CHECK-Flag vor der BARRIER gesetzt ist und das GO-Flag nach der BARRIER.

An der BARRIER ist bekannt, ob sämtliche CHECKs mit ACK quittiert wurden. Da eine Zurückweisung (REJ) nur mit gesetztem CHECK-Flag auftritt, werden alle KW hinter der BARRIER grundsätzlich in der richtigen Reihenfolge ausgeführt. Die KW hinter der BARRIER werden exakt nur einmal durchlaufen und der Start der einzelnen PAEs verläuft ordentlich.

### 5.3.3 Garbage Collector

Für das Verfahren gemäß 5.3 bieten sich zwei unterschiedliche Implementierungen eines Garbage Collectors (GC) an:
a) Ein als Algorithmus oder einfache Statemachine implementierter GC. Zu Beginn zeigen zwei Zeiger auf die Startadresse des FILMOs: Ein erster Zeiger (ReadPointer) zeigt auf das aktuelle vom GC zu lesende KW, ein zweiter Zeiger(WritePointer) zeigt auf die Position auf die das KW geschrieben werden soll. ReadPointer wird linear inkrementiert. Jedes KW, dessen RelJmp ungleich "0" (null) ist, wird auf die Adresse WritePointer geschrieben. RelJmp wird auf "1" gesetzt und WritePointer wird inkrementiert.
b) Der GC wird in den FILMO integriert, indem zu dem Auslesezeiger des FILMOs ein WritePointer hinzugefügt wird. Der WritePointer zeigt bei Beginn des FILMO-Durchlaufs auf den ersten Eintrag. Jedes KW, das beim Konfigurieren einer PAE mit einem REJ zurückgewiesen wurde, wird auf die Speicherstelle geschrieben, auf die WritePointer zeigt. Danach wird WritePointer inkrementiert. Ein zusätzlich FIFO-ähnlicher Speicher (z.B. auch ein Schiebregister) ist erforderlich, der das an eine PAE gesendeten KW in der richtigen Reihenfolge solange zwischenspeichert, bis das zum KW gehörende ACK/REJ wieder beim FILMO eintrifft. Beim Eintreffen eines ACK wird das KW ignoriert. Beim Eintreffen von REJ wird (wie bereits beschrieben) das KW an die Speicherstelle geschrieben, auf die WritePointer zeigt. Der Speicher des FILMO ist dabei vorzugsweise als ein Multiport Speicher ausgestaltet.

Bei diesem Verfahren ergibt sich zum Ende eines jeden FILMO-Durchlaufes ein neuer Speicheraufbau, bei welchem die nicht konfigurierten KW linear am Beginn des Speichers stehen. Zusätzliche GC Durchläufe sind nicht notwendig. Ebenfalls kann auf die Implementierung von RelJmp und der dazugehörenden Logik vollständig verzichtet werden.

### 5.4 Prefetchen der ACK/REJ Quittierung mit Latency

Abschließend soll eine Weiterentwicklung von 5.3 beschrieben werden. Nachteil dieses Verfahrens ist die vergleichsweise hohe Latenzzeit die der dreifachen Länge der Pipeline entspricht.

Die Adressen und/oder Flags der jeweils zu konfigurierenden PAEs werden auf einem getrennten Bussystem vor der eigentlichen Konfiguration abgesendet. Das Timing ist derart ausgelegt, dass zum Zeitpunkt des gewollten eigentlichen Einschreibens des Konfigurationswortes in eine PAE dessen ACK/REJ Information vorliegt. Sofern mit ACK quittiert wurde, wird die KONFIGURATION durchgeführt; bei einer Zurückweisung (REJ) werden die KW nicht an die PAE gesendet (ACK/REJ-PREFETCH). Durch das FILMO Protokoll, insbesondere das LOCK, ist sichergestellt, dass zwischen ACK/REJ-PREFETCH und der KONFIGURATION kein unerlaubter Statuswechsel der PAEs stattfindet.

### 5.4.1 Aufbau des FILMOs

Der FILMO funktioniert wie folgt: Die KW werden in korrekter Reihenfolge erhalten, entweder (i) aus dem Speicher der CT oder (ii) aus dem FILMO-Speicher.

Die PAE-Adressen der ausgelesenen KW werden über ein erstes Bussystem gepipelinet an die PAEs gesendet. Die kompletten KW werden in einen FIFO-artigen Speicher mit fester Verzögerungszeit (der beispielsweise auch als Schieberegister ausgestaltet sein kann) geschrieben.

Die jeweils adressierte PAE quittiert abhängig von ihrem Status durch Senden von ACK oder REJ. Die Tiefe des FIFOs entspricht der Anzahl von Takten, die zwischen dem Absenden der PAE-Adresse an eine PAE und dem Eingang der Quittung der PAE vergehen. Der Zyklus vom Absenden der Adresse an eine PAE bis zum Eintreffen der Quittung der PAE wird Prefetch genannt. Durch die bestimmte Verzögerung im FIFO-artigen Speicher, der hier nicht identisch mit dem FILMO ist, trifft die Quittung einer PAE exakt zu dem Zeitpunkt bei der CT ein, zu dem auch das zu der PAE gehörende KW am Ausgang des FIFOs ansteht. Beim Eintreffen von ACK wird das KW an die PAE versendet, eine Quittierung wird nicht mehr erwartet. Der PAE Zustand hat sich zwischenzeitlich nicht unerlaubt geändert, die Annahme ist garantiert.

Beim Eintreffen von REJ wird das KW nicht an die PAE gesendet, sondern zurück in den FILMO-Speicher geschrieben. Dafür steht ein zusätzlicher Zeiger zur Verfügung, der bei Beginn des linearen Auslesens des FILMO-Speichers auf die erste Adresse zeigt. Mit jedem zurückgeschriebenen Wert wird der Zeiger inkrementiert. Dadurch werden automatisch die zurückgewiesenen KWs linear gepackt, was einem integrierten Garbage-Kollektor Durchlauf entspricht. (siehe auch 5.3). Diese Implementierung ist besonders vorteilhaft und wird für sich genommen als schutzfähig angesehen.

### 5.4.2 Senden und Quittieren über eine Registerpipeline

Das hier beschriebene Verfahren dient der Sicherstellung einer einheitlichen Taktverzögerung zwischen gesendeten Mitteilungen und empfangenen Antworten darauf, wenn zwischen einem Sender und mehreren möglichen Empfängern von Mitteilungen unterschiedliche Anzahlen von Registern geschaltet sind. Ein Beispiel dafür ist, wenn Empfänger unterschiedlich weit vom Sender entfernt sind. Die gesendete Mitteilung darf dabei naheliegende Empfänger früher erreichen als weiter entfernte.

Um eine gleiche Laufzeit für alle Antworten zu erreichen, wird die Antwort vom Empfänger nicht direkt zurückgeschickt, sondern weiter bis zu einem vom Sender am weitesten entfernten Empfänger. Dieser Weg muss dabei genau so viele Register aufweisen, dass die Antwort zu dem Zeitpunkt ankommt, an dem auch eine mit der ersten Nachricht gleichzeitig abgeschickte an diesem Punkt angekommen wäre. Von hier aus erfolgt das Zurückschicken genauso, als wenn die Antwort in diesem Empfänger selbst erzeugt wurde.

Ob die Antwort tatsächlich bis zu einem am weitesten entfernten Empfänger geschickt wird oder in eine andere Kette mit Registern, die das gleiche Zeitverhalten hat, ist dabei unerheblich.

### 6. Hierarchisches CT-Protokoll

Wie in PACT10 beschrieben, sind VPU-Bausteine skalierbar, indem ein Baum aus CTs aufgebaut wird, an dessen Blättern jeweils die niedersten CTs (Low-Level-CTs) der PAs angeordnet sind. Eine CT mit dem ihr zugeordnetem PA wird PAC genannt. Generell können beliebige Daten oder Befehle zwischen den CTs ausgetauscht werden. Hierzu kann zunächst jedes technisch sinnvolle Protokoll verwendet werden.

Sofern die Kommunikation (Inter-CT-Kommunikation) allerdings das Starten von SubConf auf verschiedenen Low-Level-CTs innerhalb des CT-Baums (CTTREE) bewirkt, sollen die Anforderungen des FILMO-Prinzips sichergestellt sein, um die Deadlock-Freiheit zu gewährleisten.

Generell sind zwei Fälle zu unterscheiden:
1. Bei einer Low-Level-CT wird der Start einer SubConf angefordert, die ausschließlich lokal auf der Low-Level-CT und dem ihr zugeordneten PA läuft. Dieser Fall kann jederzeit innerhalb des CTTREE bearbeitet werden und bedarf keiner besonderen Synchronisation mit anderen LOW-LEVEL_CTs.
2. Bei einer Low-Level-CT wird der Start einer Konfiguration angefordert, die auf mehreren Low-Level-CTs und den ihnen zugeordneten PAs läuft. In diesem Fall muss darauf geachtet werden, dass der Aufruf der Konfiguration auf allen beteiligten CTs atomar, also untrennbar verläuft. Am einfachsten ist es, hinreichend sicherzustellen, dass während des Aufrufes und des Starts einer bestimmten SubConf keine andere gestartet wird. Ein derartiges Protokoll ist aus PACT10 bekannt. Es ist aber ein noch weiter optimiertes Protokoll wünschenswert.

Das Protokoll aus PACT10 ist ineffizient, sobald eine gepipelinete Übertragung bei höheren Frequenzen notwendig ist, da die Buskommunikation einer großen Latenzzeit unterliegt.

In den folgenden Abschnitten wird ein Verfahren ausgeführt. Wesentliche Aufgabe der Inter-CT-Kommunikation ist sicherzustellen, dass PAC übergreifende SubConf (Enhanced SubConfiguration = EnhSubConf) deadlockfrei gestartet werden. EnhSubConf sind SubConf die nicht nur auf einer PAC lokal, sondern auf mehreren PACs verteilt ausgeführt werden. Eine EnhSubConf beinhaltet mehrere SubConf, die jeweils über die beteiligten Low-Level-CTs gestartet werden. Als PAC wird dabei eine PAE-Gruppe mit wenigstens einer CT verstanden. Um die Deadlockfreiheit sicherzustellen, ist folgende Bedingung notwendig:
Damit mehrere EnhSubConf deadlockfrei auf identischen PACs laufen können, wird - zum Beispiel innerhalb des CTTREEs - durch einen geeigneten Mechanismus eine Priorisierung ihrer Ausführung festgelegt. Sofern dabei von mehreren unterschiedlichen EnhSubConf aus SubConf gestartet werden sollen, die auf ein und denselben PACs ablaufen, erfolgen auf den jeweiligen PACs die Starts dieser SubConf in der zeitlichen Reihenfolge entsprechend der Priorisierung der EnhSubConf.

Beispiel: Zwei EnhSubConf sollen gestartet werden, nämlich EnhSubConf-A auf den PACs 1,3,4,6 und EnhSubConf-B auf den PACs 3,4,5,6. Es muss sichergestellt sein, dass auf den PACs 3,4,6 immer EnhSubConf-A ausschließlich entweder vor oder nach EnhSubConf-B konfiguriert wird. Sollte beispielsweise auf PAC 3 und 4 EnhSubConf-A vor EnhSubConf-B und auf PAC 6 EnhSubConf-A nach EnhSubConf-B konfiguriert werden liegt ein Deadlock vor, da EnhSubConf-A nicht auf PAC 6 und EnhSubConf-B nicht auf PAC 3 und 4 gestartet werden könnte. Ein derartiger Fall wird im weiteren Kreuz oder gekreuzt genannt.

Es ist ausreichend zu verhindern, dass sich EnhSubConf kreuzen. Sollte eine algorithmische Abhängigkeit zwischen zwei EnhSubConf bestehen, also dass aufgrund des Algorithmus eine EnhSubConf nach der anderen gestartet werden muss, wird dies normalerweise dadurch aufgelöst, dass eine EnhSubConf die andere startet.

Ausführungsbeispiel für das erfindungsgemäße Protokoll:
Die Inter-CT-Kommunikation unterscheidet zwischen zwei Datenarten:
   a) einer SubConf, die die Konfigurationsinformation enthält,
   b) einer IDChain, die eine Liste aus zu startenden IDs enthält; zusammen mit der Angabe, auf welchem PAC die durch die ID referenzierte SubConf gestartet werden soll. Durch eine IDChain wird eine EnhSubConf auf die einzelnen auszuführenden SubConf übersetzt: ID_{EnhSubConf} IDChain{(PAC₁ : ID_{SubConf1}), ( PAC₂ : ID_{SubConf2}), ( PAC₃ : ID_{SubConf3}), ... (PACₙ : ID_{SubConfn})}

Die Inter-CT-Kommunikation unterscheidet zwischen folgenden Übertragungsmodi:
**REQUEST:** Der Start einer EnhSubConf wird von einer Low-Level-CT, bei der ihr übergeordneten CT angefordert - oder von einer übergeordneten CT bei der ihr wiederum Übergeordneten angefordert. Dies wiederholt sich so lange, bis entweder eine CT erreicht ist, die die IDChain gespeichert hat, oder die RootCT erreicht ist, die die IDChain immer im Speicher hat.
**GRANT:** Eine übergeordnete CT beauftragt eine tieferliegende CT mit dem Start einer SubConf. Entweder handelt es sich um eine einzelne SubConf oder mehrere SubConf gemäß der IDChain.
**GET:** Eine CT fordert bei der ihr übergeordneten CT eine SubConf durch Senden der entsprechenden ID an. Sofern die übergeordnete CT die SubConf gespeichert (gecached) hat, sendet sie diese an die tiefere CT, ansonsten fordert sie wiederum bei der ihr übergeordneten die SubConf an und sendet diese an die Tiefere nach Erhalt. Spätestens die RootCT hat die SubConf gespeichert.
**DOWNLOAD:** Das Laden einer SubConf auf eine tiefergelegene CT.

REQUEST läuft so lange den CTTREE hoch, bis entweder die RootCT, das heißt die Wurzel (die höchste CT) im CTTREE, erreicht ist, oder eine CT im CTTREE die IDChain gespeichert hat. Die IDChain kann nur von einer CT gespeichert werden, die sämtliche in der Liste der IDChain beeinhalteten CTs, als Blätter oder Zweige besitzt. Die RootCT hat in ihrem Speicher (CTR, vgl. PACT10) grundsätzlich Zugriff auf die IDChain. Danach wird GRANT an alle in der IDChain aufgelisteten CTs gesendet. Das Senden von GRANT geschieht atomar, d.h. alle Zweige einer CT erhalten GRANT entweder gleichzeitig oder sequentiell, jedoch ohne Unterbrechung durch eine andere Aktivität zwischen einer der betreffenden CTs und irgend einer anderen, die die Reihenfolge der Starts der SubConf verschiedener EnhSubConf auf den PACs beeinflusst.

Wichtig ist, dass eine Low-Level-CT, bei der GRANT eintrifft, sofort und unterbrechungsfrei die entsprechende SubConf in das PA konfiguriert, in den FILMO schreibt oder in eine Liste schreibt, aus der die Konfigurationsreihenfolge hervorgeht, das heißt, wann genau die SubConf auf den FILMO geschrieben bzw. in das PA konfiguriert werden muss. Die Reihenfolge ist wesentlich, um einen Deadlock zu vermeiden. Sofern die SubConf nicht bereits in der Low-Level-CT gespeichert ist, muss die Low-Level-CT die SubConf mittels GET bei der ihr übergeordneten CT anfordern. Um dem erfindungsgemäßen Verfahren zu genügen, dürfen zwischen GET und dem Eintreffen der SubKonf (DOWNLOAD), sofern es der Algorithmus zulässt oder erfordert, lokale SubConf (d.h. SubConf die nicht von einer EnhSubConf aufgerufen werden sondern nur das lokale PA betreffen) konfiguriert oder in den FILMO geladen werden. SubConf einer weiteren EnhSubConf, die von einem späteren eintreffenden GRANT gestartet werden, dürfen ausschließlich nach dem Eintreffen von DOWNLOAD, sowie der Konfiguration bzw. dem Laden in den FILMO gestartet werden.

Beispiele für den Aufbau von SubConf sind aus den Patentanmeldungen PACT05 und PACT10 bekannt. Ein wesentlicher Unterscheid des erfindungsgemäßen Verfahrens ist die separate Behandlung von Aufrufen von SubConf durch IDChains. Dabei ist eine IDChain eine besondere Ausgestaltung einer SubConf mit folgender Eigenschaft:
Aus Performancegründen ist es sinnvoll, einzelne SubConf innerhalb des CTTREE zu speichern, sozusagen zu cachen. Bei Bedarf muss eine SubConf dann nicht komplett neu geladen werden, sondern wird von einer CT, die die entsprechende SubConf cached, direkt an die untergeordneten CT gesendet. Bei einer IDChain ist wesentlich, dass von einer zentralen CT aus, alle untergeordneten CTs entsprechend des erfindungsgemäßen Protokolls geladen werden. Dazu ist es am Effizientesten, wenn die sich am Tiefsten im CTTREE befindende CT, die noch sämtliche in der IDChain benannten PACs als Blätter besitzt, die IDChain cached. Noch tiefer liegende CTs dürfen nicht mehr cachen, da sie nicht mehr zentral über allen PACs der IDChain liegen. Höherliegende CTs verlieren an Effizienz, da ein längerer Kommunikationspfad notwendig ist. Hat ein Request eine CT mit vollständiger IDChain für die angeforderte EnhSubConf erreicht, löst diese CT GRANTs an die beteiligten tieferliegenden CTs aus, wobei die Informationen aus der IDChain derart aufgeteilt werden (Splitting), dass zumindest der Teil jeweils übertragen wird, der in den jeweiligen Zweigen benötigt wird. Um bei diesem Splitting das Kreuzen zu verhindern, muss sichergestellt sein, dass auch die nächste CT Stufe alle GRANTs ihres Teils der EnhSubConf auslöst, und zwar ohne von GRANTs anderer EnhSubConf unterbrochen zu werden. Eine Möglichkeit dies zu realisieren ist, die betreffenden Teile der IDChain atomar zu übertragen. Um das Caching von IDChains zu steuern ist es sinnvoll, eine geteilte IDChain während der Übertragung zu kennzeichnen, beispielsweise durch ein "SPLIT" Flag.

Eine IDChain wird geteilt, sobald sie auf eine CT geladen wird, die innerhalb der Hierarchie des CTTREE nicht mehr zentral über sämtlichen innerhalb der IDChain referenzierten PACs liegt. In diesem Fall wird die IDChain nicht mehr von einer einzelnen CT innerhalb der Hierarchie verwaltet und gecached. Mehrere CTs verarbeiten jeweils den Teil der IDChain, der jeweils die PACs enthält, die Blätter der jeweiligen CT sind. Ein REQUEST muss immer bis zu einer CT weitergeleitet werden, die alle betreffenden PACs verwaltet. Das bedeutet, die hierarchisch erste und auch effizienteste CT (von den PACs aus betrachtet), die REQUEST in GRANT umwandeln kann, ist die erste CT in aufsteigender Ordnung ausgehend von den Blättern, die eine komplette ungeteilte IDChain besitzt.

Die Verwaltung der Liste mit den Zuweisungen von PAC zu ID bedarf keiner weiterer Erläuterung. Die Liste kann entweder von einem, innerhalb einer CT ablaufenden, Programm verarbeitet werden, oder aus einer Reihe von Assembleranweisungen zur Ansteuerung der untergeordneten CTs ausgestaltet sein.
Eine komplette IDChain ist folgendermaßen aufgebaut:
ID_{Enhsubconf} IDChain{*SPLTT*, (PAC₁ : ID_{SubConf1}), ( PAC₂ : ID_{Sub-Conf2})_{,} ( PAC₃ : ID_{SubConf3}), ... (PACₙ : ID_{SubConfn})}

### 6.1 Precachen von SubConf

Innerhalb des CTTREEs werden SubConf nach bestimmten Bedingungen vorgeladen, d.h. gecached bevor sie eigentlich benötigt werden. Dieses Verfahren steigert die Performance innerhalb des CTTREE erheblich.

Ausführungsbeispiele:
Es stehen eine Vielzahl von precache-Anforderungen zur Verfügung. Die zwei häufigsten sind:
   a) Innerhalb einer aktuell auf einer Low-Level-CT verarbeiteten SubConf ist eine Ladeaufforderung für eine weitere SubConf programmiert .
   b) Während der Datenverarbeitung innerhalb des PAs wird entschieden welche SubConf vorzuladen ist. Die dem PA zugeordnete CT wird durch einen Trigger, der innerhalb der CT entsprechend auf die ID einer SubConf übersetzt wird, aufgefordert eine SubConf vorzuladen. Es ist auch möglich, dass die ID einer SubConf im PA berechnet wird oder vorher dort konfiguriert wurde. Dann enthält die Mitteilung an die zugeordnete CT die ID direkt.

Die zu ladende SubConf wird nur gecached, jedoch nicht gestartet. Der Start erfolgt erst zu dem Zeitpunkt an dem die SubConf ohne das vorherige cachen gestartet worden wäre. Der Unterschied ist, dass zum Zeitpunkt der Startanforderung die SubConf bereits in der Low-Level-CT oder einer der mittleren. CTs gespeichert ist und daher entweder sofort konfiguriert wird oder sehr schnell auf die Low-Level-CT geladen und danach gestartet wird. Das zeitaufwendige Durchlaufen des gesamten CTTREE entfällt.

Durch einen Compiler, der die SubConf generiert, ist entscheidbar, welche SubConf jeweils als nächste gecached werden sollten. Innerhalb des Programmablaufgraphen ist ersichtlich, welche SubConf als nächste ausgeführt werden könnten. Diese werden jeweils gecached. Die Programmausführung entscheidet zur Laufzeit, welche der gecachten SubConf tatsächlich gestartet werden.
Entsprechend des Mechanismus bestimmte SubConf vorzuladen (precache) ist ein Mechanismus implementiert, der gecachte

SubConf entfernt, um im Speicher der CTs Platz für andere SubConf zu schaffen. Ebenso wie das Vorladen ist das Löschen bestimmter SubConf durch den Compiler anhand des Programmausführungsgraphen vorhersagbar.

Zusätzlich sind in den CTs die üblichen Mechanismen zum Löschen von SubConf implementiert (z.B. der zuletzt Konfigurierten, der zuerst Konfigurierte, der am seltensten Konfigurierten (siehe PACT10)), um den Speicher der CTs entsprechend zu verwalten. Wesentlich ist, dass nicht nur explizit vorgeladene SubConf löschbar sind, sondern generell jede SubConf in einem CT-Speicher. Sofern der Garbage-Kollektor die bestimmte SubConf bereits entfernt hat, verliert die explizite Löschung ihre Gültigkeit und wird ignoriert.

Eine explizite Löschung kann durch einen Befehl bewirkt werden, der von einer beliebigen SubConf gestartet werden kann. Dies beinhaltet eine beliebige CT innerhalb des Baumes, die eigene CT oder sogar die explizite Löschung derselben SubConf (d.h. das Löschen der eigenen SubConf in der der Befehl steht, wobei dabei das korrekte Terminieren sichergestellt werden muss).

Eine weitere Möglichkeit der expliziten Löschung ist, innerhalb der PAs aufgrund eines bestimmten Zustandes einen Trigger zu generieren, der an die CT weitergeleitet wird und als Anforderung zur expliziten Löschung ausgewertet wird.

### 6.2 Abhängigkeiten zwischen den PAEs

Für den Fall, dass die Reihenfolge, in der PAEs verschiedener PACs, die zu einer EnhSubConf gehören, konfiguriert werden, nicht unerheblich ist, wird zur Sicherstellung der Einhaltung dieser zeitlichen Abhängigkeit ein weiteres Verfahren vorgeschlagen. Da bei mehreren PACs definitionsgemäß auch mehrere CTs existieren, verständigen sich diese untereinander, um die Information auszutauschen, ob bisher alle PAEs, die vor den in jeder PAC nächsten konfiguriert sein müssen, bereits ihr GO aus derselben Konfiguration akzeptiert haben.

Eine Möglichkeit, die zeitlichen Abhängigkeiten aufzulösen und das Senden von nicht erlaubten GOs zu verhindern, ist, zwischen den CTs das exklusive Recht zum Konfigurieren auszutauschen und die KW so umzuordnen, dass eine korrekte Reihenfolge durch die Abfolge ihrer Konfiguration und die Übergabe des Konfigurationsrechts sichergestellt wird. Je nachdem, wie stark die Abhängigkeiten sind, kann es auch genügen, wenn beide CTs bis zu einem Synchronisationspunkt parallel ihr zugeordnetes PA konfigurieren, dann aufeinander warten und danach bis zum nächsten Synchronisationspunkt oder - falls nicht vorhanden - bis zum Ende der EnhSubConf parallel weiter konfigurieren.

### 7. SubConf Makros

Besonders effizient ist das Cachen von SubConf, wenn möglichst viele SubConf gecached werden können. Insbesondere im Hinblick auf Hochsprachencompiler ist der effiziente Einsatz des Cachings sinnvoll, da Compiler auf Assemblerebene - in der VPU-Technologie SubConf Ebene - häufig wiederkehrende Routinen erzeugen.

Um SubConf möglichst häufig wieder zu verwenden, sollen SubConf-Makros (SubConfM) mit folgender Eigenschaft eingeführt werden
- es werden keine absoluten PAE-Adressen angegeben. Vielmehr ist eine SubConf ein vorgelayoutetes Makro, das lediglich relative Adressen verwendet;
- applikationsabhängige Konstanten werden als Parameter übergeben.

Erst zu dem Zeitpunkt, an dem eine SubConf in das PA geladen wird, werden die absoluten Adressen berechnet. Parameter werden durch ihre tatsächlichen Werte ersetzt. Dazu wird eine modifizierte Kopie der ursprünglichen SubConf derart erstellt, dass entweder (i) diese Kopie in den Speicher der CT abgelegt wird (integrierter FILMO) oder (ii) sofort in das PA geschrieben wird und nur die zurückgewiesenen KWs (REJ) in den FILMO geschrieben werden (separater FILMO). Besonders im Fall (ii) bietet sich aus Performancegründen eine Ausgestaltung des Adressaddierers in Hardware an, der direkt am Interfaceport der CT zum PA/FILMO sitzt. Ebenso sind Hardware Implementierungen der Parametertransformation denkbar, beispielsweise durch eine Lookup-Tabelle, die vor der Konfiguration geladen wird.

### 8. Zurückspeichern der Cachestatistik

Aus WO 99/44120 (PACT10) ist eine applikationsabhängige Cachestatistik und -steuerung bekannt. Dieses Verfahren bietet ein zusätzlich eine datenabhängige Optimierung des Cacheverhaltens, da sich das datenabhängige Programmverhalten direkt in der Cacheoptimierung ausdrückt.

Nachteil des bekannten Verfahrens ist, dass sich das Cacheverhalten erst während der Laufzeit optimiert. Bei einem Neustart der Applikation ist die Statistik verloren. Oftmals noch kritischer ist, dass beim Entfernen einer SubConf aus dem Cache auch deren Statistik verloren geht und selbst innerhalb der gleichen Applikationsverarbeitung bei einem erneuten Aufruf nicht mehr zur Verfügung steht.

Erfindungsgemäß wird vorgeschlagen die Cachestatistik zusammen mit der betreffenden ID beim Terminieren einer Applikation oder beim Entfernen einer SubConf aus dem Cache zunächst mittels der bekannten Inter-CT-Kommunikation solange an die nächsthöhere CT zu senden, bis die ROOT-CT die jeweilige Statistik erhält. SubConfDiese speichert die Statistik in einem geeigneten Speicher, je nach Anwendung in einem flüchtigen, nicht flüchtigen oder Massenspeicher. Der Zugriff auf den Speicher erfolgt gegebenenfalls über einen Host. Die Speicherung erfolgt dabei derart, dass sie der jeweiligen SubConf derart zugeordnet ist, dass bei einem Neuladen der SubConf die Statistik mitgeladen werden kann.

SubConf Bei einem Neustart der SubConf wird sie mit an die Low-Level-CT geladen.

Der Compiler baut entweder eine neutrale leere Statistik auf oder generiert nach einem geeigneten Verfahren bereits eine Statistik die als zunächst geeignet erscheint. Die vom Compiler vorgegebene Statistik wird dann gemäß dem beschriebenen Verfahren zur Laufzeit optimiert, gespeichert und steht bei einem weiteren Aufruf der Applikation in der optimierten Fassung zur Verfügung.

### SubConf

Sofern eine SubConf von mehreren Applikationen oder innerhalb einer Applikation von unterschiedlichen Low-Level-CTs benutzt wird (oder von unterschiedlichen Routinen aus aufgerufen wird) ist das Führen einer Cache-Statistik nicht sinnvoll, da davon ausgegangen werden muss, dass das jeweils unterschiedliche Aufruf- und Ablauf-Verhalten eine jeweils unterschiedliche Statistik hervorrufen wird.

Je nach Anwendung wird deshalb entweder auf eine Statistik verzichtet oder ein SubConfM verwendet.

Bei Verwendung eines SubConfM wird die Parameterübergabe derart erweitert, dass die Cachestatistik als Parameter übergeben wird. Terminiert eine SubConfM wird die Cachestatistik an die, die SubConfM vormals aufrufende SubConf (ORIGIN), zurückgeschrieben. Die Parameter werden dann zusammen mit der Cachestatistik von ORIGIN bei der Terminierung von ORIGIN gemäß dem beschriebenen Verfahren gespeichert und bei einem nachfolgenden Aufruf entsprechend geladen und als Parameter wiederum an die SubConfM übergeben.

Das Führen und Speichern von applikationsbezogenen Cachestatistiken ist grundsätzlich auch für Mikroprozessoren, DSPs, FPGAs und ähnliche Bausteine geeignet.

### 9. Aufbau des Konfigurationsbussystems

In PACT07 wird ein Datenbussystem beschrieben, das adressiert und gepipelinet aufgebaut ist. Dieses Bussystem ist generell auch zur Übertragung von Konfigurationsdaten geeignet.

Um Daten und Konfigurationen über dasselbe Bussystem zu übertragen, werden Statussignale eingeführt, die die Art der übertragenen Daten anzeigen.

Das Bussystem wird dabei derart ausgestaltet, dass die CT Konfigurations- und Datenregister von einer zuvor von der CT adressierten PAE optional zurücklesen kann.

Über das Bussystem werden sowohl globale Daten im Sinne von PACT07, als auch KWs übertragen. Die CT agiert als eigener Busknoten. Ein Statussignal kennzeichnet den Übertragungsmodus. Folgender Aufbau mit den Signalen S0 und S1 ist beispielsweise möglich:

| | | |
|---|---|---|
| S1 | S0 | Bedeutung |
| 0 | 0 | Daten schreiben |
| 0 | 1 | Daten lesen |
| 1 | 0 | Schreiben eines KW und/oder einer PAE-Adresse |
| 1 | 1 | Rücksenden eines KW oder beliebigen Registers von der adressierten PAE |

Zum Busprotokoll (ACK) nach PACT07 wird das Signal REJ hinzugefügt, um der CT Zurückweisungen gemäß des FILMO-Protokolls zu signalisieren.

### 10. Zusammenfassen von einzelnen Registern

Zur logischen Trennung von Konfigurationsdaten werden unabhängige Konfigurationsregister verwendet. Die logische Trennung ist besonders für die differentielle Konfiguration erforderlich, da logisch getrennte Konfigurationsdaten für gewöhnlich bei der Durchführung einer differentiellen Konfiguration nicht bekannt sind. Dadurch entsteht eine große Menge an einzelnen Konfigurationsregistern, wobei jedes einzelne vergleichsweise wenig Information beinhaltet. Im folgenden Beispiel sollen die 3-bitigen Konfigurationswerte KW-A,B,C,D unabhängig voneinander geschrieben oder modifiziert werden können:

| | | | | |
|---|---|---|---|---|
| 0000 | 0000 | 0000 | 0 | KW-A |
| 0000 | 0000 | 0000 | 0 | KW-B |
| 0000 | 0000 | 0000 | 0 | KW-C |
| 0000 | 0000 | 0000 | 0 | KW-D |

Ein derartiger Registersatz ist ineffizient, da die Bandbreite des CT-Busses nur zu einem Bruchteil benutzt wird.

Der Aufbau von Konfigurationsregistern kann erheblich optimiert werden, indem jeweils einem Konfigurationswert ein Enable zugeordnet wird, das anzeigt ob der Wert bei dem aktuellen Konfigurationstransfer überschrieben werden soll.

Die Konfigurationswerte KW-A,B,C,D des obigen Beispiels werden in einem Konfigurationsregister zusammengefasst. Jedem Wert wird ein Enable zugeordnet. Ist beispielsweise EN-x logisch "0" wird KW-x beim aktuellen Transfer nicht verändert, ist ENx logisch "1" wird KW-x durch den aktuellen Transfer überschrieben.

| | | | | | | | |
|---|---|---|---|---|---|---|---|
| En-A | KW-A | En-B | KW-B | En-C | KW-C | En-D | KW-D |

### 11. Wave Rekonfiguration (WRC)

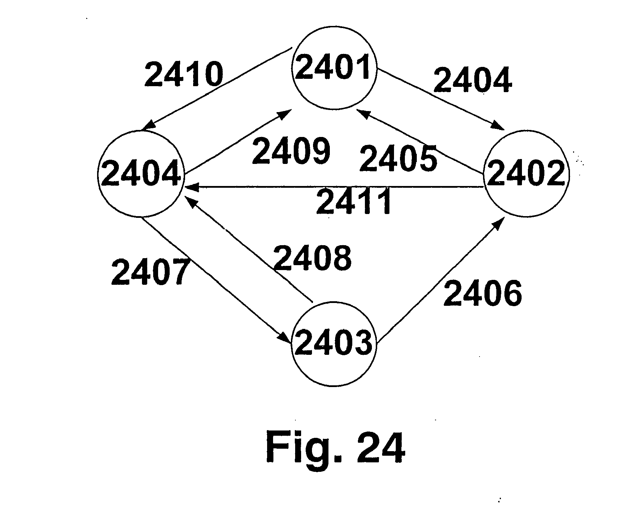

Aus PACT13 ist ein Rekonfigurationsverfahren (Wave-Rekonfiguration = WRC) bekannt, bei welchem die Rekonfiguration direkt und zeitlich mit dem Datenstrom synchronisiert ist (Figur 24 in PACT13).

Wesentliche für die Funktion der Wave Rekonfiguration ist, dass unkonfigurierte PAEs Daten und Trigger weder annehmen noch senden. Das bedeutet, dass sich eine unkonfigurierte PAE vollkommen neutral verhält. Dies kann in der VPU-Technologie durch die Verwendung der Handshake-Signale (RDY/ACK) für Trigger- und Datenbusse erreicht werden(vgl. PACT02). Eine unkonfigurierte PAE generiert dabei
- keine RDYs, wodurch keine Daten oder Trigger gesendet werden,
- keine ACKs, wodurch keine Daten oder Trigger empfangen werden.

Diese Funktionsweise ist nicht nur für die Wave-Rekonfiguration hilfreich, sondern ist eine der möglichen Grundlagen für die Runtime-Rekonfigurierbarkeit der VPU-Technologie.

Im Folgenden wird eine Erweiterung des Verfahrens ausgeführt: Die Rekonfiguration wird mit der laufenden Datenverarbeitung synchronisiert. Innerhalb der Datenverarbeitung im PA ist entscheidbar,
i. welche nächste SubKonf bei der Rekonfiguration notwendig wird;
ii. zu welchem Zeitpunkt die SubConf aktiv werden muss, also mit welchem Datenpaket (ChgPkt) die SubKonf verknüpft werden muss.

Die Entscheidung, welche Konfiguration geladen wird, wird durch Bedingungen gefällt und durch Trigger (WaveConfigurationPreload = WCP) repräsentiert.

Die Verknüpfung der Datenpakete mit den KWs einer SubConf wird dabei durch die Datenbus- (RDY/ACK) und CT-Bus-(CHECK,ACK/REJ) Protokolle sichergestellt. Ein zusätzliches Signal (WaveConfigurationTrigger = WCT) zeigt an, bei welchem Datenpaket (ChgPkt) umkonfiguriert werden soll und ggf. welche neue Konfiguration ausgeführt, bzw. geladen werden soll. WCT kann durch einfache zusätzliche Leitungen oder das Triggersystem der VPU-Technologie realisiert werden. Mehrere WCT können gleichzeitig im PA verwendet werden, wobei jedes Signal eine andere Umkonfiguration steuern kann.

### 11.1 Steuerung der Wave Reconfiguration

Es kann zwischen zwei applikationsabhängigen WRC unterschieden werden:
A1) Wave Rekonfiguration innerhalb einer SubConf
A2) Wave Rekonfiguration unterschiedlicher SubConf

Hardwaretechnisch wird bevorzugt zwischen zwei grundlegenden Implementierungsarten unterschieden:
I1) Implementierung in der CT und Ausführung jeweils nach Anforderung
I2) Implementierung durch zusätzliche Konfigurationsregister (WRCReg) in den PAEs. Mögliche Ausgestaltungen der WRCReg werden nachfolgend beschrieben. Die WRC werden entweder
   a) bei der ersten Konfiguration der betreffenden SubConf von der CT vorgeladen,
   b) oder von der CT während der Ausführung einer SubConf abhängig von eintreffenden WCP vorgeladen.

Während der Datenverarbeitung werden die jeweils gültigen WRCReg durch ein oder mehrere WCT selektiert.

Im Folgenden soll die Auswirkung der Wave-Rekonfiguration auf das FILMO-Prinzip diskutiert werden:

### 11.1.1 Durchführung der WRC nach A1

Innerhalb ein und derselben SubConf (A1) ist die Rekonfiguration mittels WRC jederzeit möglich. Zunächst wird die SubConf normal konfiguriert, wodurch das FILMO-Prinzip sichergestellt ist. Eine Forderung ist, dass WRCs während der Programmausführung ausschließlich bereits für die SubConf alloziierte Ressourcen verwenden.

### Fall I1)

Die WRC wird durch differentielle Konfiguration der betreffenden PAEs durchgeführt. WCP wird an die CT geleitet. Abhängig vom WCP wird auf ein Token innerhalb der konfigurierten SubConf gesprungen:
beginSubConf
main:
   PAE 1, CHECK&GO
   PAE 2, CHECK&GO
   PAE n, CHECK&GO
   set TriggerPort1 // WCT 1
   set TriggerPort2 // WCT 2
scheduler:
   on TriggerPort1 do main1 // Jump depending on WCT
   on TriggerPort2 do main2 // Jump depending on WCT
wait:
   wait for trigger main1:
      PAE 1, DIFFERENTIAL&GO
      PAE 2, DIFFERENTIAL&GO
      PAE n, DIFFERENTIAL&GO
   wait for trigger main2:
      PAE 1, DIFFERENTIAL&GO
      PAE 2, DIFFERENTIAL&GO
      PAE n, DIFFERENTIAL&GO
   wait for trigger endSubConf

Das Interface (TrgIO) zwischen CT und WCP wird durch "set TriggerPort" konfiguriert. TrgIO verhält sich gemäß der FILMO-Protokolls wie eine PAE gegenüber der CT, d.h. TrgIO entspricht exakt dem CHECK,DIFFERENTIAL,GO Protokoll und antwortet für jeden Trigger einzeln oder eine Gruppe gemeinsam mit ACK oder REJ.
Je nachdem ob ein bestimmter Trigger
bereits konfiguriert ist mit REJ
oder
bereit zur Konfiguration ist mit ACK.

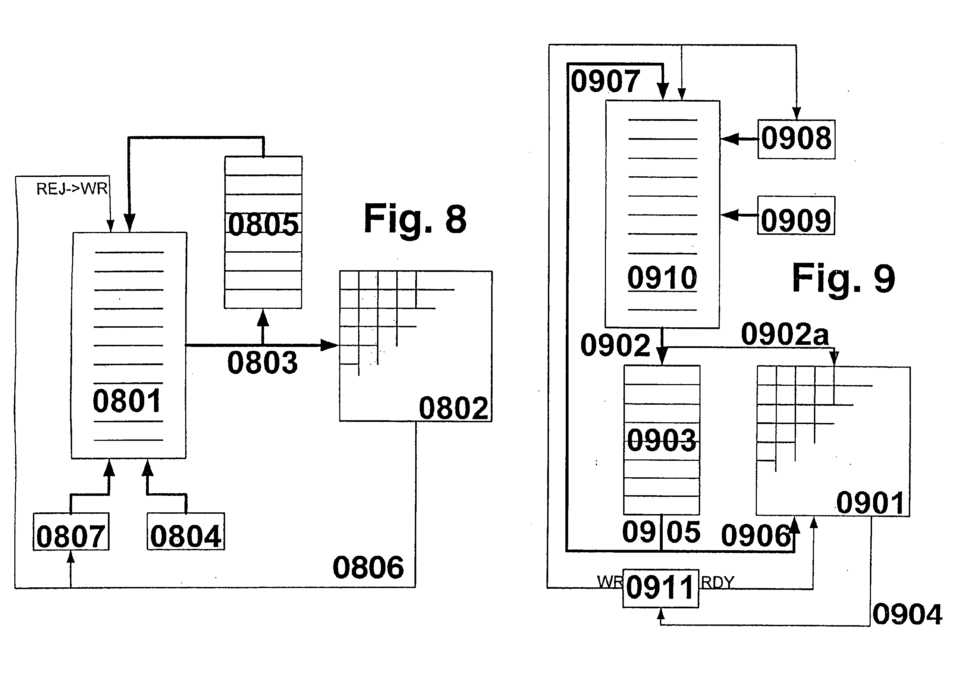

Figur 8 aus PACT10 ist um dieses Protokoll entsprechend zu erweitern.

Bei Eintreffen von WCT startet die jeweilige PAE die entsprechende Konfiguration.

### Fall I2)

### Entweder

werden die WRCReg bereits während der Konfiguration beschrieben und der WCP entfällt, da bereits die komplette
SubConf in die jeweilige PAE geladen ist
oder
abhängig durch bestimmten WCP werden von der CT bestimmte WRC in unterschiedliche in der WRC definierte WRCReg geladen. Dies ist besonders dann notwendig, wenn ausgehend von einer SubConf durch auftretende WRT in mehrer unterschiedliche WRC verzweigt wird als physikalische WRCReg vorhanden sind.

Die TriggerPorts innerhalb der PAEs werden konfiguriert, dass durch bestimmte eingehende WRT bestimmte WRCReg selektiert werden:
beginSubConf
main:
   PAE1_TriggerPort1
   PAE1_TriggerPort2
   PAE1_WRCReg1
   PAE1_WRCReg2
   PAE1_BASE, CHECK&GO
   PAE2_TriggerPort1
   PAE2_TriggerPort2
   PAE2_WRCReg1
   PAE2_WRCReg2
   PAE2_BASE, CHECK&GO
   PAEn_TriggerPort1
   PAEn_TriggerPort2
   PAEn_WRCReg1
   PAEn_WRCReg2
   PAEn_BASE, CHECK&GO endSubConf

### 11.1.2 Durchführung der WRC nach A2

### Fall I1)

Die Durchführung einer WRC zwischen unterschiedlichen SubConf durch die CT entspricht prinzipiell A1/I1. Wesentlich ist, dass die Triggerports und der CT-interne Ablauf dem FILMO-Prinzip entsprechen. KWs die von den PAEs zurückgewiesen wurden (REJ) werden auf den FILMO geschrieben. Die Grundlagen sind aus PACT10 bereits bekannt.

Sämtliche WCP werden durch die CT ausgeführt, wodurch eine deadlockfreie (Re-)Konfiguration gewährleistet ist.

Ebenso wird der Zeitpunkt der Rekonfiguration, der durch WCT gekennzeichnet ist an die CT geleitet und von der CT atomar behandelt, d.h. alle durch die Rekonfiguration betroffenen PAEs erhalten die Rekonfigurationsaufforderung durch WCT entweder zeitgleich oder zumindest ohne Unterbrechung durch eine andere Rekonfigurationsaufforderung, wodurch die Deadlock-Freiheit wiederum gewährleistet ist.

Weiterführende Ausgestaltungen sind innerhalb dieser Schrift vorausgehend beschrieben.

### Fall I2)

### Entweder

werden die WRCReg bereits während der Konfiguration beschrieben und der WCP entfällt, da bereits die komplette SubConf in die jeweilige PAE geladen ist
oder
abhängig durch bestimmten WCP werden von der CT bestimmte WRC in unterschiedliche in der WRC definierte WRCReg geladen. Dies ist besonders dann notwendig, wenn ausgehend von einer SubConf durch auftretende WRT in mehrer unterschiedliche WRC verzweigt wird als physikalische WRCReg vorhanden sind.

Es muss verhindert werden, dass mehrere WCT zu unterschiedlichen Zeiten an unterschiedliche PAEs geführt werden, da dadurch Deadlocks entstehen. Beispiel: WCT1 einer SubConf SA erreicht bei Takt t1 die PAE p1, WCT2 einer SubConf SB erreicht zu dem Zeitpunkt die PAE p2. Die PAEs werden entsprechend konfiguriert. Zum Zeitpunkt t2 erreicht WCT1 p2 und WCT2 p1. Ein Deadlock ist eingetreten. Es soll noch darauf hingewiesen werden, dass dieses Beispiel prinzipiell auch auf A2-I1 angewendet werden kann, weshalb dort WCT über den Triggerport der CT geführt und von der CT abgewickelt wird.

Ein Deadlock wird auch verhindert, indem die von unterschiedlichen PAEs (Quellen) generierten WCT von einer zentrale Instanz (ARB) derart priorisiert werden, dass zu einem Takt exakt ein WCT an die betreffende PAEs gesendet wird. Verschiedene Verfahren sind zur Priorisierung anwendbar, beispielhaft sollen einige genannt werden:
a) Verwendung eines Arbiters nach dem Stand der Technik, insbesondere eignet sich der Round-Robin-Arbiter nach PACT10. Die exakte zeitliche Reihenfolge des Auftretens der WCT geht dabei für gewöhnliche verloren.
b) Sofern die zeitliche Reihenfolge eingehalten werden soll, bieten sich beispielsweise folgende Verfahren an:
   b1) Ein FIFO speichert zunächst die eingehenden WCT entsprechend ihrer Reihenfolge. Zeitgleich eingehende WCT werden gemeinsam gespeichert, treten zu einem Zeitpunkt keine WCT auf, wird kein Eintrag erzeugt. Ein dem FIFO nachgeschalteter Arbiter wählt einen der Einträge aus, sofern mehrere gleichzeitig auftraten.
   b2) Aus PACT18 ist ein Verfahren bekannt, das eine zeitliche Sortierung von Ereignissen mittels einer zugeordneten Zeitinformation (Timestamp) ermöglicht. Durch Auswerten der Timestamp kann die zeitlich korrekte Abfolge der WCT sichergestellt werden.

Durch eine geeignete Weiterleitung der WCT von ARB an die betreffenden PAEs wird sichergestellt, dass die priorisierten WCT in der korrekten Reihenfolge bei den PAEs ankommen. Die einfachste Möglichkeit die Reihenfolge sicherzustellen ist, dass sämtliche von ARB abgehenden Trigger zu den jeweiligen PAEs exakt dieselbe Länge und Laufzeit aufweisen. Dies wird durch eine geeignete Programmierung oder ein geeignetes Layout durch einen Router sichergestellt, indem die Leitungsführung entsprechend abgeglichen wird und an den entsprechenden Punkten Register zum Abgleich der Latenz eingesetzt werden. Auch zur Sicherstellung der korrekten Weiterleitung kann das nach PACT18 bekannte Verfahren zur zeitlichen Synchronisation von Informationen verwendet werden.

Eine explizite Priorisierung der WCP ist nicht notwendig, da die an die CT geführten WCP durch das FILMO-Prinzip innerhalb der CT wie bereits erläutert ordentlich abgearbeitet werden. Die Einhaltung der zeitlichen Reihenfolge kann gegebenenfalls insbesondere entsprechend des FILMO-Prinzipes (vgl. 2.1e) eingehalten werden.

### 11.1.3 Anmerkung für sämtliche Fälle

Die für die Wave-Rekonfiguration zusätzlichen Konfigurationsregister der PAEs verhalten sich entsprechend des FILMO-Prinzips, d.h. die Register unterstützen die beschriebenen Zustände und implementierten Abläufe und reagieren entsprechend auf die Protokolle (z.B. CHECK/ACKREJ).

### 11.2 Rekonfigurationsprotokolle und Aufbau der WRCReg

An drei alternative Rekonfigurationsprotokollen soll das Verfahren der Wave Reconfiguration genauers erläutert werden:
**Normales CT-Protokoll:** Die CT rekonfiguriert erst nach Eintreffen einer Rekonfigurationsanforderung jede PAE einzeln,
wobei die CT für jede PAE, die ChgPkt erreicht, eine Rekonfigurationsanforderung erhält. Diese Methode ist ineffizient, da der Kommunikationsaufwand insbesondere für gepipelinte Bussysteme sehr hoch ist.

**Synchronisierte Pipeline:** Dieses Protokoll ist bereits wesentlich effizienter. Der gepipelinte CT-Bus wird als Puffer verwendet, indem das einer PAE zugeordnete Pipeline-Register, die KW dieser PAE so lange speichert, bis diese PAE die KW aufnehmen kann. Die CT-Bus Pipeline (CBP) wird damit zwar blockiert, kann aber komplett mit den KWs der Wave Rekonfiguration gefüllt werden.
a) Sofern die CBP in dieselbe Richtung wie die Datenpipeline verläuft, gehen jeweils einige Takte Latenzzeit verloren, bis, nachdem eine PAE ein KW aufgenommen hat, das KW der direkt nachfolgenden PAE an deren Pipeline-Register eintrifft.
b) Verläuft die CBP entgegen der Datenpipeline, kann die CBP komplett mit KW gefüllt werden, die bereits an der bestimmten PAE anstehen. Damit ist eine Wave-Rekonfiguration ohne zeitliche Verzögerung möglich.

**Synchronisiertes Schattenregister** (effizientestes Protokoll): Die CT schreibt sofort nach Auswahl der SubConf (i) vor Eintreffen von ChgPkt (ii) die neuen KWs in Schattenregister sämtlicher PAEs. Die Schattenregister können in beliebiger Ausgestaltung implementiert sein. Folgende Möglichkeiten bieten sich z.B. besonders an: a) Vor die eigentlichen Konfigurationsregister geschaltete Registerstufe, b) paralleler Registersatz der über Multiplexer ausgewählt wird, c) FIFO-Stufe vor den eigentlichen Konfigurationsregistern. Zu dem Zeitpunkt an dem ChgPkt (ii) bei einer PAE eintrifft, kopiert sie das Schattenregister in das entsprechende Konfigurationsregister. Das Kopieren geschieht im Optimalfall derart, dass kein Arbeitstakt verloren geht. Sollte trotz Eintreffens von ChgPkt das Schattenregister nicht beschrieben sein (also leer) setzt die Datenverarbeitung bis zum Eintreffen der KW im Schattenregister aus. Bei Bedarf wird die Rekonfigurationsanforderung mit dem ChgPkt innerhalb einer Pipeline von einer PAE zu nächsten weitergeleitet.

### 12. Formen der Parallelität und sequentielle Bearbeitung

Durch eine hinreichend hohe Rekonfigurationsperformance lassen sich sequentielle Rechenmodelle in Arrays abbilden, indem die Low-Level-CTS quasi einen konventionellen Codefetcher darstellen und das Array als VLIW-ALU mit mikroprogrammierbarer Vernetzung arbeiten.

Weiterhin lassen sich sämtliche Formen der Parallelität in Arrays aus Rechenelementen abbilden:
**Pipelining:** Pipelines lassen sich durch in Reihe geschaltete PAEs aufbauen. Die VPU-gemäßen Protokolle erlauben die einfache Steuerung der Pipeline.
**Instruction Level Parallelität:** Parallele Datenpfade sind durch parallel geschaltete PAEs aufbaubar. Die VPU-gemäßen Protokolle und besonders die Triggersignale erlauben die einfache Steuerung.
**SMP, Multitasking und Multiuser:** Durch die Deadlockfreiheit der Konfigurationsverfahren können unabhängige Tasks automatisch parallel in einem PA ausgeführt werden.

Bei ausreichender Anzahl von PAEs können auch alle wesentlichen Teile konventioneller Mikroprozessoren auf das PA konfiguriert werden. Dann kann eine sequentielle Bearbeitung einer Aufgabe auch ohne CT erfolgen. Diese muss erst wieder aktiv werden, wenn der konfigurierte Prozessor eine teilweise andere Funktionalität, beispielsweise in der ALU, erhalten oder komplett ersetzt werden soll.

### 13. Ausführungsbeispiele und Diagramme

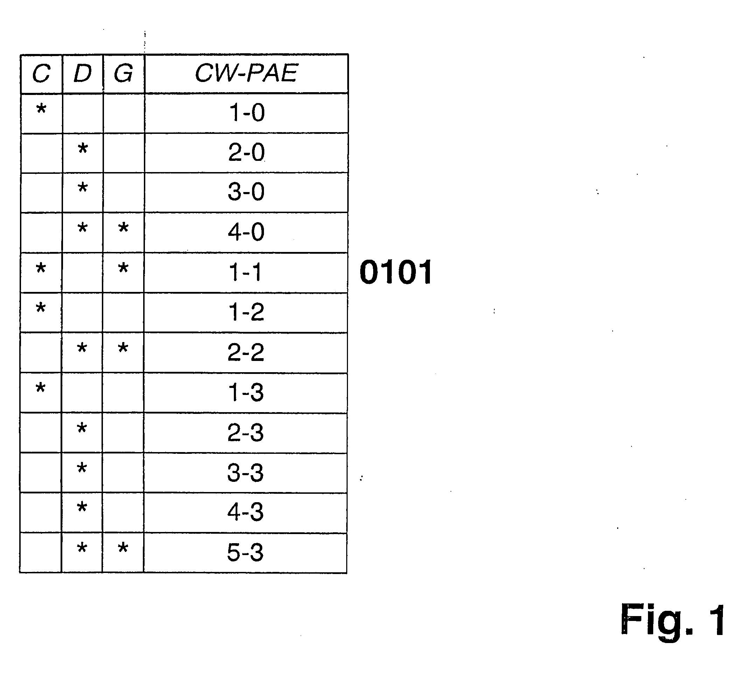

In den Figuren 1-3 ist der beispielhafte Aufbau einer SubConf dargestellt. CW-PAE kennzeichnet die Nummer eines KWs innerhalb einer PAE mit der Adresse PAE (z.B. 2-3 ist das 2.KW für die PAE mit der Adresse 3). Weiterhin sind die Flags dargestellt (C=Check, D=Differential, G=Go), ein gesetztes Flag ist mit "*" gekennzeichnet.

In **Figur 1** ist der einfachste lineare Aufbau einer SubConf, wie er z.B. gemäß PACT10 üblich ist dargestellt. Eine PAE wird während der ersten Konfiguration getestet (C), dann weiterkonfiguriert (D) und abschließend gestartet (G) (siehe PAE mit Adresse 0). Auch der gleichzeitige Test und Start ist möglich (CG, siehe PAE mit Adresse 1, 0101).

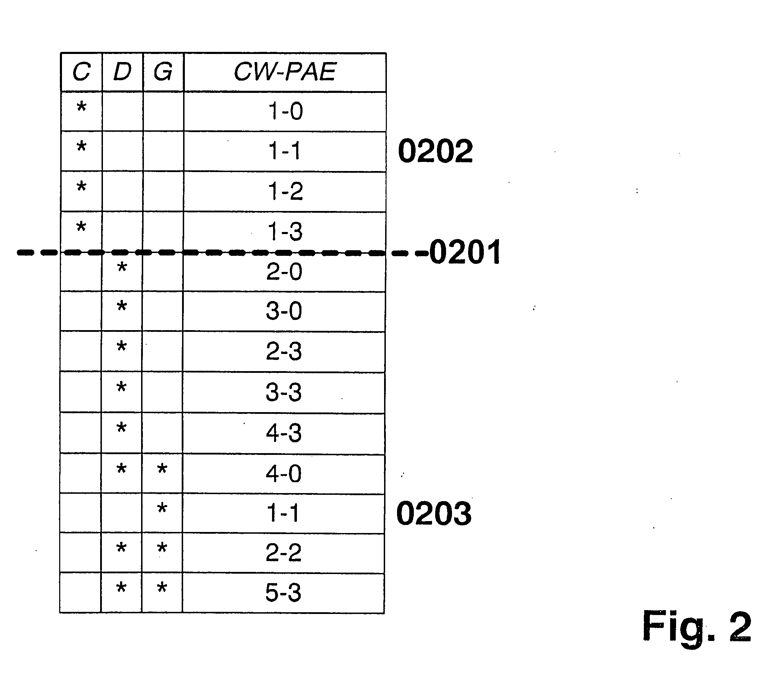

In **Figur 2** ist eine derart umsortierte SubConf dargestellt, dass eine Barrier (0201) eingeführt wurde. Vor der Barrier müssen alle PAEs getestet werden. Die Barrier wartet dann bis zum Eingang aller ACKs oder REJs. Sofern kein REJ auftritt wird die Barrier übersprungen, die differentiellen Konfigurationen werden durchgeführt und die PAEs werden gestartet. Bei Auftreten eines REJ wird die Barrier nicht übersprungen, statt dessen werden FILMO-Läufe ausgeführt, bis kein REJ mehr auftrat, danach wird Barrier übersprungen.

Vor der Barrier muss jede PAE getestet und erst danach dürfen die PAEs differentiell konfiguriert und gestartet werden. Sofern Test und Start ursprünglich im selben Zyklus stattfand, muss das KW jetzt getrennt werden (0101 -> 0202, 0203).

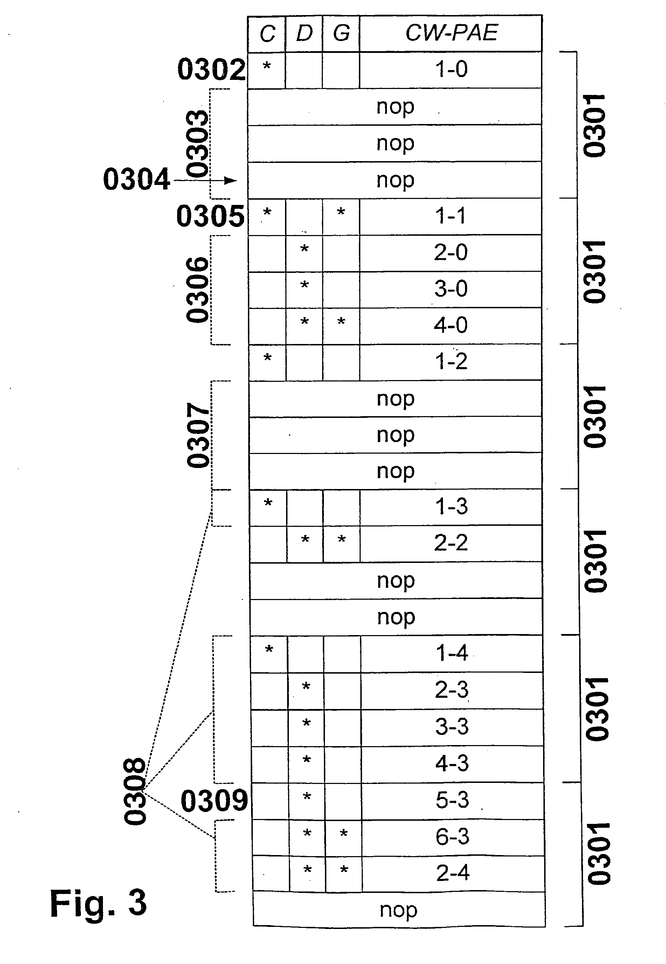

In **Figur 3** wird eine SubConf derart umsortiert, dass keine Barrier notwendig ist, statt dessen eine Latenzzeit zwischen Check und dem Eintreffen von ACK/REJ eingefügt wird, während der kein weiterer Check durchgeführt werden darf. Dazu werden die KWs zu Atomen (0301) zusammengefasst, wobei das erste KW eines Atoms einen Check durchführt (0302) und der Block dann mit differentiellen KWs oder ggf. NOPs (0303) bis zum Ablauf der Latenzzeit gefüllt wird. Die Anzahl der differentiellen KWs hängt von der Latenzzeit ab. Aus Darstellungsgründen wurde exemplarisch eine Latenzzeit von 3 Takten gewählt. Bei 0304 trifft ACK/REJ ein, woraufhin entschieden wird, ob die Konfiguration mit dem nächsten KW, das einen Check enthalten kann (nicht unbedingt muss) weitergeführt (0305) wird, oder aufgrund eines REJs zur Wahrung der Reihenfolge abgebrochen wird.

Wesentlich ist, dass bei der Konfiguration einer PAE X zunächst Check durchgeführt wird, dann auf das Eintreffen von ACK/REJ gewartet wird - während dieser Zeit kann eine bereits gecheckte PAE weiterkonfiguriert werden, oder es müssen NOPs eingeführt werden. Erst dann kann PAE X weiterkonfiguriert werden. Beispiel: Check der PAE (0302), Fortsetzung der Konfiguration (0306). Bei 0307 müssen NOPs nach einem Check eingeführt werden, da keine differentiellen Konfigurationen zur Verfügung stehen. 0308 zeigt das Aufteilen von Konfigurationen über mehrere Blöcke (hier 3) hinweg, wobei ein Check ausgelassen wird (0309).

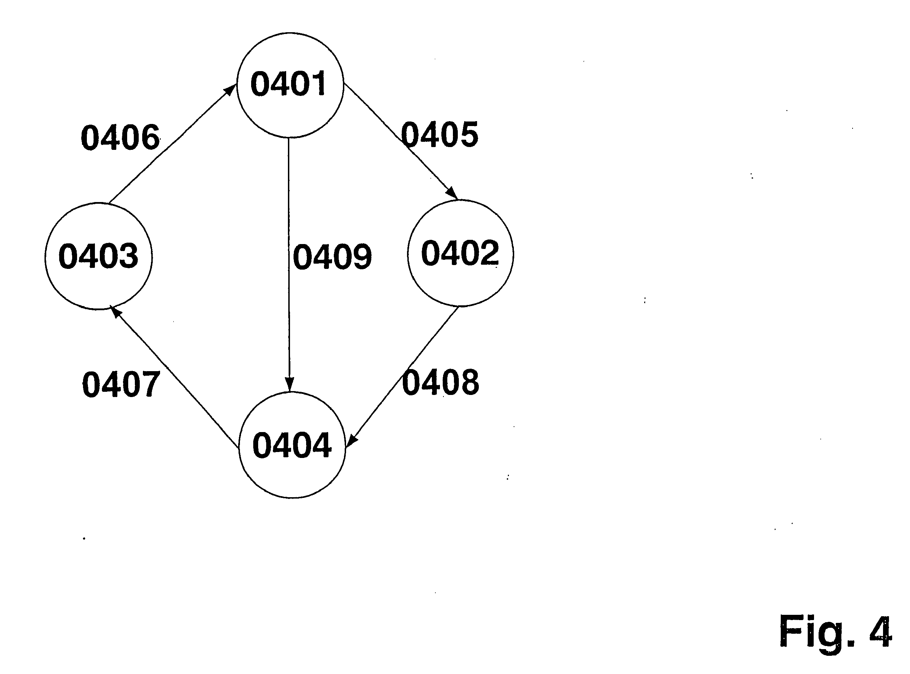

**Figur 4** zeigt eine mögliche Statemachine zur Realisierung der PAE Zustände. Der Grundzustand ist IDLE (0401). Durch Konfigurieren des Flags Check (0405) geht die Statemachine in den Zustand "alloziiert" (0402). Konfigurieren des Flags LAST (0409, 0408) startet die PAE, der Zustand ist "konfiguriert" (0404). Durch LocalReset (0407) geht die PAE in den Zustand "unkonfiguriert" (0403). In diesem Ausführungsbeispiel geht die PAE erst nach Abfrage ihres Status durch LOCK/FREE (0406) nach IDLE zurück.

LocalReset und LAST können auch von der CT durch einen Broadcast versendet werden, siehe ModulID.

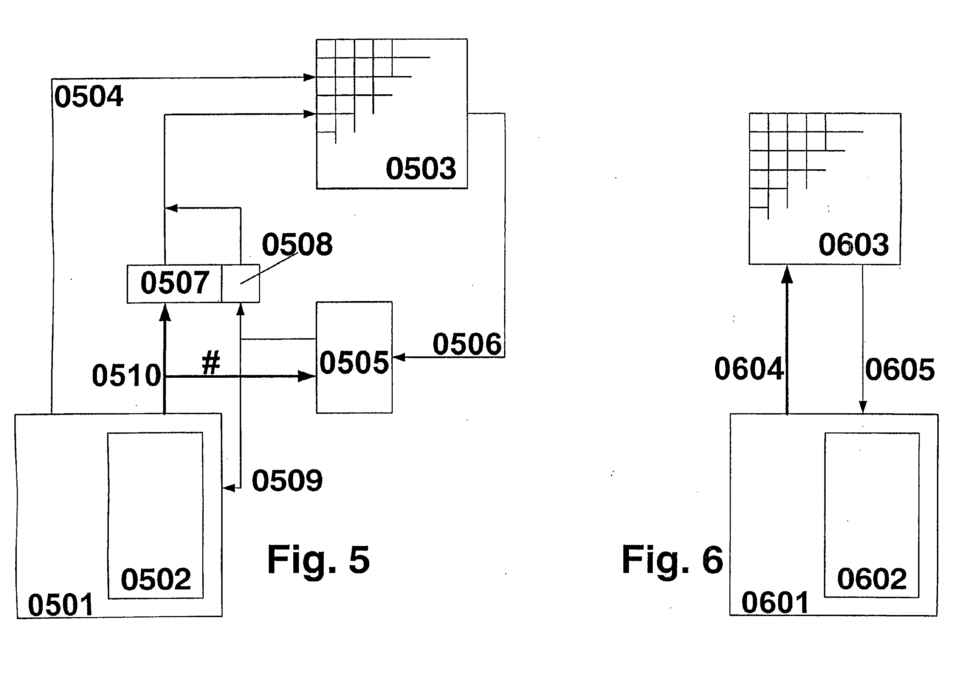

Die Figuren 5-9 zeigen mögliche Implementierungen der FILMO-Verfahren gemäß Abschnitt 5. Dabei werden lediglich die relevanten Baugruppen die als Interface zum PA dienen dargestellt. Schnittstellen zur CT werden nicht beschrieben. Diese sind weitgehend entsprechend dem Stand der Technik (PACT10) implementierbar und bedürfen gegebenenfalls nur geringer Modifikationen.

**Figur 5** zeigt den Aufbau einer CT-Interfaces zum PA bei Verwendung einer STATELUT nach 5.1. Eine CT 0501 mit RAM und integriertem FILMO (0502) wird abstrahiert dargestellt und soll nicht näher erläutert werden, da die Funktion durch PACT10 und PACT05 nach dem Stand der Technik ausreichend bekannt ist. Die CT fragt den Status des PA (0503) durch Setzen des Signals LOCK (0504) ab, woraufhin jede PAE deren Status sich seit dem letzten LOCK geändert hat, diese Änderung an die STATELUT (0505) weiterleitet (0506). Diese Weiterleitung geschieht derart, dass die STATELUT eindeutig jeder PAE ihren Status zuordnen kann. Dazu stehen mehrere Verfahren nach dem Stand der Technik zur Verfügung, beispielsweise kann jede PAE ihre Adresse zusammen mit dem Status an die STATELUT senden, die für jede PAE unter deren Adresse deren Status speichert.

Die CT schreibt KWs (0510) zunächst in ein Register (0507). Gleichzeitig wird ein Lookup unter der Adresse (#) der das jeweilige KW betreffende PAE in der STATELUT (0505) durchgeführt. Ist der Status der PAE "unkonfiguriert", erhält die CT ein ACK (0509), ansonsten ein REJ. Ein einfacher Protokollkonverter (0508) wandelt ein ACK in ein RDY, um das KW in das PA zu schreiben, REJ wird in notRDY konvertiert, um das Schreiben in das PA zu verhindern.

Es soll noch angemerkt werden, dass die Weiterleitung von LOCK, RDY und KW zum PA und im PA, ebenso wie die Rückmeldung des Status der PAEs vom PA gepipelinet, d.h. durch Register verläuft.

In **Figur 6** ist das Verfahren nach 5.2 beispielhaft ausgeführt. Der technische Aufwand ist verhältnismäßig gering. Eine CT (0601) mit integriertem FILMO (0602) ist derart modifiziert, dass nur für das erste an das PA (0603) gesendete KW (0604) eines Atoms eine Quittung (0605) (ACK/REJ) erwartet wird. Die Quittung wird beim letzten KW eines Atoms ausgewertet. Bei ACK wird die Konfiguration mit dem nächsten Atom fortgesetzt, REJ bewirkt den Abbruch der Konfiguration der SubConf.

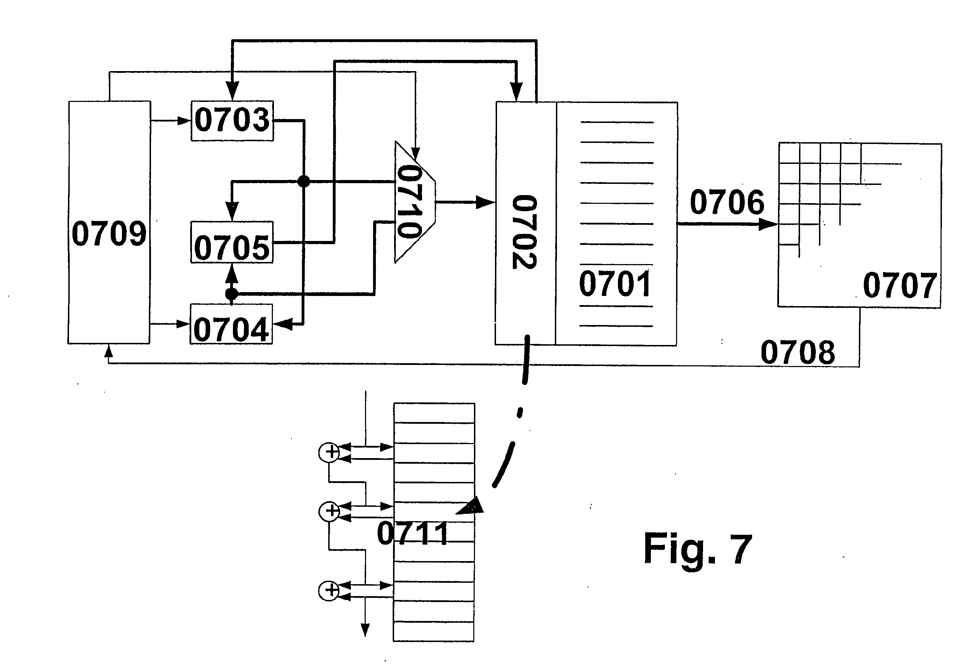

**Figur 7** zeigt den Aufbau eines FILMOs (0701) nach 5.3. Dem FILMO ist der RELJMP-Speicher zugeordnet (0702), wobei jeder Eintrag im RELJMP einem FILMO-Eintrag zugeordnet ist. Der FILMO ist dabei als integrierter FILMO gemäß PACT10 ausgestaltet, so dass RELJMP eine verkettete Liste auf zu konfigurierende KWs darstellt. Zudem soll besonders darauf hingewiesen werden, dass in diesem Fall der FILMO auch CT-Befehle und Verkettungen derer gemäß PACT10 enthalten kann.

Die verkettete Liste in RELJMP wird wie folgt generiert:
Der Lesezeiger (0703) zeigt auf das KW, das aktuell konfiguriert wird. In 0704 ist die Adresse des KWs gespeichert, das zuletzt zurückgewiesen (REJ) wurde. Sofern das aktuell konfigurierte KW (0706) vom PA (0707) akzeptiert wird (ACK, 0708), wird der, in 0702 an der Adresse auf die 0703 zeigt gespeicherte, Wert zu 0703 dazuaddiert. Dadurch ergibt sich ein relativer Sprung.

Wird dagegen das aktuell konfigurierte KW zurückgewiesen (REJ, 0708) wird zunächst die Differenz aus 0703 und 0704, die mittels eines Subtrahierers (0705) berechnet wird, in RelJmp gespeichert, und zwar an der Adresse des zuletzt zurückgewiesenen KW, die in 0704 gespeichert ist. In 0704 wird der aktuelle Wert von 0703 gespeichert. Danach wird der, in 0702 an der Adresse auf die 0703 zeigt gespeicherte, Wert zu 0703 dazuaddiert. Dadurch ergibt sich ein relativer Sprung.

Die Steuerung übernimmt eine Zustandsmaschine (0709), deren Implementierung gemäß des beschriebenen Ablaufes erfolgt. Über einen Multiplexer (0710) wird die Adresse für den RelJmp durch 0709 je nach Operation bestimmt, indem zwischen 0703 und 0704 ausgewählt wird. Um 0701 und 0702 effizient gleichzeitig unterschiedlich adressieren zu können, ist sinnvoll bei der Implementierung 0702 physikalisch von 0701 zu trennen, um zwei getrennt Speicher zu erhalten, die getrennt adressiert werden können.

0711 zeigt die Funktionsweise der relativen Adressierung. Die Adresse die auf einen Eintrag im RelJmp zeigt zum Inhalt von RelJmp dazuaddiert und ergibt die Adresse des nächsten Eintrages.

**Figur 8** zeigt eine mögliche Implementierung des Verfahrens nach 5.3 mit modifiziertem Garbage Collector. Die Einträge im FILMO (0801) werden linear verwaltet, wodurch RelJmp nicht benötigt wird. 0801 ist als separater FILMO implementiert. Durch einen Lesezeiger (0804) werden die KWs (0803) adressiert, die in das PA (0802) geschrieben werden. Sämtliche KWs werden in der Reihenfolge ihrer Konfiguration in einen FIFO oder FIFO-ähnlichen Speicher (0805), der beispielsweise auch als Schieberegister ausgestaltet sein kann, geschrieben. Der Speicher ist exakt so tief, wie Takte vom Absenden eines KWs an das PA, bis zum Eintreffen der Quittierung (RDY/ACK, 0806) vergehen.
- Bei Eintreffen eines REJ wird das dem REJ zugewiesene zurückgewiesene KW, das sich zu diesem Zeitpunkt am Ausgang des FIFOs befindet in 0801 geschrieben. REJ wird dazu als Schreib-Signal für den FILMO verwendet (REJ->WR). Die Schreibadresse wird durch einen Schreibzeiger (0807) generiert, der nach dem Schreibzugriff inkrementiert wird.
- Bei Eintreffen eines ACK geschieht nichts, das dem ACK zugewiesene konfigurierte KW wird ignoriert, 0807 bleibt unverändert.

Dadurch entsteht eine neue lineare Folge aus zurückgewiesenen KWs im FILMO. Die Implementierung des FILMOs als Dual-Ported-RAM mit getrenntem Schreib- und Leseport wird aus PerformanceGründen vorgeschlagen.

**Figur 9** zeigt eine Implementierung des Verfahrens nach 5.4. Dabei wird ersichtlich, dass es sich dabei um eine Abwandlung des Verfahrens nach 5.3 handelt.

Durch einen Lesezeiger (0909) wird das in das PA (0901) zu schreibende KW (0902) im FILMO (0910) adressiert. Die Adresse und Flags (0902a) der zu konfigurierenden PAE von 0902 wird zunächst testweise an das PA gesendet. Das KW mit der Adresse der zu konfigurierenden PAE wird in einen FIFO-ähnlichen Speicher (0903, entsprechend 0805) geschrieben. 0902a wird gepipelinet in das PA übertragen. In der adressierten PAE wird der Zugriff ausgewertet und quittiert. Die Quittung (RDY/ACK) wird ebenfalls gepipelinet zurückgesendet (0904). 0903 verzögert genauso lange, wie Takte vom Absenden von 0902a an das PA, bis zum Eintreffen der Quittierung (RDY/ACK, 0904) vergehen.
- Sofern mit ACK quittiert wurde, wird das komplette KW (0905) (Adresse + Daten) am Ausgang von 0903 das der entsprechenden Quittung zugeordnet ist, gepipelinet an das PA gesendet (0906). Eine Quittung dafür wird nicht erwartet, da bereits bekannt ist, dass die adressierte PAE das KW akzeptiert.
- Bei REJ wird das KW in den FILMO zurückgeschrieben (0907). Dazu wird ein Schreibzeiger (0908) verwendet der 0807 entspricht. Der Zeiger wird dabei inkrementiert.

0904 wird dabei mittels eines einfachen Protokollkonverters (0911) (i) bei ACK in ein Schreibsignal für das PA (RDY) und (ii) bei REJ in ein Schreibsignal 0901 für den FILMO (WR) umgewandelt.

Es entsteht eine neue lineare Folge aus zurückgewiesenen KWs im FILMO. Die Implementierung des FILMOs als Dual-Ported-RAM mit getrenntem Schreib- und Leseport wird aus PerformanceGründen vorgeschlagen.

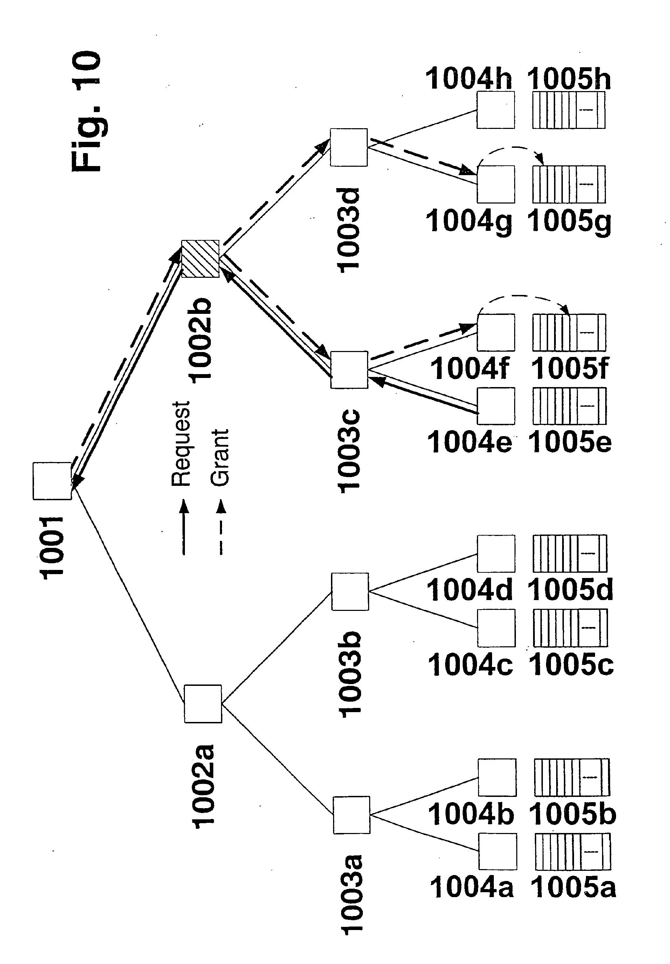

**Figur 10** zeigt ein Ausführungsbeispiel für das erfindungsgemäße Inter-CT-Protokoll. 4 Ebenen von CT sind dargestellt. Die RootCT (1001), CTs von 2 Zwischenebenen (1002a-b und 1003a-d), die Low-Level-CTs (1004a-h) und deren FILMOs (1005a-h). Im 1004e zugeordneten PA wird ein Trigger generiert, der innerhalb von 1004e auf keine lokale SubConf übersetzt werden kann, sondern einer EnhSubConf zugeordnet ist. 1004e sendet an 1003c einen REQUEST für diese EnhSubConf. 1003c hat die IDChain nicht gecached. Die EnhSubConf wird nämlich partiell auch auf 1004g ausgeführt, die kein Blatt von 1003c ist. Somit leitet 1003c den REQUEST an 1002b weiter. Durch die Schraffur wird angezeigt, dass 1002b die IDChain gecached haben könnte, da 1004g ein Blatt von 1002b ist. Angenommen 1002b hat jedoch IDChain noch nicht gecached und fordert diese daher bei 1001 an. 1001 lädt die IDChain aus dem CTR (vgl. PACT10) und sendet sie an 1002b. Der Vorgang wird nachfolgend als GRANT bezeichnet. 1002b cached die IDChain, da sämtliche beteiligten CT Blätter von 1002b sind. Danach sendet 1002b atomar, also ohne Unterbrechung durch einen anderen GRANT, den GRANT an 1003c und 1003d. Dabei wird die IDChain gesplittet und an zwei verschiedene CTs gesendet, wodurch keiner der Empfänger ein gemeinsamer Verwalter aller Blätter sein kann. Das Flag Split wird gesetzt, die Empfänger und alle tieferen CTs können die IDChain nicht mehr cachen. 1003c und 1003d senden wiederum atomar den GRANT an die Low-Level-CTs 1004f bzw. 1004g. Die Low-Level-CTs speichern direkt den eingehenden GRANT in einer entsprechenden, die Reihenfolge der zu konfigurierenden SubConf kennzeichnenden Liste, die beispielsweise separat ausgestaltet sein kann oder durch die direkte Durchführung der Konfiguration mit einer gegebenenfalls stattfindenden Eintragung zurückgewiesener KWs in den FILMO entstehen kann.

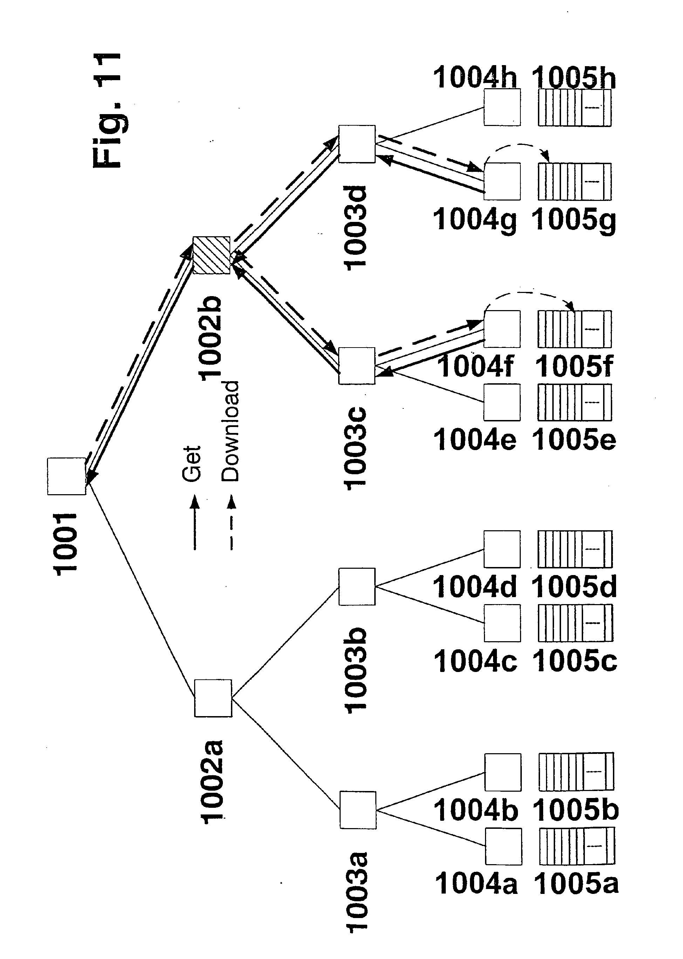

Für die Low-Level-CTs ergeben sich zwei Varianten:
- Entweder sie haben die zu startende der ID gemäß IDChain entsprechende SubConf bereits gecached, dann wird die Konfiguration sofort gestartet.
- Oder sie haben die der ID gemäß IDChain entsprechende SubConf noch nicht gecached, dann müssen sie diese erst bei den übergeordneten CTs anfordern. Die Anforderung (GET) ist in **Figur 11** verdeutlicht, wobei wiederum davon ausgegangen wird, dass keine der CTs aus den Zwischenebenen die SubConf gecached hat. Die jeweilige SubConf wird daher von der RootCT aus dem CTR geladen und an die Low-Level-CTs gesendet (DOWNLOAD). Der Ablauf ist prinzipiell aus PACT10 bekannt und soll daher nicht näher ausgeführt werden.

In jedem Fall ist jedoch wesentlich, dass nach Eintreffen eines GRANT dieser vor jedem weiteren GRANT ausgeführt wird. Trifft GRANT A vor GRANT B ein, so muss GRANT A vor GRANT B konfiguriert werden. Dies gilt auch dann, wenn die SubConf von GRANT A erst geladen werden muss, während die SubConf von GRANT B in der Low-Level-CT gecached wäre und sofort gestartet werden könnte. Die Reihenfolge der eingehenden GRANTs muss eingehalten werden, da ansonsten ein Deadlock unter den EnhSubConf auftreten kann.

In einer besonderen Ausgestaltung des beschriebenen Verfahrens können CTs des CTTREEs direkt auf Konfigurationen, ohne Einbeziehung der darüberliegenden CTs, zugreifen, indem sie eine Verbindung zu einem beliebig ausgestalteten, flüchtigen oder nicht flüchtigen Speicher oder Massenspeicher besitzen. Dieser Speicher kann zum Beispiel ein SRAM, DRAM, ROM, Flash, CDROM, Festplatte oder Serversystem sein, das ggf. auch mittels Netzwerk (WAN, LAN, Internet) angebunden ist. Es soll ausdrücklich erwähnt sein, dass also auch der direkte Zugriff einer CT unter Umgehung der darüberliegenden CTs auf einen Speicher für Konfigurationsdaten möglich ist. Auch in einem derartigen Fall findet die Synchronisation der Konfiguration innerhalb des CTTREE, insbesondere bei EnhSubConf, unter Einbeziehung der darüberliegenden CTs statt.

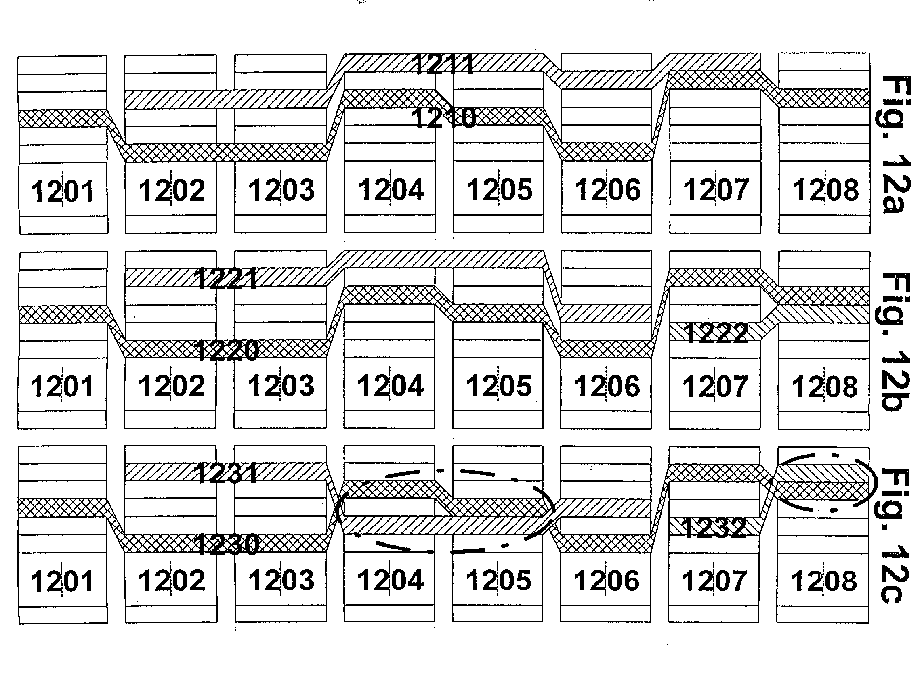

**Figur 12** zeigt drei Beispiele (Figur 12a-12c). Dargestellt ist der Konfigurationsstack von 8 CTs (1201-1208). Der Konfigurationsstack ist die Liste der zu konfigurierenden SubConf. Die SubConf werden in derselben Reihenfolge konfiguriert, wie sie in der Liste eingetragen sind. Ein Konfigurationsstack wird beispielsweise durch die Verkettung einzelner SubConf gebildet, wie dies in PACT10 Figur 26-28 beschrieben ist. Eine andere Möglichkeit ist eine einfache Liste von IDs die auf die SubConf zeigen, wie in Figur 12. Untere Einräge werden zuerst, Höhere zuletzt konfiguriert.

In **Figur 12a** sind zwei EnhSubConf (1210, 1211) dargestellt, die korrekt im Konfigurationsstack der einzelnen CTs liegen. Die einzelnen SubConf der EnhSubConf werden in der richtigen Reihenfolge deadlockfrei konfiguriert. Die Reihenfolge der GRANTs wurde beachtet.

Auch das Beispiel in **Figur 12b** ist korrekt. Drei EnhSubConf sind dargestellt (1220, 1221, 1222). 1220 ist eine große EnhSubConf die alle CTs betrifft. 1221 betrifft nur die CTs 1202-1206, eine weitere betrifft die CTs 1207 und 1208. Sämtliche SubConf werden deadlockfrei in der richtigen Reihenfolge konfiguriert. Der GRANT für 1222 wurde vollständig vor dem GRANT für 1220 abgearbeitet und dieser vor dem GRANT für 1221.

Das Beispiel **Figur 12c** zeigt mehrere Deadlock-Situationen. In 1208 wurde die Reihenfolge der GRANTs von 1230 und 1232 vertauscht. Folge ist, dass in dem 1208 zugeordneten PA Ressourcen für 1230 belegt werden und in dem 1208 zugeordneten PA Ressourcen für 1232. Die Resourcen sind jeweils fest alloziiert. Dadurch entsteht ein Deadlock, da keine EnhSubConf ausgeführt oder zu Ende konfiguriert werden kann.

Ebenfalls sind in den CTs 1204 und 1205 die GRANTs von 1230 und 1231 zeitlich vertauscht. Dadurch entsteht aus denselben Gründen ebenfalls ein Deadlock.

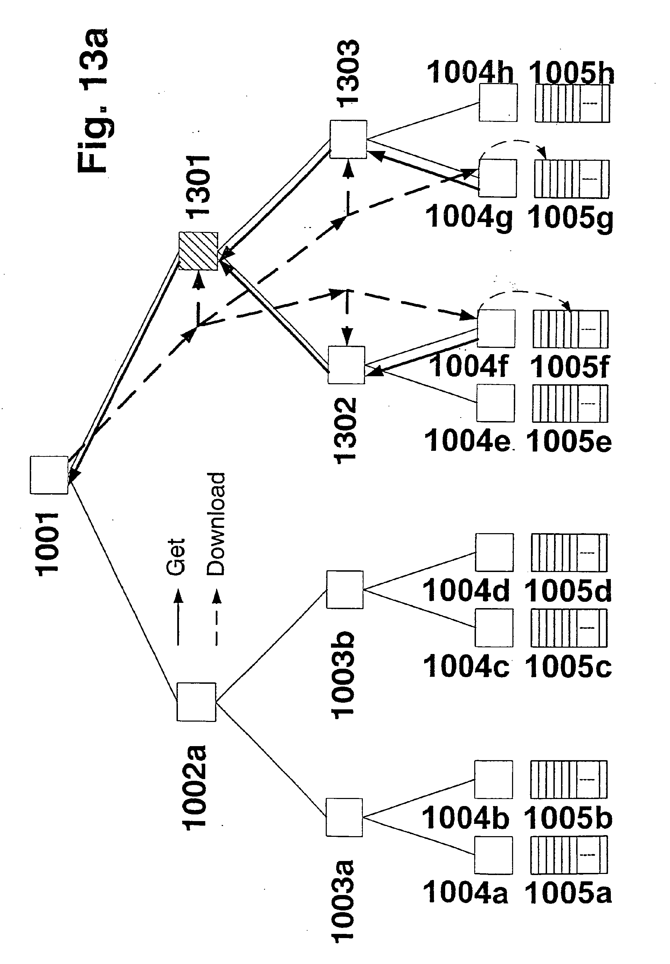

In **Figur 13a** ist eine Performance optimierte Version der Inter-CT-Kommunikation dargestellt. Dabei wird ein Download direkt zur Low-Level-CT durchgeführt, d.h. CTs der mittleren Ebenen müssen nicht zuerst die SubConf empfangen, speichern und dann weiterleiten. Vielmehr "hören" diese CTs lediglich mit (1301, 1302, 1303, LISTENER) und cachen die SubConf.

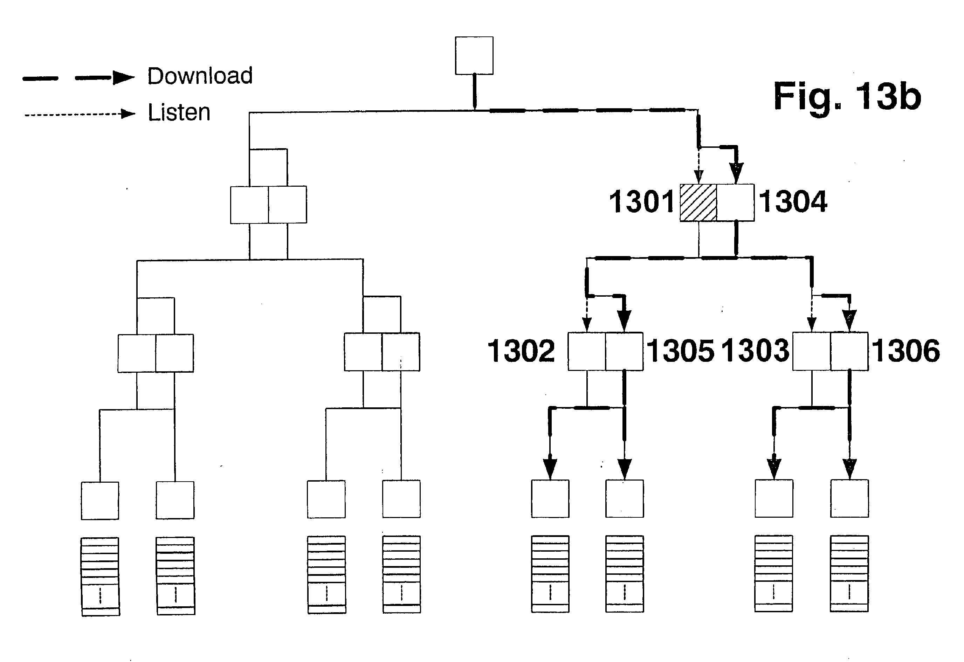

Der schematische Busaufbau ist in **Figur 13b** dargestellt. Ein Bypass (1304, 1305, 1306), normalerweise in Form eines Registers, führt den Download an den CTs der mittleren Ebenen vorbei.

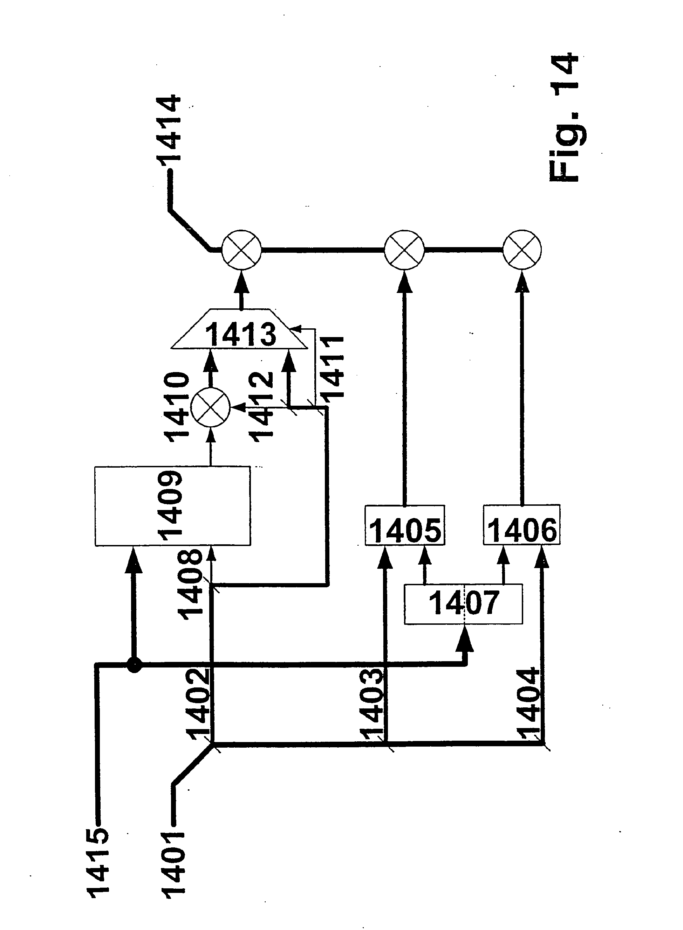

**Figur 14** zeigt den möglichen Aufbau einer Schaltung zwischen CT und PA, zur einfachen Konfiguration von SubConf Makros. Ein KW wird über den Bus (1401) von der CT übertragen. Das KW wird in seine Konfigurationsdaten (1402), sowie die PAE Adressen X (1403) und Y (1404) zerlegt (bei mehrdimensionaler Adressierung sind entsprechend mehr Adressen zu zerlegen). 1405 addiert einen X-Offset zur X-Adresse und 1406 einen Y-Offset zur Y-Adresse. Die Offsets können unterschiedlich sein und sind in einem Register (1407) gespeichert. Der parametrisierbare Teil der Daten (1408) wird als Adresse auf eine Lookup-Tabelle (1409) geleitet, in welcher die tatsächlichen Werte gespeichert sind. Die Werte werden über mit den nicht parametrisierbaren Daten (1412) verknüpft (1410). Über einen Multiplexer (1413) ist selektierbar, ob ein Lookup durchgeführt werden soll oder ob die Daten direkt, ohne Lookup verwendet werden sollen. Die Auswahl wird mittels eines Bits (1411) durchgeführt. Sämtliche Adressen und die Daten werden wieder verknüpft und als Bus (1413) an das PA geführt. Je nach Implementierung ist der FILMO der beschriebenen Schaltung vor- oder nachgeschaltet; integrierte FILMOs werden vorgeschaltet, separate FILMOs nachgeschaltet. Über den Bus 1415 setzt die CT die Adressoffsets und die Parameterübersetzung in 1409. 1409 kann der Einfachheit halber als Dual-Ported-RAM ausgestaltet sein. Der Aufbau eines entsprechenden KW ist wie folgt:

| | | | | |
|---|---|---|---|---|
| X-Adresse | Y-Adresse | Daten | Adresse für 1409 | MUX = 1 |
| X-Adresse | Y-Adresse | Daten | Daten | MUX = 0 |

Ist MUX = 1, wird ein Lookup in 1409 durchgeführt, bei MUX = 0 werden die Daten direkt an 1414 weitergeleitet.

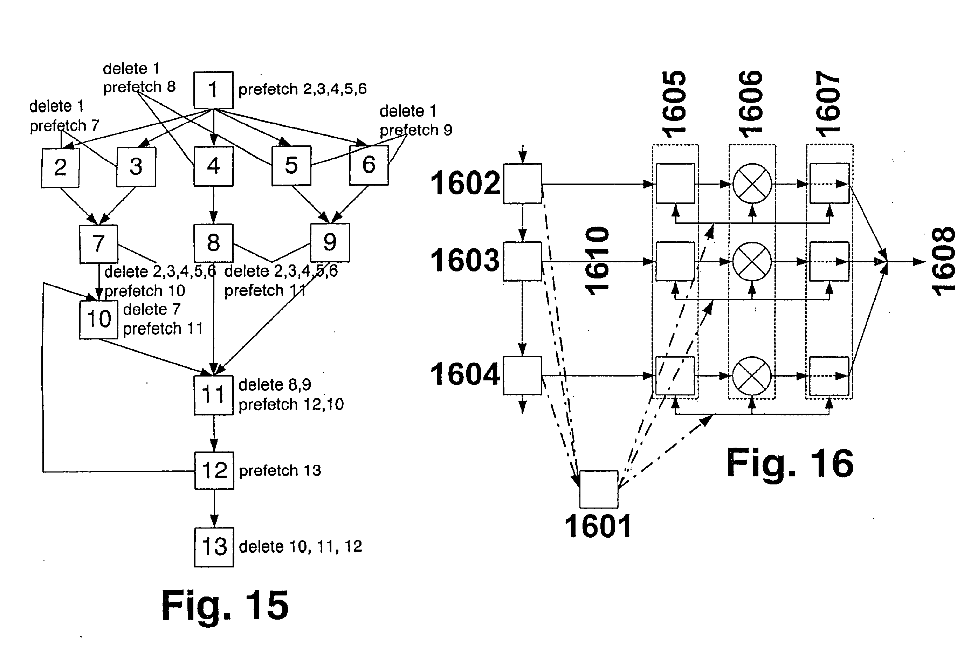

In **Figur 15** ist die Ausführung eines Graphen verbildlicht. Die jeweils nächsten möglichen Knoten (1..13) des Graphen werden vorgeladen (prefetch), entsprechend werden vorhergehende Knoten und nicht genutzt Sprünge gelöscht (delete). Innerhalb einer Schleife werden die Knoten der Schleife nicht gelöscht (10, 11, 12), die entsprechenden Knoten werden erst nach Beendigung entfernt. Knoten werden nur geladen, wenn sie sich nicht bereits im Speicher der CT befinden. Ein mehrfaches Abarbeiten von (z.B.) 11 führt daher nicht zum mehrfachen laden von 12 oder 10. "delete 8,9" wird in 11 ignoriert, sofern 8 und oder 9 bereits entfernt wurden.

**Figur 16** schematisiert die mehrfache Instantiierung eines SubConf Makros (1601). Verschiedene SubConf (1602, 1603, 1604) rufen 1601 auf. Die Parameter für 1601 werden von der jeweils aufrufenden SubConf in einer LookUp Tabelle (1605) vorgeladen (1610). 1605 ist nur einmal implementiert, in Figur 16 jedoch mehrfach gezeichnet, um die verschiedenen Inhalte zu symbolisieren.

1601 wird aufgerufen. Die KWs werden an 1605, 1606 und 1607 übertragen. Diese Elemente arbeiten wie folgt:
Basierend auf einem Lookup wird der entsprechende Inhalt von 1605 mit dem KWs wieder verknüpft (1606). Nach dem Multiplexer 1413 (1607), der auswählt ob das originale KW gültig ist oder ein Lookup durchgeführt wurde, wird das KW an das PA gesendet (1608).

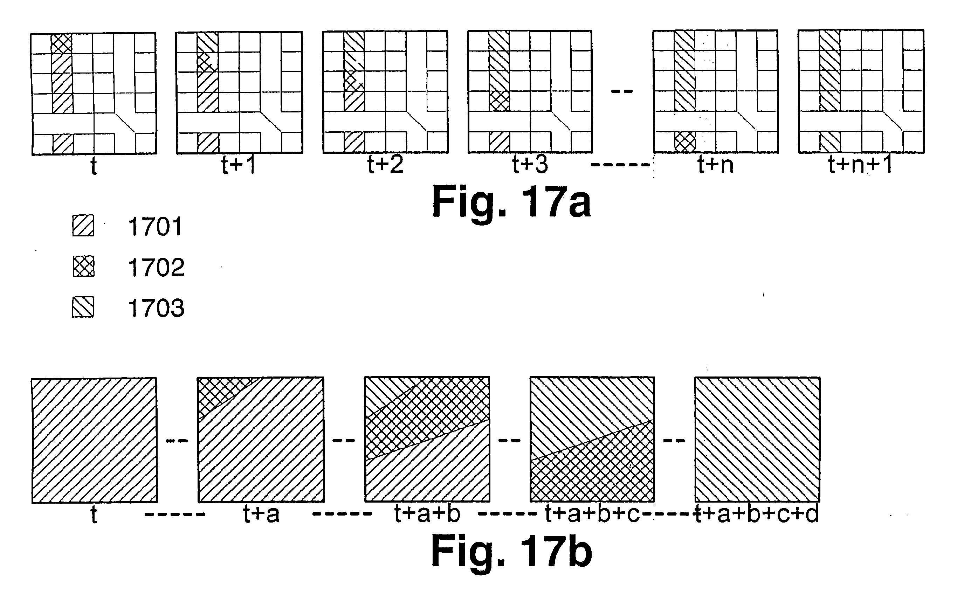

**Figur 17** zeigt schematisch den Ablauf einer Wave Rekonfiguration. Einfach schraffierte Flächen stellen datenverarbeitende PAEs dar, wobei 1701 PAEs nach der Umkonfiguration und 1703 PAEs vor der Umkonfiguration zeigen. Doppelt schraffierte Flächen (1702) zeigen PAEs die gerade umkonfiguriert werden oder auf die Umkonfiguration warten.

**Figur 17a** zeigt den Einfluss der Wave-Rekonfigurierung auf einen einfachen sequentiellen Algorithmus. Hier ist es möglich, exakt die PAEs umzukonfigurieren, denen eine neue Aufgabe zugeteilt wird. Da in jedem Takt eine PAE eine neue Aufgabe erhält kann dies effizient, nämlich zeitgleich durchgeführt werden.

Beispielsweise dargestellt ist eine Reihe von PAEs aus der Matrix aller PAEs einer VPU. Angegeben sind die Zustände in den Takten nach Takt t mit jeweils einem Takt Verzögerung.

In **Figur 17b** ist die zeitliche Auswirkung der Umkonfiguration von großen Teilen dargestellt. Beispielsweise dargestellt ist eine Menge von PAEs einer VPU. Angegeben sind die Zustände in den Takten nach Takt t mit einer unterschiedlichen Verzögerung von jeweils mehreren Takten.

Während zunächst nur ein kleiner Teil der PAEs umkonfiguriert wird oder auf die Umkonfiguration wartet, wird diese Fläche mit zunehmender Zeit größer, bis alle PAEs umkonfiguriert sind. Das größer werden der Fläche bedeutet, dass, bedingt durch die zeitliche Verzögerung der Umkonfiguration immer mehr PAEs auf die Umkonfiguration warten (1702). Dadurch geht Rechenleistung verloren.

Es wird daher vorgeschlagen ein breiteres Bussystem zwischen der CT (insbesondere des Speichers der CT) und den PAEs einzusetzen, das genügend Leitungen zur Verfügung stellt, um innerhalb eines Taktes mehrere PAEs zugleich umzukonfigurieren.

| NOT CONFIGURED | WAVE-TRIGGER | W | C | D | |
|---|---|---|---|---|---|
| X | - | X | X | - | Wave reconfiguration |
| X | - | X | - | X | REJ |
| - | X | X | X | - | REJ |
| - | X | X | - | X | Differential wave reconfigu- ration |
| | | - | | | normal configuration |

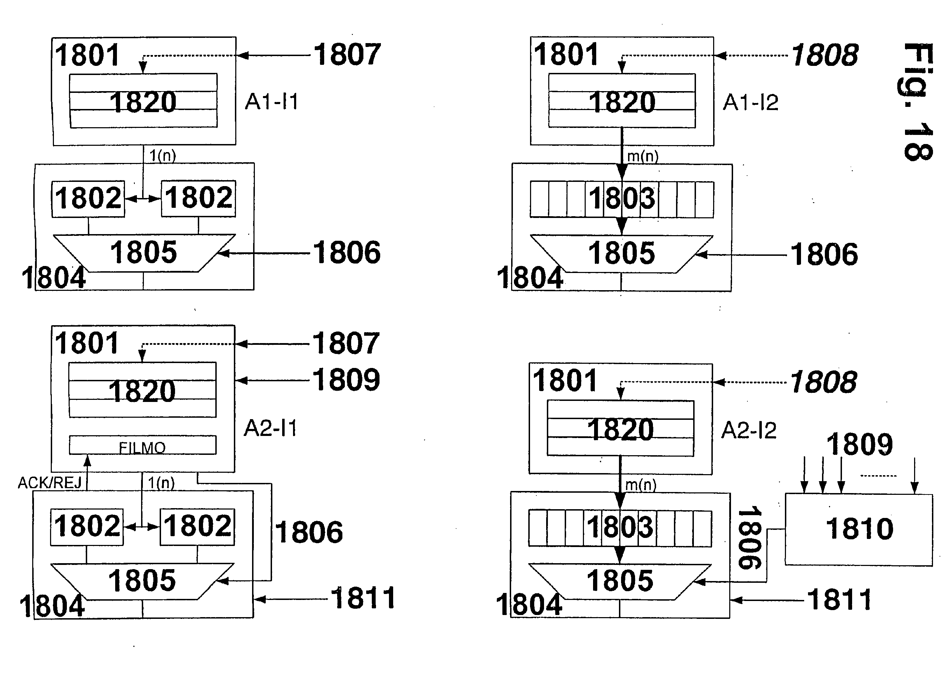

**Figur 18** zeigt beispielhaft unterschiedliche Konfigurationsstrategien für ein Rekonfigurationsverfahren ähnlich den "Synchronisierte Schattenregister" nach 11.2. Abgebildet ist dabei jeweils schematisch die CT (1801), sowie eine von mehreren PAEs (1804), wobei innerhalb der PAE jeweils nur die Konfigurationsregister (1802, 1803) abgebildet sind, sowie eine Einheit zur Auswahl der aktiven Konfiguration (1805). Weitere Funktionseinheiten innerhalb der PAE wurden aus Gründen der Übersichtlichkeit nicht dargestellt. Die CT besitzt jeweils n SubConf (1820), wobei in den Fällen -I1 jeweils die entsprechenden KW einer SubConf bei einem auftretenden WCP geladen wird (1(n)) und in den Fällen -I2 die KW von m SubConf aus der Gesamtmenge von n geladen werden (m(n)). Die unterschiedliche Anbindung von WCT (1806) und WCP (1807) ist dargestellt, ebenso wie die optionalen WCP (1808) wie nachfolgend beschrieben.

In **A1-I1** wird innerhalb derselben SubConf durch einen ersten Trigger WCP eine nächste Konfiguration ausgewählt, die dieselben Ressourcen nutzt oder deren Ressourcen zumindest bereits vorreserviert und durch keine andere außer eventuell der WCP generierenden SubConf belegt sind. Durch die CT (1801) wird die Konfiguration geladen. In dem hier gezeigten Beispiel wird die Konfiguration nicht direkt ausgeführt, sondern in eines von mehreren alternativen Register (1802) geladen. Durch einen zweiten Trigger WCT wird exakt zum Zeitpunkt der erforderlichen Rekonfiguration eines der alternativen Register derart ausgewählt, dass das zuvor aufgrund von WCP geladene Konfiguration ausgeführt wird.

Grundsätzlich wird durch WCP eine bestimmte Konfiguration bestimmt und vorgeladen und durch WCT der Zeitpunkt der tatsächlichen der vorgeladenen Rekonfiguration entsprechenden Funktionsänderung bestimmt.

Sowohl WCP als auch WCT kann ein Vektor sein, so dass durch WCP(v₁) eine von mehreren Konfigurationen vorgeladen wird, wobei durch die Quelle von WCP die vorzuladende Konfiguration spezifiziert wird. WCT(v₂) wählt entsprechend eine von mehreren vorgeladenen Konfigurationen aus. In diesem Fall ist eine der Menge der durch v2 wählbaren Konfigurationen entsprechende Anzahl von 1802 erforderlich, wobei für gewöhnlich die Anzahl fest vorgegeben ist, so dass v2 der maximalen Menge entspricht.

Ausgehend davon ist in **A1-I2** eine Version mit einem Registersatz 1803 mit einer Vielzahl von 1802 dargestellt. Im optimalen Fall ist die Anzahl der Register in 1803 derart groß, dass sämtliche möglichen jeweils folgenden Konfigurationen direkt vorgeladen werden können, wodurch WCP entfallen kann, so dass lediglich der Zeitpunkt des Funktionswechsels sowie der Wechsel selbst durch WCT(v₂) spezifiziert wird.

**A2-I1** zeigt die WRC derart, dass eine nächste Konfiguration ausgewählt wird, die nicht dieselben Ressourcen nutzt oder deren Ressourcen nicht vorreserviert oder durch eine andere außer eventuell der WCP(v₁) generierenden SubConf belegt sind. Die Deadlockfreiheit der Konfiguration wird durch die FILMO-konforme Reaktion und Konfiguration auf WCP(v₁) gewährleistet. Das Starten von Konfigurationen durch WCT(v₂)(1806) wird ebenfalls von der CT durch die FILMO-konforme atomare Reaktion auf das Eintreffen von Triggern (ReconfReq), die einen Rekonfigurationszeitpunkt kennzeichnen, atomar durchgeführt.

In **A2-I2** werden sämtliche nachfolgenden SubConf entweder bereits beim ersten Laden einer SubConf in die Konfigurationsregister 1803 vorgeladen, oder bedarfsweise, sofern die Anzahl der Konfigurationsregister nicht ausreicht, durch die CT mittels der bekannten Abwicklung eines auftretenden WCP(v₁) nachgeladen.

Die Trigger (ReconfReq, 1809), die einen Rekonfigurationszeitpunkt bestimmen und die eigentliche Rekonfiguration auslösen werden zunächst über einen geeigneten Priorisierer (1810) zeitlich derart entkoppelt und als WCT(v₂) an die PAEs geleitet, dass immer nur exakt ein WCT(v₂) zu einem Zeitpunkt an einer PAE aktiv ist und die Reihenfolge der eintreffenden WCT(v₂) bei allen betreffenden PAEs dieselbe ist.

Bei **A2-I1** und **A2-I2** wird in diesen Ausführungsbeispielen ein zusätzliches Triggersystem verwendet. Sowohl bei der Abarbeitung von WCT durch 1801, also auch bei einer Abarbeitung durch 1810 kann eine erhebliche Verzögerung bis zur Weiterleitung an 1804 auftreten. Es ist jedoch wesentlich, dass der Zeitpunkt ChgPkt zeitlich exakt eingehalten wird, da die PAEs ansonsten die nachfolgenden Daten falsch verarbeiten würden. Daher wird ein weiterer Trigger (1811, WCS = WaveConfigurationStop) verwendet, der lediglich die Datenverarbeitung der PAEs solange stoppt, bis durch das Eintreffen des WCT die neue Konfiguration aktiviert ist. WCS wird für gewöhnlich innerhalb der gerade aktiven SubConf generiert. In vielen Fällen kann ReconfReq und WCS identisch sein, da sofern ReconfReq innerhalb der gerade aktiven SubConf generiert wird, dieses Signal zumeist auch das Erreichen von ChgPkt kennzeichnet.

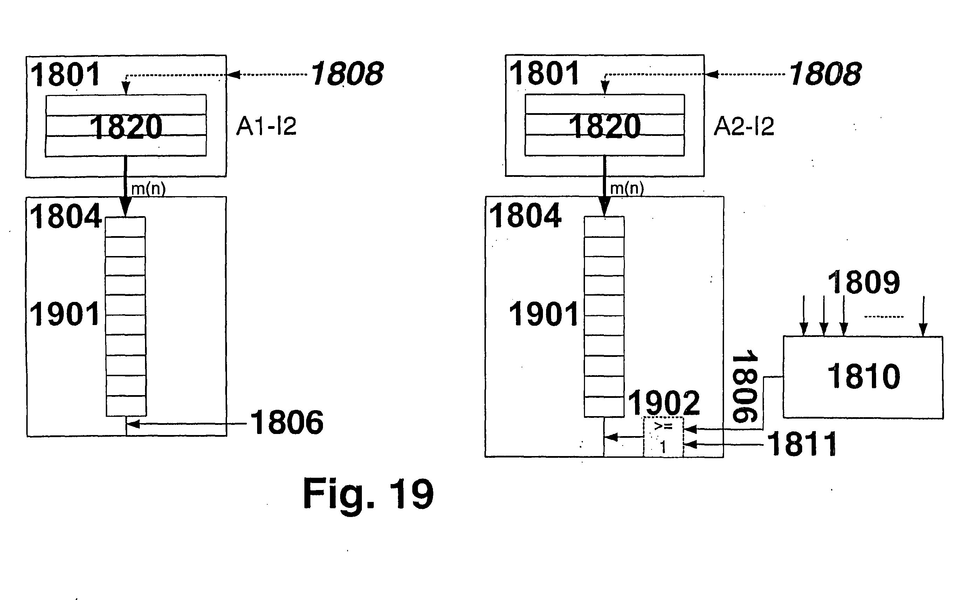

**Figur 19** zeigt eine Implementierungsvariante von A1-I2 und A2-I2, wobei statt eines Registersatzes ein FIFO-Speicher (1901) zur Verwaltung der KW verwendet wird. Dabei ist die durch WCP vorgegebene Reihenfolge der SubConf fest. Durch das Auftreten von WCT (bzw. WCS, alternativ durch 1902 dargestellt) kann lediglich die nächste Konfiguration aus dem FIFO geladen werden. Die wesentliche Funktion von WCS, also das Anhalten der laufenden Datenverarbeitung ist exakt dieselbe wie in Figur 18 beschrieben.

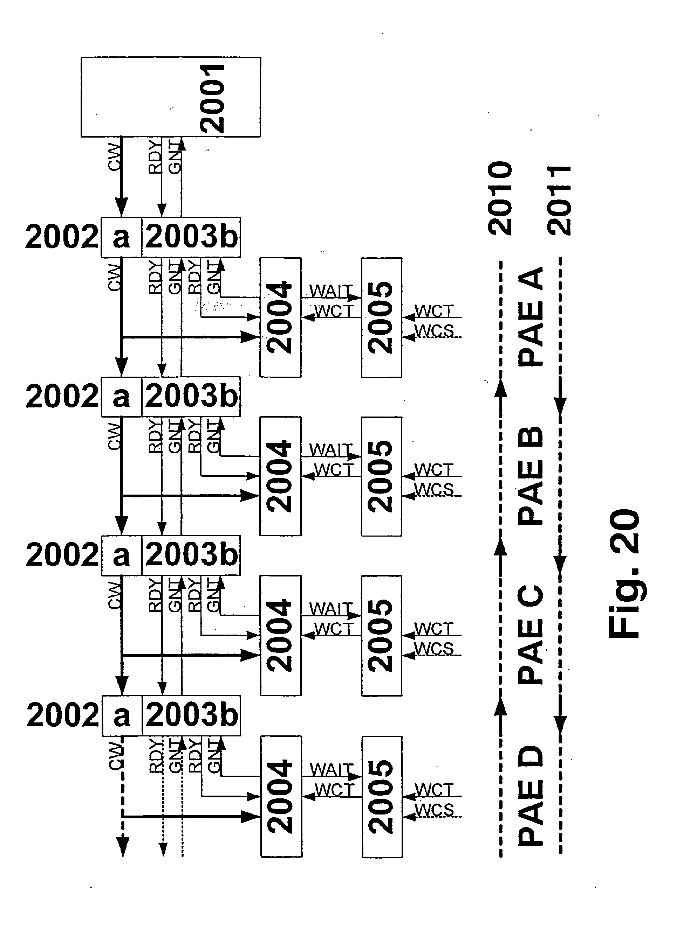

In **Figur 20** ist ein Abschnitt einer Zeile von PAEs dargestellt, um beispielhaft ein Rekonfigurationsverfahren ähnlich der "Synchronisierten Pipeline" nach 11.2 zu verdeutlichen. Eine CT (2001) ist mehreren CT-Interface Baugruppen (2004) von PAEs (2005) zugeordnet. 2004 ist in 2005 integriert und wird nur zur besseren Darstellung Funktion von WAIT und WCT abgesetzt dargestellt. Die Signale zur Übertragung der Konfigurationsdaten von 2004 nach 2005 sind aus Gründen der Abstraktion nicht dargestellt.

Die CT ist mittels eines gepipelineten Bussystems an die 2004 angebunden, wobei 2002 die Pipeline-Stufen darstellen. 2002 besteht aus einem Register (2003b) für die Konfigurationsdaten (CW) und einem weiteren Register (2003a) mit integriertem Dekoder und Logik. 2003a dekodiert die in CW übertragenen Adresse und sendet ein Signal RDY an 2004, sofern die betreffende lokale PAE adressiert ist, bzw. ein Signal RDY an die nächste Stufe (2002), sofern die lokale PAE nicht adressiert ist. Dementsprechend nimmt 2003a die Quittierung (GNT), ausgeführt als RDY/ACK gemäß dem bekannten Protokoll, entweder von 2002 oder von 2004 entgegen.

Dadurch entsteht ein gepipelineter Bus, der die CW von der CT zur adressierten PAE und deren Quittung zurück zur CT überträgt.

Wenn WCT bei 2004 aktiv ist, werden die anstehenden CW, die beschreibungsgemäß mit WAVE gekennzeichnet sind, in 2004 konfiguriert, GNT wird mit ACK quittiert.

Solange WCT nicht aktiv ist, aber CW zur Konfiguration anliegen, wird GNT nicht quittiert, d.h. die Pipeline ist bis zur Durchführung der Konfiguration blockiert.

Erwartet 2005 eine Wave-Rekonfiguration, gekennzeichnet durch ein aktives WCT und keine mit WAVE gekennzeichneten CW liegen bei 2004 vor, quittiert 2004 mit WAIT um die PAE (2005) solange in einen wartenden, nicht datenverarbeitenden Zustand zu versetzen, bis mit WAVE gekennzeichnete CW in 2004 konfiguriert wurden.

CW, die nicht mit WAVE übertragen wurden, werden während der Datenverarbeitung mit REJ zurückgewiesen.

Es soll angemerkt sein, dass diese Figur ausschließlich das Grundprinzip verdeutlichen soll. Durch applikationsabhängige besondere Ausgestaltungen können Optimierungen durchgeführt werden. Beispielsweise kann durch eine Registerstufe in 2004, die eingehende mit WAVE gekennzeichnete CW bis zum Eintreffen von WCT und der damit verbundenen Rekonfiguration zwischenspeichert, das Blockieren der Pipeline verhindert werden, wenn von der CT gesendete CW nicht sofort von der adressierten 2004 abgenommen werden.

2010 und 2011 sollen die Richtung der Datenverarbeitung zur weiteren Erläuterung kennzeichnen.
Sofern die Datenverarbeitung in Richtung 2010 verläuft, ist eine schnelle Wave-Rekonfiguration der PAEs wie folgt möglich: Die CT sendet die mit WAVE gekennzeichneten CW derart in die Pipeline, dass zunächst die CW der am weitesten entfernten PAE gesendet werden. Sofern die CW nicht sofort konfiguriert werden können ist die entfernteste Pipeline-Stufe (2002) blockiert. Danach sendet die CT die CW an die nunmehr entfernteste PAE und so weiter, bis zuletzt die Daten an die nächste PAE gesendet werden.

Sobald ChkPkt durch die PAEs läuft, können jetzt in jedem Takt die neuen CW konfiguriert werden. Das Verfahren ist auch dann effizient, wenn ChgPkt zeitgleich mit der Übertragung der CW von der CT durch die PAEs läuft, da auch dabei das jeweils zur Konfiguration erforderliche CW an der jeweiligen PAE in jedem Takt anstehen kann.

Verläuft die Datenverarbeitung in die entgegengesetzte Richtung (2011), kann ebenfalls die Pipeline von der der CT entferntesten PAE zu der der CT nächsten PAE konfiguriert werden. Sofern ChgPkt nicht zeitgleich mit der Datenübertragung der CW erfolgt, bleibt das Verfahren optimal, da bei Auftreten von ChgPkt die CW sofort aus der Pipeline in die 2004 übertragen werden kann.

Erscheint ChgPkt jedoch zeitgleich mit den CW der Wave Rekonfiguration, entstehen Wartezyklen. Beispielsweise soll beim Auftreten von ChgPkt zum Takt n die PAE B konfiguriert werden. Die CW stehen an und werden in 2004 konfiguriert. Beim Takt n+1 liegt ChgPkt (und damit WCT) bei PAE C an. Die CW von PAE C werden aber in diesem Takt bestenfalls erst in 2002 von PAE B übertragen, da im vorhergehenden Takt 2002 von PAE B noch mit deren CW belegt war. Erst im Takt n+2 liegen die CW von PAE C in deren 2002 und können konfiguriert werden. In Takt n+1 ist ein Wartezyklus entstanden.

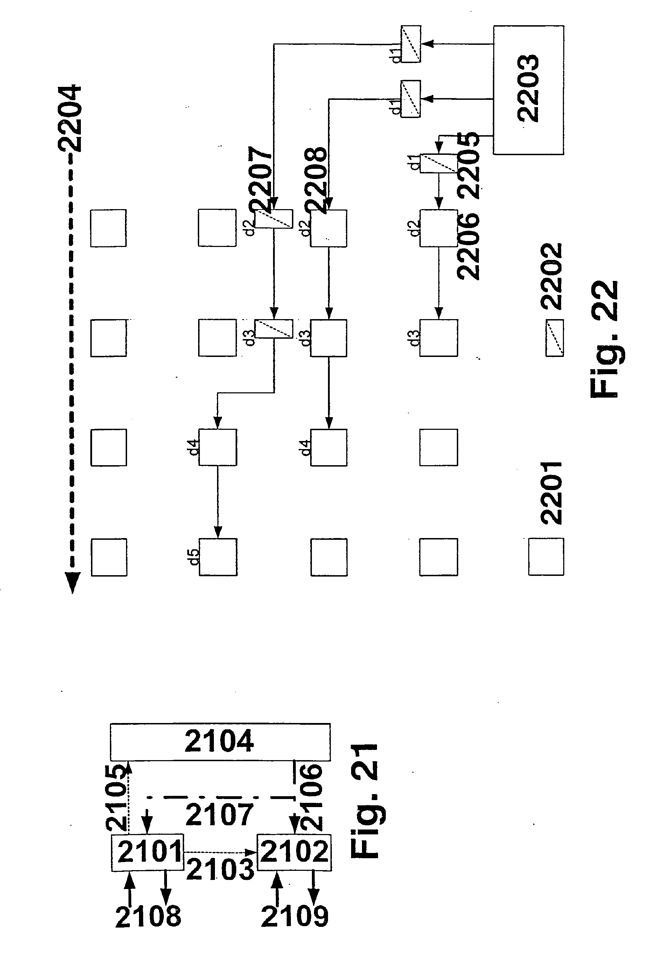

**Figur 21** zeigt die allgemeinste Synchronistionsstrategie für eine Wave-Rekonfiguration. Eine erste PAE 2101 erkennt die Notwendigkeit einer Rekonfiguration aufgrund eines auftretenden Zustandes. Das Erkennen kann nach gewöhnlichen Verfahren, beispielsweise einem Vergleich von Daten oder Zuständen erfolgen. Durch das Erkennen sendet 2101 ein Aufforderung (2103), die durch einen Trigger erfolgen kann, an eine oder mehrere zu rekonfigurierenden PAEs (2102), das die Datenverarbeitung anhält. Weiterhin sendet 2101 ein Signal (2105), das auch dasselbe Signal 2103 sein kann) an eine CT (2104), um diese zur Rekonfiguration aufzufordern. 2104 rekonfiguriert 2102 (2106) und informiert (2107) nach erfolgter Rekonfiguration aller zu rekonfigurierenden PAEs 2101 gegebenenfalls mittels Rekonfiguration über die Beendigung der Durchführung. Daraufhin nimmt 2001 die Anhalteaufforderung 2103 zurück und die Datenverarbeitung wird fortgesetzt. 2108 und 2109 symbolisieren jeweils Daten- und Trigger-Ein- und Ausgänge.

**Figur 22** veranschaulicht eine Möglichkeit durch Routing-Maßnahmen für eine korrekte zeitliche Weiterleitung von WCT zu sorgen. Von einer zentralen Instanz (2203) werden mehrere WCT für verschiedene PAEs (2201) generiert, die jedoch zeitlich aufeinander abgestimmt sein sollen. Die unterschiedlichen Entfernungen der 2201 in der Matrix führen zu unterschiedlichen Laufzeiten, bzw. Latenzzeiten. Dies wird in dem vorliegenden Beispiel durch das geeignete Einsetzen von Pipelinestufen (2202) durch den, dem Compiler zugeordneten Router, erreicht (vgl. PACT13). Die sich dadurch ergebenden Latenzen sind mit d1-d5 angegeben. Es ist ersichtlich, dass in Richtung des Datenflusses (2204) in jeder Stufe (Spalte) dieselben Latenzen auftreten. Beispielsweise wäre 2205 nicht notwendig, da die Entfernung von 2206 von 2203 sehr gering ist. Da aber für 2207 und 2208 je ein 2202 aufgrund der durch die längere Distanz entstehenden Laufzeit eingefügt werden muss, wird 2205 zum Abgleich der Laufzeit notwendig.

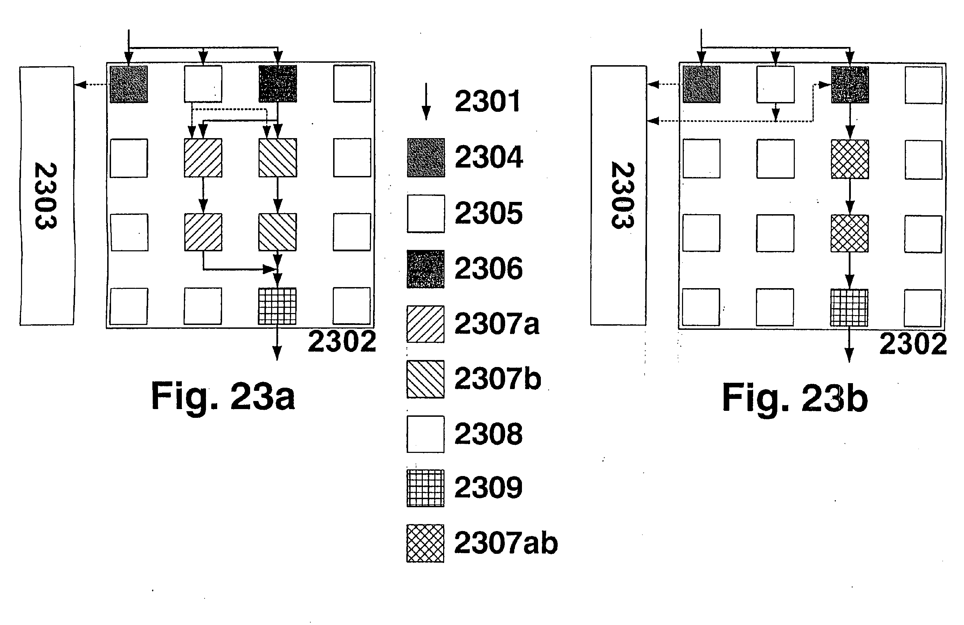

**Figur 23** soll eine Anwendung der Wave-Rekonfiguration aufzeigen. Dabei soll ein wesentlicher Vorteil der VPU-Technologie aufgezeigt werden, nämlich die wahlweise Nutzung von PAE-Ressourcen oder Rekonfigurationszeit zur Lösung einer Aufgabe, woraus sich ein vom Compiler bzw. Programmierer einstellbarer intelligenter Tradeoff zwischen Kosten und Performance ergibt. Ein Datenstrom soll (2301) in einem Array (2302) aus PAEs (2304-2308) berechnet werden. Dem Array ist eine CT (2303) zugeordnet, die für dessen Rekonfiguration zuständig ist. 2304 ist für die Erkennung des Endzustandes der Datenverarbeitung der eine Rekonfiguration erforderlich macht zuständig. Die Erkennung wird an die CT signalisiert. 2306 kennzeichnet den Beginn und 2309 das Ende einer Verzweigung, die durch (2307a, 2307b, bzw. 2307ab) symbolisiert ist. Die PAEs 2308 werden nicht verwendet. Die unterschiedlichen Trigger werden durch 2309 dargestellt.

In **Figur 23a** wird durch 2305 einer der beiden Zweige 2307a, 2307b selektiert und per Trigger zeitgleich mit den von 2306 eintreffenden Daten aktiviert.

In **Figur 23b** soll aus 2307a und 2307b nicht komplett vorkonfiguriert sein, sondern beide möglichen Zweige sollen sich die Ressourcen 2307ab durch Rekonfiguration teilen. 2305 selektiert weiterhin den für die Datenverarbeitung notwendigen Zweig. Die Information wird jetzt einerseits an 2303 geführt, andererseits an 2306, um gemäß Figur 21 die Datenverarbeitung bis zur komplett durchgeführten Rekonfiguration von 2307ab anzuhalten.

**Figur 24** stellt eine mögliche alternative Implementierung gemäß 4.2 einer Statemachine zur Ablaufsteuerung der PAE dar: Folgende Zustände sind implementiert:
Not Configured (2401)
Allocated (2402)
Wait for Lock (2403)
Configured (2404)
Folgende Signale lösen eine Zustandsänderung aus:
LOCK/FREE(2404, 2408)
CHECK (2405, 2407)
RECONFIG (2406, 2409)
GO (2410, 2411)

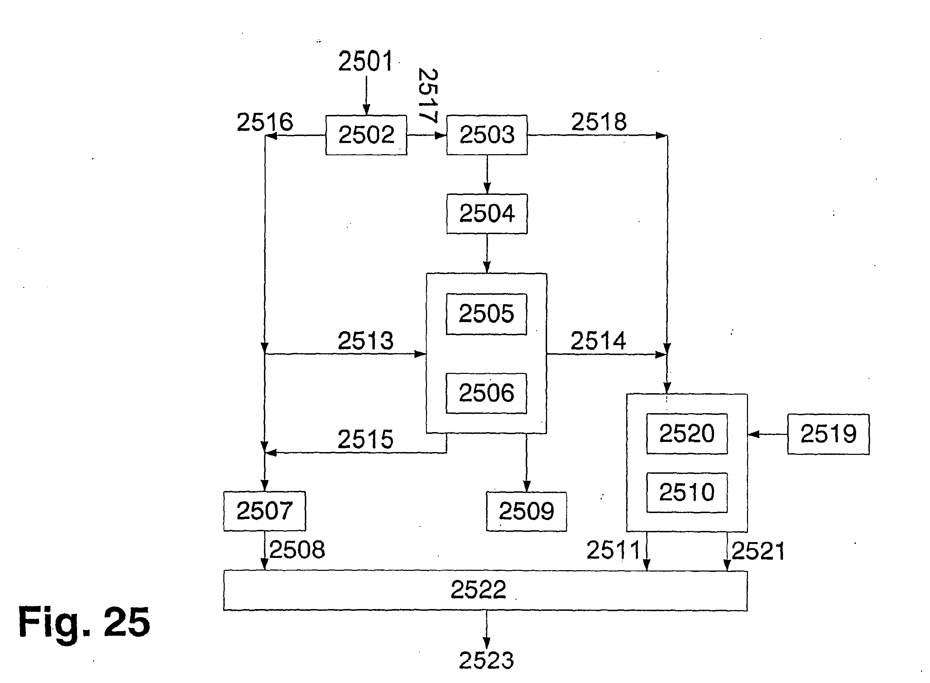

**Figur 25** zeigt den aus PACT 13 bekannten Aufbau eines Hochsprachencompilers, der beispielsweise auch gewöhnliche sequentielle Hochsprachen (C, Pascal, Java) auf ein VPU-System übersetzt. Sequentieller Code (2511) wird von parallelem Code (2508) getrennt, wodurch 2508 direkt in dem Array von PAEs verarbeitet wird.

Für 2511 gibt es drei Ausführungsmöglichkeiten:
1. Innerhalb eines Sequenzers einer PAE (vgl. PACT13, 2910)
2. Mittels eines in die VPU konfigurierten Sequenzers. Der Compiler erzeugt hierzu einerseits einen auf die Aufgabe optimierten Sequenzer, andererseits direkt den algorithmenspezifischen Sequenzercode (vgl. PACT13, 2801).
3. Auf einem gewöhnlichen externen Prozessor (vgl. PACT13, 3103)
4. Durch schnelle Rekonfiguration mittels einer CT, indem das Verhältnis zwischen der Anzahl der PAEs innerhalb einer PAC und der Anzahl der PACs derart gewählt wird, dass eine oder mehrere PACs als dedizierte Sequenzer aufgebaut werden können, dessen Opcodes und Befehlsausführung von der zugeordneten CT in jedem Arbeitsschritt konfiguriert werden. Dabei reagiert die zugeordnete CT auf den Status des Sequenzers, um den jeweils nachfolgenden Programmablauf zu bestimmen. Die Übertragung des Status erfolgt mittels des Triggersystems.

Welche Möglichkeit gewählt wird, hängt von der Architektur der VPU, des Computersystems und des Algorithmus ab.

Das Prinzip ist aus PACT13 bekannt. Es soll jedoch ausdrücklich auf die Erweiterungen des Routers und Placers (2505) entsprechend der hier vorliegenden Offenbarung hingewiesen werden.

Der Code (2501) wird zunächst in einem Präprozessor (2502) in Datenflusscode (2516) (der in einer speziellen Version der jeweiligen Programmiersprache datenflussoptimiert geschrieben wurde) und gewöhnlichen sequentiellen Code getrennt (2517). 2517 wird auf parallelisierbare Teilalgorithmen untersucht (2503), die sequentiellen Teilalgorithmen werden ausgesondert

(2518). Die parallelisierbaren Teilalgorithmen werden als Makros vorläufig platziert und geroutet.

In einem iterativen Prozess werden die Makros mit dem datenflussoptimierten Code (2513) zusammen platziert, geroutet und partitioniert (2505). Eine Statistik (2506) wertet die einzelnen Makros, sowie deren Partitionierung hinsichtlich der Effizienz aus, wobei die Umkonfigurationszeit und der Aufwand der Umkonfiguration in die Effizienzbetrachtung einfließt. Ineffiziente Makros werden entfernt und als sequentieller Code ausgesondert (2514).

Der verbleibende parallele Code (2515) wird zusammen mit 2516 compiliert und assembliert (2507) und VPU Objektcode ausgegeben (2508).

Eine Statistik über die Effizienz des generierten Codes, sowie der einzelnen (auch der mit 2514 entfernten Makros) wird ausgegeben (2509), der Programmierer erhält dadurch wesentliche Hinweise auf Geschwindigkeitsoptimierungen des Programms. Jedes Makro des verbleibenden sequentiellen Codes wird auf seine Komplexität und Anforderungen untersucht (2520). Aus einer Datenbank die von der VPU-Architektur und dem Computersystem abhängt (2519) wird der jeweils geeignete Sequenzer ausgewählt und als VPU-Code (2521) ausgegeben. Ein Compiler (2521) generiert den Assemblercode des jeweiligen Makros für den jeweils von 2520 gewählten Sequenzer und gibt ihn aus (2511). Die 2510 und 2520 sind eng miteinander verknüpft. Gegebenenfalls verläuft die Abarbeitung iterativ um den geeignetsten Sequenzer mit minimalsten und schnellsten Assemblercode zu finden.

Ein Linker (2522) fasst die Assemblercodes (2508, 2511, 2521) zusammen und generiert den ausführbaren Objektcode (2523).

Vorstehend beschrieben wurde somit unter anderem auch ein Verfahren zum Betrieb einer Datenverarbeitungseinrichtung mit ein- oder mehrdimensionaler konfigurierbarer Zellstruktur, wobei zusammen mit den Konfigurationsdaten ein Flag gesendet wird, das anzeigt, dass eine Zelle neu konfiguriert wird, wobei die Zelle daraufhin die Konfiguration annimmt, sofern sie sich in einem unkonfigurierten Zustand befand und ansonsten die Konfiguration verweigert.

Es wurde weiter beschrieben ein Verfahren zum Betrieb einer Datenverarbeitungseinrichtung mit ein- oder mehrdimensionaler konfigurierbarer Zellstruktur, wobei vorgesehen ist, dass zusammen mit den Konfigurationsdaten ein Flag gesendet wird, das anzeigt, dass eine Zelle teilweise konfiguriert wird, wobei die Zelle daraufhin die Konfiguration annimmt, sofern sie sich in einem konfigurierten Zustand befand und ansonsten die Konfiguration verweigert.

Es wurde unter anderem vorstehend zudem beschrieben ein Verfahren zum Betrieb einer Datenverarbeitungseinrichtungmit ein- oder mehrdimensionaler konfigurierbarer Zellstruktur, wobei eine Zelle durch ein bestimmtes Flag gestartet wird.

### Begriffsdefinitionen

**ACK/REJ** Quittierungsprotokoll einer PAE auf einen (Re)Konfigurationsversuch. ACK zeigt an, dass die Konfiguration angenommen wurde, REJ zeigt an, dass die Konfiguration abgelehnt wurde. Das Protokoll sieht vor, dass auf das Eintreffen von entweder ACK oder REJ gewartet wird und ggf. bis dahin Wartezyklen eingefügt werden.
**CT** Einheit zum interaktiven konfigurieren und rekonfigurieren von konfigurierbaren Elementen. Eine CT besitzt einen Speicher zum Zwischenspeichern und/oder Cachen von SubConf. In besonderen Ausgestaltungen besitzen auch CTs, die keine Root-CT sind, direkten Anschluss an einen Speicher für SubConf, der in diesem Fall nicht von einer darüberliegenden CT geladen wird.
**CTTREE** Ein- oder mehrdimensionaler Baum von CTs.
**EnhSubConf** Konfiguration die mehrere SubConf, die auf unterschiedlichen PACs auszuführen sind, beinhaltet.
**Konfiguration** Kompletter ausführbarer Algorithmus.
**konfigurierbares Element** Physikalisch beliebiges Element, dessen exakte Funktion innerhalb der implementierten Möglichkeiten durch eine Konfiguration bestimmt wird. Insbesondere kann ein konfigurierbares Element als logische Funktionseinheit, arithmetische Funktionseinheit, Speicher, peripheres Interface, Bussystem ausgestaltet sein; wobei besonders Elemente bekannter Technologien wie FPGAs (z.B. CLBs), DPGAs, VPUs und sämtliche unter "reconfigurable computing" bekannte Elemente eingeschlossen sind. Ein konfigurierbares Element kann auch eine komplexer Zusammenschluss mehrerer unterschiedlicher Funktionseinheiten sein, z.B. einer arithmetischen Einheit mit integriertem zugeordnetem Bussystem.
**KW** Konfigurationswort. Ein oder mehrere Daten, die die Konfiguration oder einen Teil einer Konfiguration eines konfigurierbaren Elementes bestimmen.
**Latenz** Verzögerung innerhalb einer Datenübertragung, die gewöhnlicherweise in synchronen Systemen taktbasierend erfolgt und daher in Taktzyklen angeben wird.
**PA** Processing Array, Anordnung mehrerer auch unterschiedlich ausgestalteter PAEs.
**PAC** Ein PA mit der zugeordneten für die Konfiguration und Rekonfiguration dieses PAs zuständigen CT,
**PAE** Processing Array Element, konfigurierbares Element,
**ReconfReq** Trigger aufgrund eines Zustandes der eine Rekonfiguration erfordert generiert werden und selbigen kennzeichnen.
**rekonfigurieren** Laden einer neuen Konfiguration, ggf. zeitgleich oder überlagernd oder parallel zu einer Datenverarbeitung, ohne die ablaufende Datenverarbeitung zu behindern oder zu verfälschen.
**Root-CT** Höchste CT im CTTREE, besitzt für gewöhnlich aber nicht ausschließlich als einzige CT einen Anschluss an den Konfigurationsspeicher.
**SubConf** Teil einer Konfiguration bestehend aus mehreren KW.
**WCT** Kennzeichnet den Zeitpunkt zu dem eine Rekonfiguration zu erfolgen hat. Kann dabei optional durch Übertragung einer zusätzlichen Information eine aus mehreren möglichen Konfiguration auswählen. Für gewöhnlich verläuft WCT exakt synchron mit dem Beenden der aktuell laufenden und zur Rekonfiguration zu beendenden Datenverarbeitung. Wird WCT aus Implementierungsgründen später übertragen, wird WCS zur Synchronisierung der Datenverarbeitung verwendet.
**WCP** Fordert eine oder mehrere alternative nächste Konfiguration(en) bei der CT zum (Re)konfigurieren an.
**WCS** Stoppt die Datenverarbeitung bis zum Eintreffen von WCT. Muss nur verwendet werden, wenn implementierungsbedingt WCT nicht exakt den Zeitpunkt der erforderlichen Rekonfiguration anzeigt, sondern erst nach dem eigentlichen Ende der Datenverarbeitung der zu beendeten Konfiguration bei der jeweiligen PAE eintrifft.
**Zelle** konfigurierbares Element

### Referenzen

- PACT01: 4416881
- PACT02: 19781412.3
- PACT04: 19654842.2-53
- PACT05: 19654593.5-53
- PACT07: 19880128.9
- PACT08: 19880129.7
- PACT10: 19980312.9 & 19980309.9
- PACT13: PCT/DE00/01869
- PACT18: 10110530.4

## Patentansprüche

1. Anordnung zur Datenverarbeitung, bevorzugt Mikroprozessoranordnung zur Datenverarbeitung, insbesondere bevorzugt Mikroprozessorchip zur Datenverarbeitung,
mit
einer Vielzahl von Prozessorkernen, und
einem Cachesystem mit mehreren Leveln,
worin
ein dedizierter Cache jedem der Vielzahl von Prozessorkernen und/oder jedem einer Gruppe von Prozessorkernen bei einem ersten Cachelevel zugeordnet ist,
wobei der erste Cachelevel zumindest einen Cache umfasst, der zumindest eine Cache des ersten Cachelevels mit zumindest einem Cache auf einem höheren Cachelevel verbunden ist;
und
der zumindest eine Cache auf dem höheren Cachelevel mit
einem Speicher, bevorzugt einem Cache noch höheren Levels, verbunden ist.

2. Anordnung nach dem vorhergehenden Anspruch, worin der Cache höheren Levels, mit dem der erste Cachelevel verbunden ist, ein Zweiter-Level-Cache ist, der dazu angepasst ist, angeforderte Daten zu einem anfordernden Erste-Level-Cache zu senden, wenn der Zweite-Level-Cache die angeforderten Daten hält, und die angeforderten Daten von einem Speicher höheren Levels anzufordern, wenn der Zweite-Level-Cache die angeforderten Daten nicht hält.

3. Mikroprozessorchip nach einem der vorhergehenden Ansprüche, worin die Caches des ersten Cachelevels mit zumindest einem Cache auf einem zweiten Cachelevel verbunden sind, bevorzugt mehrere Level-Eins-Caches gemeinsam mit ein und denselben Zweite-Level-Caches verbunden sind, und der zumindest eine Cache des zweiten Cachelevels mit einem Speicher höheren Levels verbunden ist.

4. Anordnung nach einem der vorhergehenden Ansprüche, worin zumindest einer der Zweite-Level-Caches dazu angepasst ist, Daten, die von einem anfordernden Erste-Level-Cache angefordert sind, zu senden, sofern der Zweite-Level-Cache die angeforderten Daten hält, und die Daten von dem höheren Speicherniveau anzufordern, wenn der zumindest eine Zweite-Level-Cache die angeforderten Daten nicht hält.

5. Anordnung nach einem der vorhergehenden Ansprüche, mit einer Anordnung zum Kombinieren einer Vielzahl von
Prozessorkernen, um mindestens eine oder eine Vielzahl von Gruppen zu bilden,
einer Anordnung zur Zuordnung einer ersten Cacheeinheit mit einer Vielzahl von Caches zu einer ersten Gruppe,
und
einer Verbindung der ersten Cacheeinheit über eine
Baumstruktur mit einer Cacheeinheit eines höheren Levels mit Zugang zu einem Speicher, in welchem Daten gespeichert sind,
wobei zumindest einige der Caches der ersten Cacheeinheit dazu angepasst sind, auf eine Datenanforderung für angeforderte Daten von zumindest einem Prozessorkern zu reagieren,
wobei ein erster Datenblock mit den angeforderten Daten zu der ersten Cacheeinheit gesendet wird, wenn ein lokaler Speicher der höheren Level-Cacheeinheit den ersten Datenblock einschließlich der angeforderten Daten hält, und die Anforderung für die angeforderten Daten von der Cacheeinheit höheren Levels zu einer respektiven Cacheeinheit noch höheren Levels gesendet wird, wenn der lokale Speicher der Cacheeinheit höheren Levels den ersten Datenblock mit den angeforderten Daten nicht hält.

6. Verfahren zum Betrieb einer Datenverarbeitungsanordnung, insbesondere einer Mikroprozessoranordnung, insbesondere eines Mikroprozessorchips, insbesondere nach einem der vorhergehenden Ansprüche, mit
einer Vielzahl von Prozessorkernen und einem Cachesystem,
das mehrere Levels hat,
wobei das Verfahren umfasst, dass
eine Vielzahl von Prozessorkernen verknüpft wird,
um eine Vielzahl von Gruppen zu bilden,
eine erste Cacheeinheit einer ersten Gruppe zugeordnet
wird,
die erste Cacheeinheit über eine Baumstruktur mit einer
Cacheeinheit höheren Levels verbunden wird, die Zugang zu einem Speicher besitzt, in welchem Daten abgelegt sind,
die Daten verknüpft werden, um Datenblöcke zu bilden, zumindest einer der Datenblöcke als Ganzes gecached wird, eine Anforderung für angeforderte Daten von der ersten Cacheeinheit zu der Cacheeinheit höheren Levels gesendet wird,
ein erster Datenblock mit den angeforderten Daten zu der
ersten Cacheeinheit gesendet wird, wenn ein lokaler Speicher der Cacheeinheit höheren Levels die ersten Datenblöcke einschließlich der angeforderten Daten erhält,
und
die Anforderung für die angeforderten Daten aus der Cacheeinheit höheren Levels zu einer Cacheeinheit respektive noch höheren Levels gesendet wird, wenn der lokale Speicher der Cacheeinheit höheren Levels die Daten des ersten Datenblocks einschließlich der angeforderten Daten nicht hält.

7. Verfahren nach dem vorhergehenden Anspruch, worin die gespeicherten und zwischen den Caches übertragenen Daten Befehle sind.
